# EUROPEAN PATENT APPLICATION

(11) **EP 4 616 711 A2**
(43) Date of publication of application: **17.09.2025**
(21) Application number: 25193066.5
(22) Date of filing: 08.07.2022
(51) Int. Cl.: A01P 3/00

(54) **FUNGICIDAL USE**

(30) Priority: 08.07.2021 US 202163219703 P
(62) Divisional of application: 22747425.1
(71) Applicant: ADAMA MAKHTESHIM LTD., 8410001 Beer Sheva (IL)
(72) Inventor: CERNUSCHI, Matteo, 20062 Milan (IT)
(74) Representative: Modiano, Gabriella Diana

(57) **Abstract**

The present invention provides a method treating specified crop (A) or a locus thereof against fungal pathogen (I) infection comprising applying an amount of a phthalimide fungicide to the crop or locus so as to thereby treat the crop or locus against the fungal pathogen infection. The present invention also provides crop-safe methods and compositions for treating fungal pathogen infection in crops (A).

## Description

Throughout this application, various publications are cited. Disclosures of the documents and publications referred to herein are hereby incorporated in their entireties by reference into this application.

### Field of the Present Subject Matter

The present invention provides compositions comprising phthalimide fungicide for controlling disclosed diseases caused by disclosed fungal pathogens in disclosed crop plants as well as methods of use.

### Background of the Invention

Fungicides are compounds of natural or synthetic origin which act to protect plants against damage caused by fungi. In spite of the benefits derived from the use of fungicides in agriculture such as protection of crops and improved productivity, it is nowadays desirable to reduce the amount of fungicides used in the fields owing to the potential health risks associated with an intensive use of agrochemicals.

Inventors note previous unsuccessful reported attempts using other fungicides in the disclosed crops and diseases, wherein the term unsuccessful includes both those instances where adequate control or treatment was unattainable as well as the instances wherein, although the fungal disease had been addressed the crop plants were unacceptably harmed by the treatment or where the environmental impact was found unacceptable.

Another important issue associated with controlling fungal disease is increasing in fungus developing resistances. There is therefore a need to evaluate new method of treatment that provides a control over the disclosed fungal attacks on disclosed crops and the locus thereof and enables higher yields while preserving a high amount of nutrients in the crops.

### SUMMARY OF THE INVENTION

The present invention provides use of phthalimide fungicide for combating diseases caused by fungal pathogen (I) on crop (A).

Crop (A) is selected from the group consisting of sugar beet, olive, apple, citrus, cherry, banana, mango, papaya, pitaya, avocado, dragon fruit, guava, longan, litchi, durian, passion fruit, rambutan, mangosteen, cocoa, chili, onion, corn, sugarcane, sorghum, coffee, cotton, rice, pulses, chickpea, pea, broad bean, fava bean, oil seed rape (OSR), soybean, and any combination thereof.

Fungal pathogen (I) is selected from group consisting of Cercospora beticola, Cercospora sojina, Cercospora kikuchii. Ramularia beticola, Venturia oleagina, Colletotrichum gloeosporioides, Colletotrichum sp., Colletotrichum truncatum, Pseudocercospora musae, Mycosphaerella fijiensis, Cercospora zeae-maydis, Setosphaeria turcica, Cochliobolus heterostrophus, Cochliobolus carbonum, Ustilago maydis, Phialophora gregata, Gibberella zeae, Ustilago scitaminea, Helminthosporium sacchari, Puccinia sorghi, Hemileia vastatrix, Gibberella xylarioides, Septoria glycines, Phakopsora gossypii, Phakopsora pachyrhizi, Phlyctema vagabunda, Puccinia schedonnardi, Puccinia cacabata, Corynespora cassiicola, Ascochyta gossypiicola, Glomerella gossypii, Rhizoctonia solani, Pyricularia oryzae, Cochliobolus miyabeanus, Ascochyta rabiei, Ascochyta pisi, Ascochyta fabae, Cercospora zonata, Uromyces vicia-fabae, Peronospora viciae, Botrytis cinerea, Fusarium sp., Fusarium virguliforme, Sclerotinia sp., Sclerotinia sclerotiorum, Phytophthora sp., Venturia inaequalis, Mycosphaerella fijiensis and any combination thereof.

The present invention provides a method of treating a crop or locus against fungal pathogen infection comprising applying an amount of phthalimide fungicide for combating diseases caused by fungal pathogen on the crop, wherein the crop is crop (A) as defined herein and the fungal pathogen is fungal pathogen (I) as defined herein.

The present invention provides use of phthalimide fungicide for combating diseases caused by fungal pathogens on crops wherein the disease is selected from the group consisting of cercospora leaf spot, leaf spot of beet, Ramularia Leaf Spot, peacock spot of olive, olive anthracnose, leprosy of olive or leaf and shoot lesions of olive, apple scab, yellow sigatoka of banana, black sigatoka of banana, black leaf streak disease of banana, rust of cotton, blight of chickpea, blight of pea, blight of broad bean, ascochyta blight in peas lentils or fava beans, downy mildew of legumes, peas etc., sclerotinia stem rot or white mold of oilseed rape, Asian soybean rust, cotton rust of cotton, sudden death syndrome, frogeye leaf spot, black spot of apple, white mold, brown stem rot, brown spot of soybean, purple blotch of soybean, soybean anthracnose, target spot on soybean, and any combination thereof.

The present invention provides a method of treating crop (A) or a locus against fungal pathogen (I) infection comprising applying an amount of a phthalimide fungicide to the crop or locus so as to thereby treat the crop or locus against the fungal pathogen infection, wherein crop (A) is selected from the group consisting of sugar beet, olive, apple, citrus, cherry, banana, mango, papaya, pitaya, avocado, dragon fruit, guava, longan, litchi, durian, passion fruit, rambutan, mangosteen, cocoa, chili, onion, corn, sugarcane, sorghum, coffee, cotton, rice, pulses, chickpea, pea, broad bean, fava bean, oil seed rape (OSR), soybean, and any combination thereof, and fungal pathogen (I) is selected from the group consisting of Cercospora beticola, Cercospora sojina, Cercospora kikuchii. Ramularia beticola, Venturia oleagina, Colletotrichum gloeosporioides, Colletotrichum sp., Colletotrichum truncatum, Pseudocercospora musae, Mycosphaerella fijiensis, Cercospora zeae-maydis, Setosphaeria turcica, Cochliobolus heterostrophus, Cochliobolus carbonum, Ustilago maydis, Phialophora gregata, Gibberella zeae, Ustilago scitaminea, Helminthosporium sacchari, Puccinia sorghi, Hemileia vastatrix, Gibberella xylarioides, Septoria glycines, Phakopsora gossypii, Phakopsora pachyrhizi, Phlyctema vagabunda, Puccinia schedonnardi, Puccinia cacabata, Corynespora cassiicola, Ascochyta gossypiicola, Glomerella gossypii, Rhizoctonia solani, Pyricularia oryzae, Cochliobolus miyabeanus, Ascochyta rabiei, Ascochyta pisi, Ascochyta fabae, Cercospora zonata, Uromyces vicia-fabae, Peronospora viciae, Botrytis cinerea, Fusarium sp., Fusarium virguliforme, Sclerotinia sp., Sclerotinia sclerotiorum, Phytophthora sp., Venturia inaequalis, Mycosphaerella fijiensis and any combination thereof.

The present invention provides a method of treating a crop against fungal pathogen diseases without causing significant and/or measurable concomitant phytotoxic harm to the crop comprising applying an amount of phthalimide fungicide to the crop or a locus thereof, wherein the crop is crop (A) as defined herein and the fungal pathogen is fungal pathogen (I) as defined herein.

The present invention also provides use of solid particulate phthalimide fungicide for combating diseases caused by fungal pathogen on crop wherein the disease is selected from the group consisting of cercospora leaf spot, leaf spot of beet, Ramularia Leaf Spot, peacock spot of olive, olive anthracnose, leprosy of olive or leaf and shoot lesions of olive, apple scab, yellow sigatoka of banana, black sigatoka of banana, black leaf streak disease of banana, rust of cotton, blight of chickpea, blight of pea, blight of broad bean, ascochyta blight in peas lentils or fava beans, downy mildew of legumes, peas etc., sclerotinia stem rot or white mold of oilseed rape, Asian soybean rust, cotton rust of cotton, sudden death syndrome, frogeye leaf spot, black spot of apple, white mold, brown stem rot, brown spot of soybean, purple blotch of soybean, soybean anthracnose, target spot on soybean, and any combination thereof.

The present invention also provides a method of treating a crop or locus against fungal pathogen disease comprising applying an amount of solid particulate phthalimide fungicide to the crop or locus, wherein the disease is selected from the group consisting of cercospora leaf spot, leaf spot of beet, Ramularia Leaf Spot, peacock spot of olive, olive anthracnose, leprosy of olive or leaf and shoot lesions of olive, apple scab, yellow sigatoka of banana, black sigatoka of banana, black leaf streak disease of banana, rust of cotton, blight of chickpea, blight of pea, blight of broad bean, ascochyta blight in peas lentils or fava beans, downy mildew of legumes, peas etc., sclerotinia stem rot or white mold of oilseed rape, Asian soybean rust, cotton rust of cotton, sudden death syndrome, frogeye leaf spot, black spot of apple, white mold, brown stem rot, brown spot of soybean, purple blotch of soybean, soybean anthracnose, target spot on soybean, and any combination thereof.

In some embodiments, the solid particulate phthalimide fungicide is suspended in an aqueous carrier. In some embodiments, the phthalimide fungicide is folpet, captan, or a combination of both.

The present invention provides a composition comprising phthalimide fungicide for combating disease caused by fungal pathogen on crop, wherein the crop is crop (A) as defined herein and the fungal pathogen is fungal pathogen (I) as defined herein.

### BRIEF DESCRIPTION OF THE DRAWINGS

**Figure 1****.** Percentage efficacy of MCW 296 WG (folpet) towards *Venturia oleagina* (*Spilocea oleagina*) in olive when applied at different rates.
**Figure 2****.** Percentage efficacy of Merpan (captan) towards *Venturia oleagina* (*Spilocea oleagina*) in olive when applied at different rates.

### DETAILED DESCRIPTION OF THE INVENTION

### Definitions

Prior to setting forth the present subject matter in detail, it may be helpful to provide definitions of certain terms to be used herein. Unless defined otherwise, all technical and scientific terms used herein have the same meaning as is commonly understood by one of skill in the art to which this subject matter pertains.

It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Throughout the application, descriptions of various embodiments use the term "comprising"; however, it will be understood by one of skill in the art, that in some specific instances, an embodiment can alternatively be described using the language "consisting essentially of" or "consisting of."

As used herein, the term "a" or "an" includes the singular and the plural, unless specifically stated otherwise. Therefore, the terms "a," "an" or "at least one" can be used interchangeably in this application.

As use here in, the term "about" is inclusive of the stated value and means within an acceptable range of deviation for the particular value as determined by one of ordinary skill in the art, considering the measurement in question and the error associated with measurement of the particular quantity (*i.e.* the limitations of the measurement system). For example, "about" can mean within one or more standard deviations, or within ± 30%, 20%, 10%, 5% of the stated value. In this regard, use of the term "about" herein specifically includes ±10% from the indicated values in the range. In addition, the endpoints of all ranges directed to the same component or property herein are inclusive of the endpoints, are independently combinable, and include all intermediate points and ranges.

As used herein, the term "and/or" includes any and all combinations of one or more of the associated listed items. Expressions such as "at least one of," when preceding a list of elements, modify the entire list of elements and do not modify the individual elements of the list.

As used herein, the term "crop (A)" refers to sugar beet, olive, apple, citrus, cherry, banana, mango, papaya, pitaya, avocado, dragon fruit, guava, longan, litchi, durian, passion fruit, rambutan, mangosteen, cocoa, chili, onion, corn, sugarcane, sorghum, coffee, cotton, rice, pulses, chickpea, pea, broad bean, fava bean, oil seed rape (OSR), soybean, or any combination thereof. Preferred crop (A) are described herein below.

As used herein, the term "fungal pathogen (I)" refers to Cercospora beticola, Cercospora sojina, Cercospora kikuchii. Ramularia beticola, Venturia oleagina, Colletotrichum gloeosporioides, Colletotrichum sp., Colletotrichum truncatum, Pseudocercospora musae, Mycosphaerella fijiensis, Cercospora zeae-maydis, Setosphaeria turcica, Cochliobolus heterostrophus, Cochliobolus carbonum, Ustilago maydis, Phialophora gregata, Gibberella zeae, Ustilago scitaminea, Helminthosporium sacchari, Puccinia sorghi, Hemileia vastatrix, Gibberella xylarioides, Septoria glycines, Phakopsora gossypii, Phakopsora pachyrhizi, Phlyctema vagabunda, Puccinia schedonnardi, Puccinia cacabata, Corynespora cassiicola, Ascochyta gossypiicola, Glomerella gossypii, Rhizoctonia solani, Pyricularia oryzae, Cochliobolus miyabeanus, Ascochyta rabiei, Ascochyta pisi, Ascochyta fabae, Cercospora zonata, Uromyces vicia-fabae, Peronospora viciae, Botrytis cinerea, Fusarium sp., Fusarium virguliforme, Sclerotinia sp., Sclerotinia sclerotiorum, Phytophthora sp., Venturia inaequalis, Mycosphaerella fijiensis, or any combination thereof. Preferred fungal pathogen (I) are described herein below.

As used herein, the term "treating a crop or locus against fungal pathogen infection" includes, but is not limited to, protecting the crop or locus against fungal attack, preventing fungal infection of the crop or locus, controlling fungal disease infecting the crop or locus, and reducing fungal infection of the crop or locus.

As used herein, the term "treating a crop or soil against fungal pathogen infection" includes, but is not limited to, protecting the crop or soil against fungal attack, preventing fungal infection of the crop or soil, controlling fungal disease infecting the crop or soil, and reducing fungal infection of the crop or soil.

As used herein, the terms "control" or "controlling" or "treating" refers but is not limited to preventing fungal disease, protecting crops from fungal disease, delaying the onset of fungal disease, and combating or killing fungal disease. They also may include the curative and/or eradication action of compounds and compositions on underway fungal diseases. Controlling fungal disease infecting the crop, propagation material of the crop or locus of the crop, controlling a crop or soil disease caused by phytopathologic fungi (pathogen), controlling fungal attack on the crop or, propagation material of the crop or locus of the crop refers to curative application and/or protectant/preventive application and/or persistence application.

As used herein, the terms "greening" has its well-understood meaning in this field of art. The term is used to describe various beneficial effects. In general, the positive effects include the improvement where the leaves treated with phthalimide (e.g., folpet) are greener as compared with those treated with a different fungicide (e.g., mancozeb), and as compared with the untreated crop. This greening effect *inter alia,* allows for improved efficiency of photosynthesis that normally translates into better yield and generic better plant health, as well as the other benefits within the well understood term "greening" as further detailed in this disclosure. As noted in this disclosure, greening was a surprising effect *inter alia,* in both banana and apple crops treated by the methods of the invention.

The term "applying" or "application", as used herein, refers but is not limited to applying the compounds and compositions of the invention to the crop, to a site of infestation by fungi, to a potential site of infestation by the fungi, which may require protection from infestation, or the environment around the habitat or potential habitat of the fungi. It also refers to the activity of compounds and compositions on crops and fungal tissues with which they come into contact. The application may be by methods described in the present invention such as by spraying, dipping, etc.

As used herein, the term "protectant application" means an application of one or more fungicide for preventing fungal infection of the crop or locus, wherein the fungicidal combination, mixture or composition is applied before infection/disease occurs, before any disease symptoms are shown or when the disease pressure is low. Disease pressure may be assessed based on the conditions associated with disease development such as spore concentration and certain environmental conditions.

As used herein, the term "preventative treatment" or "preventative activity" means an application of one or more pesticide for controlling pest infection of the crop or locus, before an infection or before disease symptoms are shown and/or when the disease pressure is low. Disease pressure may be assessed based on the conditions associated with disease development such as spore concentration and certain environmental conditions. In some embodiments, the pest is a fungus.

As used herein the term "persistence treatment" or "persistence activity" means an application of one or more pesticide for controlling pest infection of the crop or locus over an extended period of time, before an infection or before fungal disease symptoms are shown and/or when the fungal disease pressure is low. Fungal disease pressure may be assessed based on the conditions associated with fungal disease development such as spore concentration and certain environmental conditions.

In particular, when the term "persistence treatment" or "persistence activity" is used in connection with a fungicide, the term means application of one or more fungicide for controlling fungal infection of the crop or locus over an extended period of inoculation, before an infection or before disease symptoms are shown and/or when the disease pressure is low. Disease pressure may be assessed based on the conditions associated with disease development such as spore concentration and certain environmental conditions.

As used herein, the term "more effective" includes, but is not limited to, increasing efficacy of fungal disease control, prolonging protection and reducing the amount of time needed to achieve a given level of fungal control, prolonging the duration of protection against fungal attack after application and extending the protection period against fungal attack and/or reducing the amount of time needed to achieve a level of fungal control.

As used herein, the term "effective" when used in connection with any use method or may be but is not limited to increase in controlling fungal disease, increase in preventing fungal disease, decrease time for effective controlling fungal disease, decrease the amount of the fungicide which is required for effective controlling fungal disease, extend the controlling effect of the fungicide in terms of type of crop and disease, prolong the time of controlling effect.

In particular, the term "effective" may refer to, increasing efficacy of fungal disease control, reducing the amount of time needed to achieve a given level of fungal control, extending the protection period against fungal attack and/or reducing the amount of time needed to achieve a level of fungal control.

As used herein, the term "agriculturally acceptable carrier" means carriers which are known and accepted in the art for the formation of compositions for agricultural or horticultural use.

As used herein, the term "adjuvant" is broadly defined as any substance that itself is not an active ingredient but which enhances or is intended to enhance the effectiveness of the pesticide with which it is used. Adjuvants may be understood to include, but are not limited to, spreading agents, penetrants, compatibility agents, and drift retardants.

As used herein, the term "agriculturally acceptable additives" is defined as any substance that itself is not an active ingredient but is added to the composition such as thickening agent, sticking agents, surfactants, anti-oxidation agent, anti-foaming agents and thickeners.

As used herein the term "crop" includes reference to agricultural crops including field crops (soybean, maize, wheat, rice, etc.), vegetable crops (potatoes, cabbages, etc.), fruits (peach, etc.), semi-perennial crops (sugarcane) and perennial crops (coffee and guava).

As used herein the term "crop" includes reference to whole crops, crop organs (e.g. leaves, stems, twigs, roots, trunks, limbs, shoots, fruits etc.), crop cells, seedling or crop seeds. This term also encompasses crops such as fruits.

As used herein, the term "crops" refers to any and all physical parts of a crop, including but not limited to seeds, seedlings, saplings, roots, tubers, stems, stalks, foliage, and fruits.

The term "crop" may also include the propagation material thereof, which may include all the generative parts of the crop such as seeds and vegetative crop material such as cuttings and tubers, which can be used for the multiplication of the crop. It may also include spores, corms, bulbs, rhizomes, sprouts, basal shoots, stolons, and buds and other parts of crops, including seedlings and young crops, which are to be transplanted after germination, rooting or after emergence from soil or any other kind of substrate, be it artificial or natural.

As used herein the term "propagation material" is to be understood to denote all the generative parts of the crop such as seeds and spores, vegetative structures such as bulbs, corms, tubers, rhizomes, roots stems, basal shoots, stolons, and buds.

As used herein, the term "cultivated crops" includes crops which have been modified by breeding, mutagenesis or genetic engineering. Genetically modified crops are crops, which their genetic material has been modified by the use of recombinant DNA techniques. Typically, one or more genes have been integrated into the genetic material of such a crop in order to improve certain properties of the crop.

The term "crop health" comprises various sorts of improvements of crops that are not connected to the control of pests. For example, advantageous properties that may be mentioned are improved crop characteristics including: greening, emergence, crop yields, protein content, oil content, starch content, more developed root system (improved root growth), improved stress tolerance (e.g. against drought, heat, salt, UV, water, cold), reduced ethylene (reduced production and/or inhibition of reception), increase in crop height, bigger leaf blade, less dead basal leaves, stronger tillers, greener leaf color, pigment content, photosynthetic activity, less input needed (such as fertilizers or water), less seeds needed, more productive tillers, earlier flowering, early grain maturity, less crop verse (lodging), shortening of stalks, increased diameter of stalks, increased shoot growth, enhanced crop vigor, increased crop stand and early and better germination; or any other advantages familiar to a person skilled in the art. Several of the above improvements have overlapping definitions and are of course not to be viewed as exclusive or exhaustive.

As used herein, the term "locus" includes not only areas where fungal infection/disease may already be shown, but also areas where fungal infection/disease have yet to show and also area under cultivation. Locus includes but is not limited to soil and other crop growth medium, and clearly includes structures.

As used herein, the term "locus" includes a habitat, breeding ground, crop, propagation material, soil, area, material or environment in which a fungal disease is growing or may grow.

As used herein the term "ha" refers to hectare.

As used herein, the term "pulses" comprises various annual leguminous crops yielding from one to 12 grains or seeds of variable size, shape and colour within a pod. As defined by The United Nations Food and Agriculture Organization (FAO), the term "pulses" is limited to crops harvested solely for dry grain. They include bambara beans, dry beans, broad beans, dry horse beans, chickpeas, dry cow peas, lentils, lupins, dry peas, pigeon peas, pulses n.e.s. (not elsewhere specified - minor pulses that don't fall into one of the other categories), fava beans and vetches

It will be understood that when an element is referred to as being "on" another element, it can be directly in contact with the other element or intervening elements may be present therebetween. In contrast, when an element is referred to as being "directly on" another element, there are no intervening elements present.

The phrases "without significant phytotoxic harm", "without measurable phytotoxic harm" and "without measurable concomitant phytotoxic harm" are alternative ways to express that application of the inventive method was found to have no adverse crop safety findings. A composition of phthalimide fungicide used in such a method having this characteristic is sometimes referred to as a crop-safe composition in that they avoid concomitant harmful and/or phytotoxic effects to the crop when the phthalimide fungicide is applied.

It will be understood that, although the terms first, second, third, etc. may be used herein to describe various elements, components, regions, layers, and/or sections, these elements, components, regions, layers, and/or sections should not be limited by these terms. These terms are only used to distinguish one element, component, region, layer, or section from another element, component, region, layer, or section. Thus, a first element, component, region, layer, or section discussed below could be termed a second element, component, region, layer, or section without departing from the teachings of the present embodiments.

For the purposes of the following detailed description, it is to be understood that the invention may assume various alternative variations and step sequences, except where expressly specified to the contrary.

### Methods

The present invention provides a method of treating crop (A) or a locus against fungal pathogen (I) infection comprising applying an amount of a phthalimide fungicide to the crop or locus so as to thereby treat the crop or locus against the fungal pathogen infection, wherein crop (A) is selected from the group consisting of sugar beet, olive, apple, citrus, cherry, banana, mango, papaya, pitaya, avocado, dragon fruit, guava, longan, litchi, durian, passion fruit, rambutan, mangosteen, cocoa, chili, onion, corn, sugarcane, sorghum, coffee, cotton, rice, pulses, chickpea, pea, broad bean, fava bean, oil seed rape (OSR), soybean, and any combination thereof, and fungal pathogen (I) is selected from the group consisting of Cercospora beticola, Cercospora sojina, Cercospora kikuchii. Ramularia beticola, Venturia oleagina, Colletotrichum gloeosporioides, Colletotrichum sp., Colletotrichum truncatum, Pseudocercospora musae, Mycosphaerella fijiensis, Cercospora zeae-maydis, Setosphaeria turcica, Cochliobolus heterostrophus, Cochliobolus carbonum, Ustilago maydis, Phialophora gregata, Gibberella zeae, Ustilago scitaminea, Helminthosporium sacchari, Puccinia sorghi, Hemileia vastatrix, Gibberella xylarioides, Septoria glycines, Phakopsora gossypii, Phakopsora pachyrhizi, Phlyctema vagabunda, Puccinia schedonnardi, Puccinia cacabata, Corynespora cassiicola, Ascochyta gossypiicola, Glomerella gossypii, Rhizoctonia solani, Pyricularia oryzae, Cochliobolus miyabeanus, Ascochyta rabiei, Ascochyta pisi, Ascochyta fabae, Cercospora zonata, Uromyces vicia-fabae, Peronospora viciae, Botrytis cinerea, Fusarium sp., Fusarium virguliforme, Sclerotinia sp., Sclerotinia sclerotiorum, Phytophthora sp., Venturia inaequalis, Mycosphaerella fijiensis and any combination thereof.

In some embodiments, the locus is the crop seed. In some embodiments, the locus is a locus of the crop.

In some embodiments, the phthalimide fungicide is applied in solid particulate form to the crop or locus. In some embodiments, the phthalimide fungicide is applied in solid particulate form suspended in an aqueous carrier to the crop or locus.

In some embodiments, the method is referred to as crop-safe, although in some embodiment it is appropriate to refer to the composition used in the method as "crop-safe", without departing from the intentions of the inventors.

In some embodiments, the method is effective for treating the crop or locus against the fungal pathogen infection without any significant and/or measurable concomitant phytotoxic harm to the crop.

The present invention provides a method of treating a crop or locus against fungal pathogen infection comprising applying an amount of phthalimide fungicide for combating diseases caused by fungal pathogen on crops, wherein the crop is crop (A) as defined herein and the fungal pathogen is fungal pathogen (I) as defined herein.

The present invention provides the use of phthalimide fungicide for combating diseases caused by fungal pathogen on crops, and methods of treating a crop or locus against fungal pathogen diseases, wherein, the disease is selected from the group of, cercospora leaf spot, leaf spot of beet, Ramularia Leaf Spot, peacock spot of olive, olive anthracnose, leprosy of olive or leaf and shoot lesions of olive, apple scab, yellow sigatoka of banana, black sigatoka of banana, black leaf streak disease of banana, rust of cotton, blight of chickpea, blight of pea, blight of broad bean, ascochyta blight in peas lentils or fava beans, downy mildew of legumes, peas etc., sclerotinia stem rot or white mold of oilseed rape, Asian soybean rust, cotton rust of cotton, sudden death syndrome, frogeye leaf spot, black spot of apple, white mold, brown stem rot, brown spot of soybean, purple blotch of soybean, soybean anthracnose, target spot on soybean, and any combination thereof and the methods comprise applying an amount of phthalimide fungicide to crop or locus of crops.

The present invention also provides the use of solid particulate phthalimide fungicide for safely combating diseases caused by fungal pathogen on crops, and methods of treating a crop or locus against fungal pathogen diseases, wherein, the disease is selected from the group of, cercospora leaf spot, leaf spot of beet, Ramularia Leaf Spot, peacock spot of olive, olive anthracnose, leprosy of olive or leaf and shoot lesions of olive, apple scab, yellow sigatoka of banana, black sigatoka of banana, black leaf streak disease of banana, rust of cotton, blight of chickpea, blight of pea, blight of broad bean, ascochyta blight in peas lentils or fava beans, downy mildew of legumes, peas etc., sclerotinia stem rot or white mold of oilseed rape, Asian soybean rust, cotton rust of cotton, sudden death syndrome, frogeye leaf spot, black spot of apple, white mold, brown stem rot, brown spot of soybean, purple blotch of soybean, soybean anthracnose, target spot on soybean, and any combination thereof and the methods comprise applying an amount of solid particulate phthalimide fungicide to crop or locus of crops without inducing significant or measurable phytotoxic harm to the crop and/or without adverse crop safety findings. In some embodiments the solid particulate phthalimide fungicide is suspended in an aqueous carrier.

The present invention provides a method of treating a crop or locus against fungal pathogen infection comprising applying an amount of a phthalimide fungicide to the crop or locus so as to thereby treat the crop or locus against fungal infection.

The present invention provides a method of safely treating a crop or locus against fungal pathogen infection comprising applying an amount of a solid particulate phthalimide fungicide to the crop or locus so as to thereby treat the crop or locus against fungal infection without significant or measurable concomitant phytotoxic harm to the crop.

The present invention provides a method treating a sugar beet crop against fungal pathogen infection comprising applying an amount of phthalimide fungicide to the crop or locus so as to thereby treat the crop or locus against fungal infection.

The present invention provides a method for treating an olive crop against fungal pathogen infection comprising applying an amount of phthalimide fungicide to the crop or locus so as to thereby treat the crop or locus against fungal infection.

The present invention provides a method treating an apple crop against fungal pathogen infection comprising applying an amount of phthalimide fungicide to the crop or locus so as to thereby treat the crop or locus against fungal infection.

The present invention provides a method treating a citrus crop against fungal pathogen infection comprising applying an amount of phthalimide fungicide to the crop or locus so as to thereby treat the crop or locus against fungal infection.

The present invention provides a method treating a cherry crop against fungal pathogen infection comprising applying an amount of phthalimide fungicide to the crop or locus so as to thereby treat the crop or locus against fungal infection.

The present invention provides a method treating a banana crop against fungal pathogen infection comprising applying an amount of phthalimide fungicide to the crop or locus so as to thereby treat the crop or locus against fungal infection. In some embodiments, the method results in an unexpected greening effect in banana crop.

In some embodiments, the method is effective for increasing the number of leaves of the banana crop compared to a banana crop affected by the fungal pathogen infection which has not been treated with fungicide(s). In some embodiments, the method is effective for increasing the number of leaves of the banana crop compared to a banana crop affected by the fungal pathogen infection which has been treated with fungicide(s) other than a phthalimide fungicide. In some embodiments, the method is effective for increasing the number of leaves of the banana crop compared to a banana crop affected by the fungal pathogen infection which has been treated with fungicide(s) other than folpet. **In** some embodiments, the method is effective for increasing the number of leaves of the banana crop compared to a banana crop affected by fungal pathogen infection which has been treated with other fungicides exemplified by a standard treatment. In some embodiments, the method is effective for increasing the number of leaves of the banana crop compared to a banana crop affected by fungal pathogen infection which has been treated with mancozeb.

In some embodiments, the method is effective for improving the greenness of leaves of the banana crop compared to a banana crop affected by the fungal pathogen infection which has not been treated with fungicide(s). In some embodiments, the method is effective for improving the greenness of leaves of the banana crop compared to a banana crop affected by the fungal pathogen infection which has been treated with fungicide(s) other than a phthalimide fungicide. In some embodiments, the method is effective for improving the greenness of leaves of the banana crop compared to a banana crop affected by the fungal pathogen infection which has been treated with fungicide(s) other than folpet. In some embodiments, the method is effective for improving the greenness of leaves of the banana crop compared to a banana crop affected by the fungal pathogen infection which has been treated with other fungicides exemplified by a standard treatment. In some embodiments, the method is effective for improving the greenness of leaves of the banana crop compared to a banana crop affected by the fungal pathogen infection which has been treated with mancozeb.

In some embodiments, the method is effective for improving efficiency of photosynthesis of the banana crop compared to a banana crop affected by the fungal pathogen infection which has not been treated with fungicide(s). In some embodiments, the method is effective for improving efficiency of photosynthesis of the banana crop compared to a banana crop affected by the fungal pathogen infection which has been treated with fungicide(s) other than a phthalimide fungicide. In some embodiments, the method is effective for improving efficiency of photosynthesis of the banana crop compared to a banana crop affected by the fungal pathogen infection which has been treated with fungicide(s) other than folpet. In some embodiments, the method is effective for improving efficiency of photosynthesis of the banana crop compared to a banana crop affected by the fungal pathogen infection which has been treated with other fungicides exemplified by a standard treatment. In some embodiments, the method is effective for improving efficiency of photosynthesis of the banana crop compared to a banana crop affected by the fungal pathogen infection which has been treated with mancozeb.

In some embodiments, the method is effective for improving health of the banana crop compared to a banana crop affected by the fungal pathogen infection which has not been treated with fungicide(s). In some embodiments, the method is effective for improving health of the banana crop compared to a banana crop affected by the fungal pathogen infection which has been treated with fungicide(s) other than a phthalimide fungicide. In some embodiments, the method is effective for improving health of the banana crop compared to a banana crop affected by the fungal pathogen infection which has been treated with fungicide(s) other than folpet. In some embodiments, the method is effective for improving health of the banana crop compared to a banana crop affected by the fungal pathogen infection which has been treated with other fungicides exemplified by a standard treatment. In some embodiments, the method is effective for improving health of the banana crop compared to a banana crop affected by the fungal pathogen infection which has been treated with mancozeb.

In some embodiments, the method is effective for improving yield of the banana crop compared to a banana crop affected by the fungal pathogen infection which has not been treated with fungicide(s). In some embodiments, the method is effective for improving yield of the banana crop compared to a banana crop affected by the fungal pathogen infection which has been treated with fungicide(s) other than a phthalimide fungicide. In some embodiments, the method is effective for improving yield of the apple or banana crop compared to an apple or banana crop affected by the fungal pathogen infection which has been treated with fungicide(s) other than folpet. In some embodiments, the method is effective for improving yield of the banana crop compared to a banana crop affected by the fungal pathogen infection which has been treated with other fungicides exemplified by a standard treatment. In some embodiments, the method is effective for improving yield of the banana crop compared to a banana crop affected by the fungal pathogen infection which has been treated with mancozeb.

The present invention provides a method of increasing the number of leaves of a banana crop affected by the fungal pathogen infection comprising applying an amount of phthalimide fungicide to the crop so as to thereby increase the number of leaves of the crop compared to a banana crop affected by the fungal pathogen infection which has not been treated with fungicide(s). The present invention provides a method of increasing the number of leaves of a banana crop affected by the fungal pathogen infection comprising applying an amount of phthalimide fungicide to the crop so as to thereby increase the number of leaves of the crop compared to a banana crop affected by the fungal pathogen infection which has been treated with fungicide(s) other than a phthalimide fungicide. The present invention provides a method of increasing the number of leaves of a banana crop affected by the fungal pathogen infection comprising applying an amount of phthalimide fungicide to the crop so as to thereby increase the number of leaves of the crop compared to a banana crop affected by the fungal pathogen infection which has been treated with fungicide(s) other than folpet. The present invention provides a method of increasing the number of leaves of a banana crop affected by the fungal pathogen infection comprising applying an amount of phthalimide fungicide to the crop so as to thereby increase the number of leaves of the crop compared to a banana crop affected by the fungal pathogen infection which has been treated with other fungicides exemplified by a standard treatment. The present invention provides a method of increasing the number of leaves of a banana crop affected by the fungal pathogen infection comprising applying an amount of phthalimide fungicide to the crop so as to thereby increase the number of leaves of the crop compared to a banana crop affected by the fungal pathogen infection which has been treated with mancozeb.

The present invention provides a method of improving greenness of leaves of a banana crop affected by the fungal pathogen infection comprising applying an amount of phthalimide fungicide to the crop so as to thereby improve the greenness of leaves of the crop compared to a banana crop affected by the fungal pathogen infection which has not been treated with fungicide(s). The present invention provides a method of improving greenness of leaves of a banana crop affected by the fungal pathogen infection comprising applying an amount of phthalimide fungicide to the crop so as to thereby improve the greenness of leaves of the crop compared to a banana crop affected by the fungal pathogen infection which has been treated with fungicide(s) other than a phthalimide fungicide. The present invention provides a method of improving greenness of leaves of a banana crop affected by fungal pathogen infection comprising applying an amount of phthalimide fungicide to the crop so as to thereby improve the greenness of leaves of the crop compared to a banana crop affected by fungal pathogen infection which has been treated with fungicide(s) other than folpet. The present invention provides a method of improving greenness of leaves of a banana crop affected by fungal pathogen infection comprising applying an amount of phthalimide fungicide to the crop so as to thereby improve the greenness of leaves of the crop compared to a banana crop affected by fungal pathogen infection which has been treated with other fungicides exemplified by a standard treatment. The present invention provides a method of improving greenness of leaves of a banana crop affected by fungal pathogen infection comprising applying an amount of phthalimide fungicide to the crop so as to thereby improve the greenness of leaves of the crop compared to a banana crop affected by fungal pathogen infection which has been treated with mancozeb.

The present invention provides a method of improving efficiency of photosynthesis of a banana crop affected by fungal pathogen infection comprising applying an amount of phthalimide fungicide to the crop so as to thereby improve efficiency of photosynthesis of the crop compared to a banana crop affected by fungal pathogen infection which has not been treated with fungicide(s). The present invention provides a method of improving efficiency of photosynthesis of a banana crop affected by fungal pathogen infection comprising applying an amount of phthalimide fungicide to the crop so as to thereby improve efficiency of photosynthesis of the crop compared to a banana crop affected by fungal pathogen infection which has been treated with fungicide(s) other than a phthalimide fungicide. The present invention provides a method of improving efficiency of photosynthesis of a banana crop affected by fungal pathogen infection comprising applying an amount of phthalimide fungicide to the crop so as to thereby improve efficiency of photosynthesis of the crop compared to a banana crop affected by fungal pathogen infection which has been treated with fungicide(s) other than folpet. The present invention provides a method of improving efficiency of photosynthesis of a banana crop affected by fungal pathogen infection comprising applying an amount of phthalimide fungicide to the crop so as to thereby improve efficiency of photosynthesis of the crop compared to a banana crop affected by fungal pathogen infection which has been treated with other fungicides exemplified by a standard treatment. The present invention provides a method of improving efficiency of photosynthesis of a banana crop affected by fungal pathogen infection comprising applying an amount of phthalimide fungicide to the crop so as to thereby improve efficiency of photosynthesis of the crop compared to a banana crop affected by fungal pathogen infection which has been treated with mancozeb.

The present invention provides a method of improving health of a banana crop affected by fungal pathogen infection comprising applying an amount of phthalimide fungicide to the crop so as to thereby improve the health of the crop compared to a banana crop affected by fungal pathogen infection which has not been treated with fungicide(s). The present invention provides a method of improving health of a banana crop affected by fungal pathogen infection comprising applying an amount of phthalimide fungicide to the crop so as to thereby improve the health of the crop compared to a banana crop affected by fungal pathogen infection which has been treated with fungicide(s) other than a phthalimide fungicide. The present invention provides a method of improving health of a banana crop affected by fungal pathogen infection comprising applying an amount of phthalimide fungicide to the crop so as to thereby improve the health of the crop compared to a banana crop affected by fungal pathogen infection which has been treated with fungicide(s) other than folpet. The present invention provides a method of improving health of a banana crop affected by fungal pathogen infection comprising applying an amount of phthalimide fungicide to the crop so as to thereby improve the health of the crop compared to a banana crop affected by fungal pathogen infection which has been treated with other fungicides exemplified by a standard treatment. The present invention provides a method of improving health of a banana crop affected by fungal pathogen infection comprising applying an amount of phthalimide fungicide to the crop so as to thereby improve the health of the crop compared to a banana crop affected by fungal pathogen infection which has been treated with mancozeb.

The present invention provides a method of improving yield of a banana crop affected by fungal pathogen infection comprising applying an amount of phthalimide fungicide to the crop so as to thereby improve the yield of the crop compared to a banana crop affected by fungal pathogen infection which has not been treated with fungicide(s). The present invention provides a method of improving yield of a banana crop affected by fungal pathogen infection comprising applying an amount of phthalimide fungicide to the crop so as to thereby improve the yield of the crop compared to a banana crop affected by fungal pathogen infection which has been treated with fungicide(s) other than a phthalimide fungicide. The present invention provides a method of improving yield of a banana crop affected by fungal pathogen infection comprising applying an amount of phthalimide fungicide to the crop so as to thereby improve the yield of the crop compared to a banana crop affected by fungal pathogen infection which has been treated with fungicide(s) other than folpet. The present invention provides a method of improving yield of a banana crop affected by fungal pathogen infection comprising applying an amount of phthalimide fungicide to the crop so as to thereby improve the yield of the crop compared to a banana crop affected by the fungal pathogen infection which has been treated with other fungicides exemplified by a standard treatment. The present invention provides a method of improving yield of a banana crop affected by fungal pathogen infection comprising applying an amount of phthalimide fungicide to the crop so as to thereby improve the yield of the crop compared to a banana crop affected by the fungal pathogen infection which has been treated with mancozeb.

In some embodiments, the method comprises treating the banana crop with folpet.

In some embodiments, the standard treatment is mancozeb.

The present invention provides a method treating an apple crop against fungal pathogen infection comprising applying an amount of phthalimide fungicide to the crop or locus so as to thereby treat the crop or locus against fungal infection.

In some embodiments, the method results in an unexpected greening effect in apple crop.

In some embodiments, the method is effective for increasing the number of leaves of the apple crop compared to an apple crop affected by the fungal pathogen infection which has not been treated with fungicide(s). In some embodiments, the method is effective for increasing the number of leaves of the apple crop compared to an apple crop affected by the fungal pathogen infection which has been treated with fungicide(s) other than a phthalimide fungicide. In some embodiments, the method is effective for increasing the number of leaves of the apple crop compared to an apple crop affected by the fungal pathogen infection which has been treated with fungicide(s) other than folpet. In some embodiments, the method is effective for increasing the number of leaves of the apple crop compared to an apple crop affected by fungal pathogen infection which has been treated with other fungicides exemplified by a standard treatment. In some embodiments, the method is effective for increasing the number of leaves of the apple crop compared to an apple crop affected by fungal pathogen infection which has been treated with mancozeb.

In some embodiments, the method is effective for improving the greenness of leaves of the apple crop compared to an apple crop affected by the fungal pathogen infection which has not been treated with fungicide(s). In some embodiments, the method is effective for improving the greenness of leaves of the apple crop compared to an apple crop affected by the fungal pathogen infection which has been treated with fungicide(s) other than a phthalimide fungicide. In some embodiments, the method is effective for improving the greenness of leaves of the apple crop compared to an apple crop affected by the fungal pathogen infection which has been treated with fungicide(s) other than folpet. In some embodiments, the method is effective for improving the greenness of leaves of the apple crop compared to an apple crop affected by the fungal pathogen infection which has been treated with other fungicides exemplified by a standard treatment. In some embodiments, the method is effective for improving the greenness of leaves of the apple crop compared to an apple crop affected by the fungal pathogen infection which has been treated with mancozeb.

In some embodiments, the method is effective for improving efficiency of photosynthesis of the apple crop compared to an apple crop affected by the fungal pathogen infection which has not been treated with fungicide(s). In some embodiments, the method is effective for improving efficiency of photosynthesis of the apple crop compared to an apple crop affected by the fungal pathogen infection which has been treated with fungicide(s) other than a phthalimide fungicide. In some embodiments, the method is effective for improving efficiency of photosynthesis of the apple crop compared to an apple crop affected by the fungal pathogen infection which has been treated with fungicide(s) other than folpet. In some embodiments, the method is effective for improving efficiency of photosynthesis of the apple crop compared to an apple crop affected by the fungal pathogen infection which has been treated with other fungicides exemplified by a standard treatment. In some embodiments, the method is effective for improving efficiency of photosynthesis of the apple crop compared to an apple crop affected by the fungal pathogen infection which has been treated with mancozeb.

In some embodiments, the method is effective for improving health of the apple crop compared to an apple crop affected by the fungal pathogen infection which has not been treated with fungicide(s). In some embodiments, the method is effective for improving health of the apple crop compared to an apple crop affected by the fungal pathogen infection which has been treated with fungicide(s) other than a phthalimide fungicide. In some embodiments, the method is effective for improving health of the apple crop compared to an apple crop affected by the fungal pathogen infection which has been treated with fungicide(s) other than folpet. In some embodiments, the method is effective for improving health of the apple crop compared to an apple crop affected by the fungal pathogen infection which has been treated with other fungicides exemplified by a standard treatment. In some embodiments, the method is effective for improving health of the apple crop compared to an apple crop affected by the fungal pathogen infection which has been treated with mancozeb.

In some embodiments, the method is effective for improving yield of the apple crop compared to an apple crop affected by the fungal pathogen infection which has not been treated with fungicide(s). In some embodiments, the method is effective for improving yield of the apple crop compared to an apple crop affected by the fungal pathogen infection which has been treated with fungicide(s) other than a phthalimide fungicide. In some embodiments, the method is effective for improving yield of the apple or apple crop compared to an apple or apple crop affected by the fungal pathogen infection which has been treated with fungicide(s) other than folpet. In some embodiments, the method is effective for improving yield of the apple crop compared to an apple crop affected by the fungal pathogen infection which has been treated with other fungicides exemplified by a standard treatment. In some embodiments, the method is effective for improving yield of the apple crop compared to an apple crop affected by the fungal pathogen infection which has been treated with mancozeb.

The present invention provides a method of increasing the number of leaves of an apple crop affected by the fungal pathogen infection comprising applying an amount of phthalimide fungicide to the crop so as to thereby increase the number of leaves of the crop compared to an apple crop affected by the fungal pathogen infection which has not been treated with fungicide(s). The present invention provides a method of increasing the number of leaves of an apple crop affected by the fungal pathogen infection comprising applying an amount of phthalimide fungicide to the crop so as to thereby increase the number of leaves of the crop compared to an apple crop affected by the fungal pathogen infection which has been treated with fungicide(s) other than a phthalimide fungicide. The present invention provides a method of increasing the number of leaves of an apple crop affected by the fungal pathogen infection comprising applying an amount of phthalimide fungicide to the crop so as to thereby increase the number of leaves of the crop compared to an apple crop affected by the fungal pathogen infection which has been treated with fungicide(s) other than folpet. The present invention provides a method of increasing the number of leaves of an apple crop affected by the fungal pathogen infection comprising applying an amount of phthalimide fungicide to the crop so as to thereby increase the number of leaves of the crop compared to an apple crop affected by the fungal pathogen infection which has been treated with other fungicides exemplified by a standard treatment. The present invention provides a method of increasing the number of leaves of an apple crop affected by the fungal pathogen infection comprising applying an amount of phthalimide fungicide to the crop so as to thereby increase the number of leaves of the crop compared to an apple crop affected by the fungal pathogen infection which has been treated with mancozeb.

The present invention provides a method of improving greenness of leaves of an apple crop affected by the fungal pathogen infection comprising applying an amount of phthalimide fungicide to the crop so as to thereby improve the greenness of leaves of the crop compared to an apple crop affected by the fungal pathogen infection which has not been treated with fungicide(s). The present invention provides a method of improving greenness of leaves of an apple crop affected by the fungal pathogen infection comprising applying an amount of phthalimide fungicide to the crop so as to thereby improve the greenness of leaves of the crop compared to an apple crop affected by the fungal pathogen infection which has been treated with fungicide(s) other than a phthalimide fungicide. The present invention provides a method of improving greenness of leaves of an apple crop affected by fungal pathogen infection comprising applying an amount of phthalimide fungicide to the crop so as to thereby improve the greenness of leaves of the crop compared to an apple crop affected by fungal pathogen infection which has been treated with fungicide(s) other than folpet. The present invention provides a method of improving greenness of leaves of an apple crop affected by fungal pathogen infection comprising applying an amount of phthalimide fungicide to the crop so as to thereby improve the greenness of leaves of the crop compared to an apple crop affected by fungal pathogen infection which has been treated with other fungicides exemplified by a standard treatment. The present invention provides a method of improving greenness of leaves of an apple crop affected by fungal pathogen infection comprising applying an amount of phthalimide fungicide to the crop so as to thereby improve the greenness of leaves of the crop compared to an apple crop affected by fungal pathogen infection which has been treated with mancozeb.

The present invention provides a method of improving efficiency of photosynthesis of an apple crop affected by fungal pathogen infection comprising applying an amount of phthalimide fungicide to the crop so as to thereby improve efficiency of photosynthesis of the crop compared to an apple crop affected by fungal pathogen infection which has not been treated with fungicide(s). The present invention provides a method of improving efficiency of photosynthesis of an apple crop affected by fungal pathogen infection comprising applying an amount of phthalimide fungicide to the crop so as to thereby improve efficiency of photosynthesis of the crop compared to an apple crop affected by fungal pathogen infection which has been treated with fungicide(s) other than a phthalimide fungicide. The present invention provides a method of improving efficiency of photosynthesis of an apple crop affected by fungal pathogen infection comprising applying an amount of phthalimide fungicide to the crop so as to thereby improve efficiency of photosynthesis of the crop compared to an apple crop affected by fungal pathogen infection which has been treated with fungicide(s) other than folpet. The present invention provides a method of improving efficiency of photosynthesis of an apple crop affected by fungal pathogen infection comprising applying an amount of phthalimide fungicide to the crop so as to thereby improve efficiency of photosynthesis of the crop compared to an apple crop affected by fungal pathogen infection which has been treated with other fungicides exemplified by a standard treatment. The present invention provides a method of improving efficiency of photosynthesis of an apple crop affected by fungal pathogen infection comprising applying an amount of phthalimide fungicide to the crop so as to thereby improve efficiency of photosynthesis of the crop compared to an apple crop affected by fungal pathogen infection which has been treated with mancozeb.

The present invention provides a method of improving health of an apple crop affected by fungal pathogen infection comprising applying an amount of phthalimide fungicide to the crop so as to thereby improve the health of the crop compared to an apple crop affected by fungal pathogen infection which has not been treated with fungicide(s). The present invention provides a method of improving health of an apple crop affected by fungal pathogen infection comprising applying an amount of phthalimide fungicide to the crop so as to thereby improve the health of the crop compared to an apple crop affected by fungal pathogen infection which has been treated with fungicide(s) other than a phthalimide fungicide. The present invention provides a method of improving health of an apple crop affected by fungal pathogen infection comprising applying an amount of phthalimide fungicide to the crop so as to thereby improve the health of the crop compared to an apple crop affected by fungal pathogen infection which has been treated with fungicide(s) other than folpet. The present invention provides a method of improving health of an apple crop affected by fungal pathogen infection comprising applying an amount of phthalimide fungicide to the crop so as to thereby improve the health of the crop compared to an apple crop affected by fungal pathogen infection which has been treated with other fungicides exemplified by a standard treatment. The present invention provides a method of improving health of an apple crop affected by fungal pathogen infection comprising applying an amount of phthalimide fungicide to the crop so as to thereby improve the health of the crop compared to an apple crop affected by fungal pathogen infection which has been treated with mancozeb.

The present invention provides a method of improving yield of an apple crop affected by fungal pathogen infection comprising applying an amount of phthalimide fungicide to the crop so as to thereby improve the yield of the crop compared to an apple crop affected by fungal pathogen infection which has not been treated with fungicide(s). The present invention provides a method of improving yield of an apple crop affected by fungal pathogen infection comprising applying an amount of phthalimide fungicide to the crop so as to thereby improve the yield of the crop compared to an apple crop affected by fungal pathogen infection which has been treated with fungicide(s) other than a phthalimide fungicide. The present invention provides a method of improving yield of an apple crop affected by fungal pathogen infection comprising applying an amount of phthalimide fungicide to the crop so as to thereby improve the yield of the crop compared to an apple crop affected by fungal pathogen infection which has been treated with fungicide(s) other than folpet. The present invention provides a method of improving yield of an apple crop affected by fungal pathogen infection comprising applying an amount of phthalimide fungicide to the crop so as to thereby improve the yield of the crop compared to an apple crop affected by the fungal pathogen infection which has been treated with other fungicides exemplified by a standard treatment. The present invention provides a method of improving yield of an apple crop affected by fungal pathogen infection comprising applying an amount of phthalimide fungicide to the crop so as to thereby improve the yield of the crop compared to an apple crop affected by the fungal pathogen infection which has been treated with mancozeb.

In some embodiments, the method comprises treating the apple crop with folpet.

In some embodiments, the standard treatment is mancozeb.

The present invention provides a method treating a mango crop against fungal pathogen infection comprising applying an amount of phthalimide fungicide to the crop or locus so as to thereby treat the crop or locus against fungal infection.

The present invention provides a method treating a papaya crop against fungal pathogen infection comprising applying an amount of phthalimide fungicide to the crop or locus so as to thereby treat the crop or locus against fungal infection.

The present invention provides a method treating a pitaya crop against fungal pathogen infection comprising applying an amount of phthalimide fungicide to the crop or locus so as to thereby treat the crop or locus against fungal infection.

The present invention provides a method treating an avocado crop against fungal pathogen infection comprising applying an amount of phthalimide fungicide to the crop or locus so as to thereby treat the crop or locus against fungal infection.

The present invention provides a method treating a dragon fruit crop against fungal pathogen infection comprising applying an amount of phthalimide fungicide to the crop or locus so as to thereby treat the crop or locus against fungal infection.

The present invention provides a method treating a guava crop against fungal pathogen infection comprising applying an amount of phthalimide fungicide to the crop or locus so as to thereby treat the crop or locus against fungal infection.

The present invention provides a method treating a longan crop against fungal pathogen infection comprising applying an amount of phthalimide fungicide to the crop or locus so as to thereby treat the crop or locus against fungal infection.

The present invention provides a method treating a litchi crop against fungal pathogen infection comprising applying an amount of phthalimide fungicide to the crop or locus so as to thereby treat the crop or locus against fungal infection.

The present invention provides a method treating a durian crop against fungal pathogen infection comprising applying an amount of phthalimide fungicide to the crop or locus so as to thereby treat the crop or locus against fungal infection.

The present invention provides a method treating a passion fruit crop against fungal pathogen infection comprising applying an amount of phthalimide fungicide to the crop or locus so as to thereby treat the crop or locus against fungal infection.

The present invention provides a method treating a rambutan crop against fungal pathogen infection comprising applying an amount of phthalimide fungicide to the crop or locus so as to thereby treat the crop or locus against fungal infection.

The present invention provides a method treating a mangosteen crop against fungal pathogen infection comprising applying an amount of phthalimide fungicide to the crop or locus so as to thereby treat the crop or locus against fungal infection.

The present invention provides a method treating a cocoa crop against fungal pathogen infection comprising applying an amount of phthalimide fungicide to the crop or locus so as to thereby treat the crop or locus against fungal infection.

The present invention provides a method treating a chili crop against fungal pathogen infection comprising applying an amount of phthalimide fungicide to the crop or locus so as to thereby treat the crop or locus against fungal infection.

The present invention provides a method treating an onion crop against fungal pathogen infection comprising applying an amount of phthalimide fungicide to the crop or locus so as to thereby treat the crop or locus against fungal infection.

The present invention provides a method treating a corn crop against fungal pathogen infection comprising applying an amount of phthalimide fungicide to the crop or locus so as to thereby treat the crop or locus against fungal infection.

The present invention provides a method treating a sugarcane crop against fungal pathogen infection comprising applying an amount of phthalimide fungicide to the crop or locus so as to thereby treat the crop or locus against fungal infection.

The present invention provides a method treating a sorghum crop against fungal pathogen infection comprising applying an amount of phthalimide fungicide to the crop or locus so as to thereby treat the crop or locus against fungal infection.

The present invention provides a method treating a coffee crop against fungal pathogen infection comprising applying an amount of phthalimide fungicide to the crop or locus so as to thereby treat the crop or locus against fungal infection.

The present invention provides a method treating a cotton crop against fungal pathogen infection comprising applying an amount of phthalimide fungicide to the crop or locus so as to thereby treat the crop or locus against fungal infection.

The present invention provides a method treating a rice crop against fungal pathogen infection comprising applying an amount of phthalimide fungicide to the crop or locus so as to thereby treat the crop or locus against fungal infection.

The present invention provides a method treating a pulses crops against fungal pathogen infection comprising applying an amount of phthalimide fungicide to the crop or locus so as to thereby treat the crop or locus against fungal infection.

The present invention provides a method treating a chickpea crop against fungal pathogen infection comprising applying an amount of phthalimide fungicide to the crop or locus so as to thereby treat the crop or locus against fungal infection.

The present invention provides a method treating a pea crop against fungal pathogen infection comprising applying an amount of phthalimide fungicide to the crop or locus so as to thereby treat the crop or locus against fungal infection.

The present invention provides a method treating a broad bean crop against fungal pathogen infection comprising applying an amount of phthalimide fungicide to the crop or locus so as to thereby treat the crop or locus against fungal infection.

The present invention provides a method treating a fava bean crop against fungal pathogen infection comprising applying an amount of phthalimide fungicide to the crop or locus so as to thereby treat the crop or locus against fungal infection.

The present invention provides a method treating an oil seed rape (OSR) crop against fungal pathogen infection comprising applying an amount of phthalimide fungicide to the crop or locus so as to thereby treat the crop or locus against fungal infection.

The present invention provides a method treating a soybean crop against fungal pathogen infection comprising applying an amount of phthalimide fungicide to the crop or locus so as to thereby treat the crop or locus against fungal infection.

The present invention provides a method of treating a crop against fungal pathogen infection without causing significant phytotoxic harm to the crop comprising applying a phthalimide fungicide in the form of solid particles to the crop or a locus thereof so as to thereby treat the crop against fungal infection. In some embodiments, the crop is crop (A) as defined herein. In some embodiments, the fungal pathogen is fungal pathogen (I) as defined herein. In some embodiments, the method is crop-safe. In some embodiments, the method effectively treats the crop or locus against fungal pathogen infection without causing significant phytotoxic harm to the crop. In some embodiments, the method effectively treats the crop or locus against fungal pathogen infection without causing measurable phytotoxic harm to the crop. In some embodiments, the method effectively treats the crop or locus against fungal pathogen infection without causing concomitant phytotoxic harm to the crop. In some embodiments, the method effectively treats the crop or locus against fungal pathogen infection without causing phytotoxic harm to the crop.

The present invention provides a method of safely treating a crop or locus against fungal pathogen infection comprising applying an amount of a solid particulate phthalimide fungicide to the crop or locus so as to thereby treat the crop or locus against fungal infection while avoiding significant or measurable, concomitant phytotoxic harm to the crop. In some embodiments, the crop is crop (A) as defined herein. In some embodiments, the fungal pathogen is fungal pathogen (I) as defined herein.

The solid particulate phthalimide fungicide is preferably applied as a suspension of solid particles of phthalimide fungicide in an aqueous carrier. In some embodiments, the phthalimide fungicide is applied in solid particulate form to the crop or locus. In some embodiments, the phthalimide fungicide is applied in solid particulate form suspended in an aqueous carrier to the crop or locus.

In some embodiments, the locus is soil. In some embodiments, the soil is outdoors. In some embodiments, the soil is in a field. In some embodiments, the soil is inside a structure. In some embodiment, the soil is in a greenhouse. In some embodiments, the locus is the crop seed.

In some embodiments, the method is crop safe. In some embodiments, the method is effective for treating the crop or locus against the fungal pathogen infection without any significant and/or measurable concomitant phytotoxic harm to the crop.

In some embodiments, the fungal infection is caused by fungal pathogen.

In some embodiments, treating a crop or locus against fungal pathogen infection comprises combating phytopathogenic diseases on the crop or locus. In some embodiments, treating a crop or locus against fungal pathogen infection comprises combating diseases caused by fungal pathogen on the crop or locus.

In some embodiments, treating the crop or locus against fungal pathogen infection comprises protecting the crop or locus from fungal attack.

In some embodiments, treating the crop or locus against fungal pathogen infection comprises preventing fungal infection of the crop or locus.

In some embodiments, treating the crop or locus against fungal pathogen infection comprises controlling a fungal pathogen, affecting the crop or locus.

In some embodiments, treating the crop or locus against fungal pathogen infection comprises controlling a fungal disease caused by a fungal pathogen, affecting the crop or locus.

In some embodiments, treating the crop or locus against fungal pathogen infection comprises reducing fungal infection of the crop or locus.

In some embodiments, treating the crop or locus against fungal pathogen infection comprises reducing fungal infection of the crop or locus while avoiding significant and/or measurable phytotoxic harm to the crop by applying solid particulate forms of phthalimide fungicide selected from folpet, captan and a combination thereof.

In some embodiments, treating the crop or locus against fungal pathogen infection comprises inhibiting fungal pathogen mycelium formation at the crop or locus.

The present invention also provides a method of inhibiting fungal pathogen mycelium formation comprising applying a phthalimide fungicide to the fungus, so as to thereby inhibit fungal mycelium formation.

Number and rates of application depend on the biological and climatic environment of the pathogen. Alternatively, the fungicide can reach the crop from the soil or water via the root system (systemic action) by drenching the locus of the crop with a liquid preparation (for example in rice growing) or incorporating the substances into the soil in solid form, for example in the form of granules (soil application). The fungicide can also be applied to seed kernels for the purposes of seed treatment (coating), either by soaking the roots or kernels in succession with a liquid preparation of an active ingredient or by coating them with a moist or dry preparation which already comprises the combination. In addition, other types of application to crops are possible in specific cases, for example the targeted treatment of buds or fruit-bearing parts of the crop.

The amount of the fungicide to be applied, will depend on various factors such as the compound employed, the subject of the treatment (crop, soil, seed), the type of treatment (e.g., spraying, dusting, seed dressing), the purpose of the treatment (prophylactic or therapeutic), the type of fungi to be treated and the application time.

In some embodiments, the phthalimide fungicide(s) is applied at least one time during a growth season. In some embodiments, the phthalimide fungicide(s) is applied two or more times during a growth season. In some embodiments, the phthalimide fungicide(s) is applied one to five times during a growth season. In some embodiments, the phthalimide fungicide(s) is applied one to eight times during a growth season. In some embodiments, the phthalimide fungicide(s) is applied one to fifteen times during a growth season. In some embodiments, the growth season is from post-harvest to flowering.

In some embodiments, the phthalimide fungicide(s) is applied as a soil application, as a foliar application, as seed treatment and any combination thereof. In some embodiments, the phthalimide fungicide(s) is applied as a soil application. In some embodiments, the phthalimide fungicide(s) is applied as a foliar application. In some embodiments, the phthalimide fungicide is applied as seed treatment. In some embodiments, the phthalimide fungicide(s) is applied to crop leaves. In some embodiments, the phthalimide fungicide(s) is applied to crop propagation material.

In some embodiments, the phthalimide fungicide(s) is applied in the form of solid particulates.

In some embodiments, the phthalimide fungicide(s) is applied in the form of solid particulates suspended in an aqueous carrier.

The phthalimide fungicide can be diluted and applied in a customary manner, for example by watering (drenching), drip irrigation, spraying, and atomizing.

The rate at which the phthalimide fungicide according to the invention is applied will depend upon the particular type of fungus to be controlled, the degree of control required and the timing and method of application. The effective application rates of the phthalimide fungicide cannot generally be defined, as it varies depending upon various conditions such as the type of the formulation, weather conditions, the type of crop and the type of pests.

In some embodiments, the phthalimide fungicide is applied at a rate from 0.1 grams of total active ingredient per hectare (g a.i./ha) to 10000 g a.i./ha . In some embodiments, the phthalimide fungicide is applied at a rate from about 10 g a.i./ha to about 10000 g a.i./ha. In some embodiments, the phthalimide fungicide is applied at a rate from about 50 g a.i./ha to about 5000 g a.i./ha. In some embodiments, the phthalimide fungicide is applied at a rate from about 50 g a.i./ha to about 2600 g a.i./ha. In some embodiments, the phthalimide fungicide is applied at a rate from about 100 g a.i./ha to about 2500 g a.i./ha. In some embodiments, the phthalimide fungicide is applied at a rate from about 50 g a.i./ha to about 2000 g a.i./ha. In some embodiments, the phthalimide fungicide is applied at a rate from about 25 g a.i./ha to about 2000 g a.i./ha. In some embodiments, the phthalimide fungicide is applied at a rate from about 100 g a.i./ha to about 750 g a.i./ha. In an embodiment, the phthalimide fungicide is applied at a rate from about 60 g a.i./ha to about 600 g a.i./ha. In some embodiments, the phthalimide fungicide is applied at a rate from about 100 g a.i./ha to about 200 g a.i./ha. In some embodiments, the phthalimide fungicide is applied at a rate from about 100 g a.i./ha to about 130 g a.i./ha.

The application rates for phthalimide fungicide are generally from 1 to 5000 g/ha, preferably from 10 to 2500 g/ha, in particular from 20 to 1000 g/ha. In some embodiments, the application rates of phthalimide fungicide may be from 400 to 1500 g/ha. In some embodiments, the application rates of phthalimide fungicide may be from 500 to 1500 g/ha. In some embodiments, the phthalimide fungicide is applied at a rate between 500 to 1000 g/ha. In some embodiments, the phthalimide fungicide is applied at a rate between 750 to 1000 g/ha. In some embodiments, the phthalimide fungicide is applied at a rate between 750 to 1250 g/ha. In some embodiments, the phthalimide fungicide is applied at a rate between 700 to 800 g/ha. In some embodiments, the phthalimide fungicide is applied at a rate of 750 g/ha. In some embodiments, the phthalimide fungicide is applied at a rate between 450 to 550 g/ha. In some embodiments, the phthalimide fungicide is applied at a rate of 500 g/ha.

In some embodiments, the application rates of phthalimide fungicide may be from 500±10% to 1500±10% g a.i./ha. In some embodiments, the phthalimide fungicide is applied at a rate between 500±10% to 1000±10% g a.i./ha. In some embodiments, the phthalimide fungicide is applied at a rate between 700±10% to 800±10% g a.i./ha.

In some embodiments, the phthalimide fungicide is applied at a rate of 1250±10% g a.i./ha. In some embodiments, the phthalimide fungicide is applied at a rate of 900±10% g a.i./ha. In some embodiments, the phthalimide fungicide is applied at a rate of 875±10% g a.i./ha. In some embodiments, the phthalimide fungicide is applied at a rate of 750±10% g a.i./ha. In some embodiments, the phthalimide fungicide is applied at a rate of 625±10% g a.i./ha. In some embodiments, the phthalimide fungicide is applied at a rate of 600±10% g a.i./ha. In some embodiments, the phthalimide fungicide is applied at a rate of 500±10% g a.i./ha.

In some embodiments, the phthalimide fungicide, if applied as foliar application, is to be applied at a rate between 500 to 1500 g a.i./ha. In some embodiments, the phthalimide fungicide is applied at a rate of about 1500 g a.i./ha. In some embodiments, the phthalimide fungicide is applied at a rate of about 1200 g a.i./ha. In some embodiments, the phthalimide fungicide is applied at a rate of about 1000 g a.i./ha. In some embodiments, the phthalimide fungicide is applied at a rate of about 900 g a.i./ha. In some embodiments, the phthalimide fungicide is applied at a rate of about 750 g a.i./ha. In some embodiments, the phthalimide fungicide is applied at a rate of about 600 g a.i./ha. In some embodiments, the phthalimide fungicide is applied at a rate of about 500 g a.i./ha.

In some embodiments, the phthalimide fungicide, if applied as foliar application, is to be applied at a rate between 20 to 300 g a.i./ha. In some embodiments, the phthalimide fungicide is applied at a rate of about 150 g a.i./ha. In some embodiments, the phthalimide fungicide is applied at a rate of about 120 g a.i./ha. In some embodiments, the phthalimide fungicide is applied at a rate of about 100 g a.i./ha. In some embodiments, the phthalimide fungicide is applied at a rate of about 90 g a.i./ha. In some embodiments, the phthalimide fungicide is applied at a rate of about 75 g a.i./ha. In some embodiments, the phthalimide fungicide is applied at a rate of about 60 g a.i./ha. In some embodiments, the phthalimide fungicide is applied at a rate of about 50 g a.i./ha. In some embodiments, the phthalimide fungicide is applied at a rate of about 30 g a.i./ha. In some embodiments, the phthalimide fungicide is applied at a rate of about 25 g a.i./ha. In some embodiments, the phthalimide fungicide is applied at a rate of about 20 g a.i./ha. In some embodiments, the phthalimide fungicide is applied at a rate of about 10 g a.i./ha.

In some embodiments, the phthalimide fungicide, if applied as soil application, is to be applied at a rate between 0.1 to 10000 g/ha. In some embodiments, the phthalimide fungicide, if applied as soil application, is to be applied at a rate between 1 to 5000 g/ha. In some embodiments, the phthalimide fungicide, if applied as soil application, is to be applied at a rate between 60 to 2600 g/ha.

In some embodiments, the phthalimide fungicide, if applied as seed treatment, is to be applied at a rate between 2g per 100kg to 400 g per 100 kg of seed. In some embodiments, the phthalimide fungicide, if applied as seed treatment, is to be applied at a rate between 2.5g per 100kg to 50 g per 100 kg of seed. In some embodiments, the phthalimide fungicide, if applied as seed treatment, is to be applied at a rate between 2.5g per 100kg to 25 g per 100 kg of seed.

### Compositions

The present invention provides a composition comprising phthalimide fungicide for treating a crop or locus against fungal pathogen infection, wherein the crop is crop (A) as defined herein and the fungal pathogen is fungal pathogen (I) as defined herein.

The present invention also provides a crop-safe composition comprising a phthalimide fungicide in the form of solid particulates for use in crops (A). In some embodiments, the solid particulates of the phthalimide fungicide are suspended in an aqueous carrier.

In some embodiments, the present invention provides a composition comprising solid particulate phthalimide fungicide for safely treating a crop (A), as herein defined, against fungal pathogen infection. In some embodiments, the composition is crop-safe for those crops. In some embodiments, the composition effectively treats the crop (A) against fungal pathogen infection without causing significant phytotoxic harm to the crop. In some embodiments, the composition effectively treats the crop (A) against fungal pathogen infection without causing measurable phytotoxic harm to the crop. In some embodiments, the composition effectively treats the crop (A) against fungal pathogen infection without causing concomitant phytotoxic harm to the crop. In some embodiments, the composition effectively treats the crop (A) against fungal pathogen infection without causing phytotoxic harm to the crop.

In some embodiments, the present invention provides a crop-safe composition comprising solid particulate phthalimide fungicide suspended in an aqueous carrier for treating a crop or locus against fungal pathogen infection while avoiding concomitant harmful and/or phytotoxic effects to the crop where the crops are crops (A) as herein defined.

In notable embodiments, the crop-safe composition comprising solid particulate phthalimide fungicide suspended in an aqueous carrier comprises suspended solid particles of folpet, captan or a combination thereof.

The present invention provides a composition comprising phthalimide fungicide for combating diseases caused by fungal pathogen (I) on crop (A).

The present invention also provides an aqueous suspension composition comprising solid particulate phthalimide fungicide for safely combating diseases caused by fungal pathogen in crops (A).

The present invention also provides an aqueous suspension concentrate composition comprising solid particulate phthalimide fungicide for safely combating diseases caused by fungal pathogen on crops, wherein the crop is crop (A) as defined herein and the fungal pathogen is fungal pathogen (I) as defined herein. In some embodiments, the composition is a suspension concentrate (SC) composition.

The present invention provides a composition comprising phthalimide fungicide for combating diseases caused by fungal pathogen on crops, wherein the crop is crop (A) as defined herein and the fungal pathogen is fungal pathogen (I) as defined herein.

The present invention provides a composition comprising an amount of phthalimide fungicide for controlling a fungal pathogen in crop (A) as defined herein. In some embodiments, the fungal pathogen is fungal pathogen (I) as defined herein.

The present invention provides a composition comprising phthalimide fungicide for treating, combating and/or controlling diseases caused by fungal pathogen on crops, and methods of treating, combating and/or controlling, a crop or locus against fungal pathogen diseases, wherein, the disease is selected from the group of cercospora leaf spot, leaf spot of beet, Ramularia Leaf Spot, peacock spot of olive, olive anthracnose, leprosy of olive or leaf and shoot lesions of olive, apple scab, yellow sigatoka of banana, black sigatoka of banana, black leaf streak disease of banana, rust of cotton, blight of chickpea, blight of pea, blight of broad bean, ascochyta blight in peas lentils or fava beans, downy mildew of legumes, peas etc., sclerotinia stem rot or white mold of oilseed rape, Asian soybean rust cotton rust of cotton, sudden death syndrome, frogeye leaf spot, black spot of apple, white mold, brown stem rot, brown spot of soybean, purple blotch of soybean, soybean anthracnose, target spot on soybean, and any combination thereof and the methods comprise applying an amount of the composition comprising phthalimide fungicide to crop or locus of crops. In some embodiments, the crop is crop (A) as defined herein. In some embodiments, the fungal pathogen is fungal pathogen (I) as defined herein. In some embodiments the composition comprises solid particles of phthalimide fungicide. In some embodiments the composition is a suspension of solid particles of phthalimide fungicide in an aqueous carrier.

The present invention provides a composition comprising phthalimide fungicide for controlling fungal pathogen in sugar beet crop. In some embodiments, the fungal pathogen is Cercospora beticola. In some embodiments, the fungal pathogen is Cercospora sojina. In some embodiments, the fungal pathogen is Cercospora kikuchii. In some embodiments, the fungal pathogen is Ramularia beticola.

The present invention provides a composition comprising phthalimide fungicide for controlling fungal pathogen in apple crop. In some embodiments, the fungal pathogen is Colletotrichum gloeosporioides. In some embodiments, the fungal pathogen is Colletotrichum sp. In some embodiments, the fungal pathogen is Venturia inaequalis.

The present invention provides a composition comprising phthalimide fungicide for controlling fungal pathogen in olive crop. In some embodiments, the fungal pathogen is Colletotrichum gloeosporioides. In some embodiments, the fungal pathogen is Colletotrichum sp. In some embodiments, the fungal pathogen is Venturia oleagina. In some embodiments, the fungal pathogen is Phlyctema vagabunda.

The present invention provides a composition comprising phthalimide fungicide for controlling fungal pathogen in banana crop. In some embodiments, the fungal pathogen is Pseudocercospora musae. In some embodiments, the fungal pathogen is Mycosphaerella fijiensis. In some embodiments, the fungal pathogen is Fusarium sp. In some embodiments, the fungal pathogen is Colletotrichum gloeosporioides. In some embodiments, the fungal pathogen is Colletotrichum sp.

The present invention provides a composition comprising phthalimide fungicide for controlling fungal pathogen in corn crop. In some embodiments, the fungal pathogen is Cercospora zeae-maydis. In some embodiments, the fungal pathogen is Setosphaeria turcica. In some embodiments, the fungal pathogen is Cochliobolus heterostrophus. In some embodiments, the fungal pathogen is Cochliobolus carbonum. In some embodiments, the fungal pathogen is Ustilago maydis. In some embodiments, the fungal pathogen is Gibberella zeae. In some embodiments, the fungal pathogen is Fusarium sp.

The present invention provides a composition comprising phthalimide fungicide for controlling fungal pathogen in sugarcane crop. In some embodiments, the fungal pathogen is Ustilago scitaminea. In some embodiments, the fungal pathogen is Helminthosporium sacchari. In some embodiments, the fungal pathogen is Fusarium sp.

The present invention provides a composition comprising phthalimide fungicide for controlling fungal pathogen in sorghum crop. In some embodiments, the fungal pathogen is Puccinia sorghi. In some embodiments, the fungal pathogen is Fusarium sp.

The present invention provides a composition comprising phthalimide fungicide for controlling fungal pathogen in rice crop. In some embodiments, the fungal pathogen is Rhizoctonia solani.

In some embodiments, the fungal pathogen is Pyricularia oryzae. In some embodiments, the fungal pathogen is Cochliobolus miyabeanus. In some embodiments, the fungal pathogen is Fusarium sp.

The present invention provides a composition comprising phthalimide fungicide for controlling fungal pathogen in coffee crop. In some embodiments, the fungal pathogen is Hemileia vastatrix. In some embodiments, the fungal pathogen is Gibberella xylarioides. In some embodiments, the fungal pathogen is Fusarium sp. In some embodiments, the fungal pathogen is Phakopsora gossypii.

The present invention provides a composition comprising phthalimide fungicide for controlling fungal pathogen in cotton crop. In some embodiments, the fungal pathogen is Phakopsora gossypii. In some embodiments, the fungal pathogen is Puccinia schedonnardi. In some embodiments, the fungal pathogen is Puccinia cacabata. In some embodiments, the fungal pathogen is Ascochyta gossypiicola. In some embodiments, the fungal pathogen is Glomerella gossypii. In some embodiments, the fungal pathogen is Fusarium sp.

The present invention provides a composition comprising phthalimide fungicide for controlling fungal pathogen in pulses crops. In some embodiments, the fungal pathogen is Ascochyta rabiei. In some embodiments, the fungal pathogen is Ascochyta pisi. In some embodiments, the fungal pathogen is Ascochyta fabae. In some embodiments, the fungal pathogen is Cercospora zonata. In some embodiments, the fungal pathogen is Uromyces vicia-fabae. In some embodiments, the fungal pathogen is Peronospora viciae. In some embodiments, the fungal pathogen is Botrytis cinerea. In some embodiments, the fungal pathogen is Sclerotinia sp. In some embodiments, the fungal pathogen is Fusarium sp.

The present invention provides a composition comprising phthalimide fungicide for controlling fungal pathogen in oilseed rape (OSR) crop. In some embodiments, the fungal pathogen is Botrytis cinerea. In some embodiments, the fungal pathogen is Sclerotinia sp.

The present invention provides a composition comprising phthalimide fungicide for controlling fungal pathogen in cocoa crop. In some embodiments, the fungal pathogen is Phytophthora sp. In some embodiments, the fungal pathogen is Colletotrichum gloeosporioides. In some embodiments, the fungal pathogen is Colletotrichum sp.

The present invention provides a composition comprising phthalimide fungicide for controlling fungal pathogen in citrus crop. In some embodiments, the fungal pathogen is Colletotrichum sp. In some embodiments, the fungal pathogen is Colletotrichum gloeosporioides.

The present invention provides a composition comprising phthalimide fungicide for controlling fungal pathogen in cherry crop. In some embodiments, the fungal pathogen is Colletotrichum sp. In some embodiments, the fungal pathogen is Colletotrichum gloeosporioides.

The present invention provides a composition comprising phthalimide fungicide for controlling fungal pathogen in papaya crop. In some embodiments, the fungal pathogen is Colletotrichum sp. In some embodiments, the fungal pathogen is Colletotrichum gloeosporioides.

The present invention provides a composition comprising phthalimide fungicide for controlling fungal pathogen in pitaya crop. In some embodiments, the fungal pathogen is Colletotrichum sp. In some embodiments, the fungal pathogen is Colletotrichum gloeosporioides.

The present invention provides a composition comprising phthalimide fungicide for controlling fungal pathogen in mango crop. In some embodiments, the fungal pathogen is Colletotrichum sp. In some embodiments, the fungal pathogen is Colletotrichum gloeosporioides.

The present invention provides a composition comprising phthalimide fungicide for controlling fungal pathogen in avocado crop. In some embodiments, the fungal pathogen is Colletotrichum sp. In some embodiments, the fungal pathogen is Colletotrichum gloeosporioides.

The present invention provides a composition comprising phthalimide fungicide for controlling fungal pathogen in dragon fruit crop. In some embodiments, the fungal pathogen is Colletotrichum sp. In some embodiments, the fungal pathogen is Colletotrichum gloeosporioides.

The present invention provides a composition comprising phthalimide fungicide for controlling fungal pathogen in guava crop. In some embodiments, the fungal pathogen is Colletotrichum sp. In some embodiments, the fungal pathogen is Colletotrichum gloeosporioides.

The present invention provides a composition comprising phthalimide fungicide for controlling fungal pathogen in longan crop. In some embodiments, the fungal pathogen is Colletotrichum sp. In some embodiments, the fungal pathogen is Colletotrichum gloeosporioides.

The present invention provides a composition comprising phthalimide fungicide for controlling fungal pathogen in litchi crop. In some embodiments, the fungal pathogen is Colletotrichum sp. In some embodiments, the fungal pathogen is Colletotrichum gloeosporioides.

The present invention provides a composition comprising phthalimide fungicide for controlling fungal pathogen in durian crop. In some embodiments, the fungal pathogen is Colletotrichum sp. In some embodiments, the fungal pathogen is Colletotrichum gloeosporioides..

The present invention provides a composition comprising phthalimide fungicide for controlling fungal pathogen in passion fruit crop. In some embodiments, the fungal pathogen is Colletotrichum sp. In some embodiments, the fungal pathogen is Colletotrichum gloeosporioides..

The present invention provides a composition comprising phthalimide fungicide for controlling fungal pathogen in rambutan crop. In some embodiments, the fungal pathogen is Colletotrichum sp. In some embodiments, the fungal pathogen is Colletotrichum gloeosporioides.

The present invention provides a composition comprising phthalimide fungicide for controlling fungal pathogen in mangosteen crop. In some embodiments, the fungal pathogen is Colletotrichum sp. In some embodiments, the fungal pathogen is Colletotrichum gloeosporioides.

The present invention provides a composition comprising phthalimide fungicide for controlling fungal pathogen in chili crop. In some embodiments, the fungal pathogen is Colletotrichum sp. In some embodiments, the fungal pathogen is Colletotrichum gloeosporioides.

The present invention provides a composition comprising phthalimide fungicide for controlling fungal pathogen in onion crop. In some embodiments, the fungal pathogen is Colletotrichum sp. In some embodiments, the fungal pathogen is Colletotrichum gloeosporioides.

The present invention provides a composition comprising phthalimide fungicide for controlling fungal pathogen in soybean crop. In some embodiments, the fungal pathogen is Phakopsora pachyrhizi. In some embodiments, the fungal pathogen is Fusarium virguliforme. In some embodiments, the fungal pathogen is Cercospora sojina. In some embodiments, the fungal pathogen is Sclerotinia sclerotiorum. In some embodiments, the fungal pathogen is Phialophora gregata. In some embodiments, the fungal pathogen is Septoria glycines. In some embodiments, the fungal pathogen is Cercospora kikuchii. In some embodiments, the fungal pathogen is Colletotrichum truncatum. In some embodiments, the fungal pathogen is Corynespora cassiicola.

In some embodiments, the composition comprises at least one agriculturally acceptable carrier.

In some embodiments, the amount of the phthalimide fungicide(s) in the composition is from about 0.5% to about 95% by weight based on the total weight of the composition.

In some embodiments, the composition comprises at least one agriculturally acceptable additive selected from the group consisting of surfactants, adjuvants and any combination thereof.

In some embodiments, combating disease in a crop or locus against fungal infection comprises inhibiting fungal mycelium formation.

In some embodiments, combating disease in a crop or locus against fungal infection comprises inhibiting fungal spores germination.

In some embodiments, combating disease in a crop or locus against fungal pathogen infection comprises treating phytopathogenic diseases on the crop or locus.

In some embodiments, combating disease in a crop or locus against fungal pathogen infection comprises protecting the crop or locus from fungal attack.

In some embodiments, combating disease in a crop or locus against fungal pathogen infection comprises preventing fungal infection of the crop or locus.

In some embodiments, the composition further comprises an agriculturally acceptable carrier.

In an embodiment, the amount of the phthalimide fungicide(s) in the composition is from about 0.1%, 0.5%, 1%, 1.5%, 2%, 2.5%, 3%, 3.5%, 4%, 4.5%, 5% to about 90%, 93%, 95%, 98%, 99% based on the total weight of the composition.

In an embodiment, the amount of the phthalimide fungicide(s) in the composition is from about 0.5% to about 95% by weight based on the total weight of the composition.

The compositions of the present invention may be employed or prepared in any conventional form, for example, as wettable powders (WP), emulsion concentrates (EC), microemulsion concentrates (MEC), water-soluble powders (SP), water-soluble concentrates (SL), suspoemulsion (SE), oil dispersions (OD), concentrated emulsions (BW) such as oil-in-water and water-in-oil emulsions, sprayable solutions or emulsions, capsule suspensions (CS), suspension concentrates (SC), suspension concentrates, dusts (DP), oil-miscible solutions (OL), a mixed formulation of CS and SC (ZC), a mixed heterogeneous formulation of CS and SE (ZE), a mixed heterogeneous formulation CS and EW (ZW), seed-dressing products, granules (GR) in the form of microgranules, spray granules, coated granules and absorption granules, granules for soil application or broadcasting, water-soluble granules (SG), water-dispersible granules (WDG), ULV formulations, microcapsules or waxes. These individual formulation types are known in the art.

The composition may be employed in any conventional form, especially in the form of water dispersible granules, coated granules, emulsifiable concentrate, suspension concentrate, microemulsion, oil dispersion, suspo-emulsion, capsule suspension, a mixed formulation of capsule suspension and suspension concentrate.

In notable embodiments, the compositions of the present invention comprise phthalimide fungicide in solid particulate form for treating, combating and/or controlling diseases caused by fungal pathogen on crops, and thus for use in methods of treating, combating and/or controlling, a crop or locus against fungal pathogen diseases. These compositions may comprise the solid particulate phthalimide fungicide in suspended, powder or granular formulations.

In methods of treating, combating and/or controlling diseases caused by fungal pathogens on crops which may have previously been unsuccessfully attempted with other fungicides, the inventive solid particulate phthalimide fungicide compositions, can often provide acceptable levels of control, and or treatment, but with greatly reduced levels of phytotoxicity to the crops compared with other fungicides.

The inventive compositions may be produced in conventional manner, e.g., by mixing the active ingredients with appropriate adjuvants (diluents or solvents and optionally other formulating ingredients such as surfactants).

Aqueous use forms can be prepared from emulsion concentrates, suspensions, pastes, wettable powders or water-dispersible granules by adding water. To prepare emulsions, pastes or oil dispersions, the components of the compositions either as such or dissolved in an oil or solvent, can be homogenized in water by means of a wetting agent, tackifier, dispersant or emulsifier. Alternatively, it is also possible to prepare concentrates comprising active component, wetting agent, tackifier, dispersant or emulsifier and, if desired, a solvent or oil, which are suitable for dilution with water.

In some embodiments, the composition comprises at least one agriculturally acceptable additive. In some embodiments, the agriculturally acceptable additive is selected from the group of surfactants, adjuvant and any combination thereof. The agriculturally acceptable additive may also be other application-promoting adjuvants customarily employed in formulation technology and formulation techniques that are known in the art.

In some embodiments, the composition comprises at least one additional component selected from the group of surfactants, and adjuvant.

Such compositions can be formulated using agriculturally acceptable carriers, surfactants or other application-promoting adjuvants customarily employed in formulation technology and formulation techniques that are known in the art.

Examples of suitable surfactants include, but are not limited to, non-ionic, anionic, cationic and ampholytic types such as alkoxylated fatty alcohols, ethoxylated polysorbate (e.g., tween 20), ethoxylated castor oil, lignin sulfonates, fatty acid sulfonates (e.g., lauryl sulfonate), phosphate esters such as phosphate esters of alcohol alkoxylates, phosphate esters of alkylphenol alkoxylates and phosphate esters of styrylphenol ethoxylates, condensates of sulfonated naphthalene and naphthalene derivatives with formaldehyde, condensates of naphthalene or of naphthalenesulfonic acid with phenol and formaldehyde, alkylarylsulfonates, ethoxylated alkylphenols and aryl phenols, polyalkylene glycols, sorbitol esters, alkali metal, sodium salts of lignosulphonates, tristyrylphenol ethoxylate phosphate esters, aliphatic alcohol ethoxylates, alkylphenol ethoxylates, ethylene oxide/propylene oxide block copolymers, graft copolymers and polyvinyl alcohol-vinyl acetate copolymers. Other surfactants known in the art may be used as desired.

Suitable carriers and adjuvants may be solid or liquid and correspond to the substances ordinarily employed in formulation technology, such as, e.g., natural or regenerated mineral substances, solvents, dispersants, wetting fungicides, tackifiers, thickeners, binding fungicides or fertilizers. Such carriers are for example described in WO 96/22690.

Examples of suitable liquid carriers potentially useful in the present compositions include but are not limited to water; aromatic hydrocarbons such as alkylbenzenes and alkylnaphthalenes; alcohols such as cyclohexanol, and decanol; ethylene glycol; polypropylene glycol; dipropropylene glycol; N,N-dimethylformamide; dimethylsulfoxide; dimethylacetamide; N-alkylpyrrolidones such as N-methyl-2-pyrrolidone; paraffins; various oils such as olive, castor, linseed, tung, sesame, corn, peanut, cottonseed, soybean, rape-seed, or coconut oil; fatty acid esters; ketones such as cyclohexanone, 2-heptanone, isophorone, and 4-hydroxy-4-methyl-2-pentanone; and the like.

Examples of suitable solid carriers potentially useful in the present compositions include but are not limited to mineral earths such as silica gels, silicates, talc, kaolin, sericite, attaclay, limestone, bentonite, lime, chalk, bole, mirabilite, loess, clay, dolomite, zeolite, diatomaceous earth, calcium carbonate, calcium sulfate, magnesium sulfate, magnesium oxide, sodium carbonate and bicarbonate, and sodium sulfate; ground synthetic materials; fertilizers such as ammonium sulfate, ammonium phosphate, ammonium nitrate, ureas, and products of vegetable origin, such as cereal meal, tree bark meal, wood meal, and nutshell meal; cellulose powders; and other solid carriers.

Other ingredients, such as wetting agents, anti-foaming, adhesives, neutralizers, thickeners, binders, sequestrates, fertilizers, biocides, stabilizers, buffers or anti-freeze agents, may also be added to the present compositions in order to increase the stability, density, and viscosity of the described compositions.

Aqueous use forms can be prepared from emulsion concentrates, suspensions, pastes, wettable powders or water-dispersible granules by adding water. To prepare emulsions, pastes or oil dispersions, the components of the compositions either as such or dissolved in an oil or solvent, can be homogenized in water by means of a wetting agent, tackifier, dispersant or emulsifier. Alternatively, it is also possible to prepare concentrates comprising active component, wetting agent, tackifier, dispersant or emulsifier and, if desired, a solvent or oil, which are suitable for dilution with water.

Particularly compositions to be applied in spraying forms such as water dispersible concentrates or wettable powders may contain surfactants such as wetting and dispersing fungicides, e.g., the condensation product of formaldehyde with naphthalene sulphonate, an alkylarylsulphonate, a lignin sulphonate, a fatty alkyl sulphate, and ethoxylated alkylphenol and an ethoxylated fatty alcohol.

The composition according to the invention is generally formulated in various ways using formulation adjuvants, such as carriers, solvents and surface-active substances. The formulations can be in various physical forms, e.g., in the form of dusting powders, gels, wettable powders, water-dispersible granules, water-dispersible tablets, effervescent pellets, emulsifiable concentrates, microemulsifiable concentrates, oil-in-water emulsions, oil-flowables, aqueous dispersions, oily dispersions, suspo-emulsions, capsule suspensions, emulsifiable granules, soluble liquids, water-soluble concentrates (with water or a water- miscible organic solvent as carrier), impregnated polymer films or in other forms known e.g., from the Manual on Development and Use of FAO and WHO Specifications for Pesticides, United Nations, First Edition, Second Revision (2010). Such formulations can either be used directly or diluted prior to use. The dilutions can be made, for example, with water, liquid fertilisers, micronutrients, biological organisms, oil or solvents. The formulations can be prepared e.g., by mixing the active ingredient with the formulation adjuvants in order to obtain compositions in the form of finely divided solids, granules, solutions, dispersions or emulsions. The active ingredients can also be formulated with other adjuvants, such as finely divided solids, mineral oils, oils of vegetable or animal origin, modified oils of vegetable or animal origin, organic solvents, water, surface-active substances or combinations thereof.

The active ingredients can also be contained in microcapsules. Microcapsules contain the active ingredients in a porous carrier. This enables the active ingredients to be released into the environment in controlled amounts (e.g., slow-release). Microcapsules usually have a diameter of from 0.1 to 500 microns. They contain active ingredients in an amount of from about 25 to 95 % by weight of the capsule weight. The active ingredients can be in the form of a monolithic solid, in the form of fine particles in solid or liquid dispersion or in the form of a suitable solution. The encapsulating membranes can comprise, for example, natural or synthetic rubbers, cellulose, styrene/butadiene copolymers, polyacrylonitrile, polyacrylate, polyesters, polyamides, polyureas, polyurethane or chemically modified polymers and starch xanthates or other polymers that are known to the person skilled in the art. Alternatively, very fine microcapsules can be formed in which the active ingredient is contained in the form of finely divided particles in a solid matrix of base substance, but the microcapsules are not themselves encapsulated.

The formulation adjuvants that are suitable for the preparation of the formulations according to the invention are known per se. As liquid carriers there may be used: water, toluene, xylene, petroleum ether, vegetable oils, acetone, methyl ethyl ketone, cyclohexanone, acid anhydrides, acetonitrile, acetophenone, amyl acetate, 2-butanone, butylene carbonate, chlorobenzene, cyclohexane, cyclohexanol, alkyl esters of acetic acid, diacetone alcohol, 1,2-dichloropropane, diethanolamine, p-diethylbenzene, diethylene glycol, diethylene glycol abietate, diethylene glycol butyl ether, diethylene glycol ethyl ether, diethylene glycol methyl ether, /V,/V-dimethylformamide, dimethyl sulfoxide, 1,4-dioxane, dipropylene glycol, dipropylene glycol methyl ether, dipropylene glycol dibenzoate, diproxitol, alkylpyrrolidone, ethyl acetate, 2-ethylhexanol, ethylene carbonate, 1,1,1 - trichloroethane, 2- heptanone, alpha-pinene, d-limonene, ethyl lactate, ethylene glycol, ethylene glycol butyl ether, ethylene glycol methyl ether, gamma-butyrolactone, glycerol, glycerol acetate, glycerol diacetate, glycerol triacetate, hexadecane, hexylene glycol, isoamyl acetate, isobornyl acetate, isooctane, isophorone, isopropylbenzene, isopropyl myristate, lactic acid, laurylamine, mesityl oxide, methoxypropanol, methyl isoamyl ketone, methyl isobutyl ketone, methyl laurate, methyl octanoate, methyl oleate, methylene chloride, m-xylene, n-hexane, n- octylamine, octadecanoic acid, octylamine acetate, oleic acid, oleylamine, o-xylene, phenol, polyethylene glycol, propionic acid, propyl lactate, propylene carbonate, propylene glycol, propylene glycol methyl ether, p-xylene, toluene, triethyl phosphate, triethylene glycol, xylenesulfonic acid, paraffin, mineral oil, trichloroethylene, perchloroethylene, ethyl acetate, amyl acetate, butyl acetate, propylene glycol methyl ether, diethylene glycol methyl ether, methanol, ethanol, isopropanol, and alcohols of higher molecular weight, such as amyl alcohol, tetrahydrofurfuryl alcohol, hexanol, octanol, ethylene glycol, propylene glycol, glycerol, V-methyl-2-pyrrolidone and the like.

Suitable solid carriers are, for example, talc, titanium dioxide, pyrophyllite clay, silica, attapulgite clay, kieselguhr, limestone, calcium carbonate, bentonite, calcium montmorillonite, cottonseed husks, wheat flour, soybean flour, pumice, wood flour, ground walnut shells, lignin and similar substances.

A large number of surface-active substances can advantageously be used in both solid and liquid formulations, especially in those formulations which can be diluted with a carrier prior to use. Surface-active substances may be anionic, cationic, non-ionic or polymeric and they can be used as emulsifiers, wetting fungicides or suspending fungicides or for other purposes. Typical surface-active substances include, for example, salts of alkyl sulfates, such as diethanolammonium lauryl sulfate; salts of alkylarylsulfonates, such as calcium dodecylbenzenesulfonate; alkylphenol/alkylene oxide addition products, such as nonylphenol ethoxylate; alcohol/alkylene oxide addition products, such as tridecylalcohol ethoxylate; soaps, such as sodium stearate; salts of alkylnaphthalenesulfonates, such as sodium dibutylnaphthalenesulfonate; dialkyl esters of sulfosuccinate salts, such as sodium di(2-ethylhexyl)sulfosuccinate; sorbitol esters, such as sorbitol oleate; quaternary amines, such as lauryltrimethylammonium chloride, polyethylene glycol esters of fatty acids, such as polyethylene glycol stearate; block copolymers of ethylene oxide and propylene oxide; and salts of mono- and di-alkylphosphate esters.

Further adjuvants that can be used in pesticidal formulations include crystallisation inhibitors, viscosity modifiers, suspending fungicides, dyes, anti-oxidants, foaming fungicides, light absorbers, mixing auxiliaries, antifoams, complexing fungicides, neutralising or pH-modifying substances and buffers, corrosion inhibitors, fragrances, wetting fungicides, take-up enhancers, micronutrients, plasticizers, glidants, lubricants, dispersants, thickeners, antifreezes, microbicides, and liquid and solid fertilizers.

The compositions according to the invention can include an additive comprising an oil of vegetable or animal origin, a mineral oil, alkyl esters of such oils or mixtures of such oils and oil derivatives. The amount of oil additive in the formulation according to the invention is generally from 0.01 to 10 %, based on the mixture to be applied. For example, the oil additive can be added to a spray tank in the desired concentration after a spray mixture has been prepared. Preferred oil additives comprise mineral oils or an oil of vegetable origin, for example rapeseed oil, olive oil or sunflower oil, emulsified vegetable oil, alkyl esters of oils of vegetable origin, for example the methyl derivatives, or an oil of animal origin, such as fish oil or beef tallow. Preferred oil additives comprise alkyl esters of C8-C22 fatty acids, especially the methyl derivatives of C12-C18 fatty acids, for example the methyl esters of lauric acid, palmitic acid and oleic acid (methyl laurate, methyl palmitate and methyl oleate, respectively).

A seed dressing composition is applied in a manner known per se to the seeds employing the mixture of the invention and a diluent in suitable seed dressing composition form, e.g., as an aqueous suspension or in a dry powder form having good adherence to the seeds. Such seed dressing composition are known in the art. Seed dressing composition may contain the single active ingredients or the combination of active ingredients of the present invention in encapsulated form, e.g., as slow release capsules or microcapsules.

In general, the formulations include from 0.01 to 90% by weight of active fungicide, from 0 to 20% agriculturally acceptable surfactant and 10 to 99.99% solid or liquid adjuvant(s). Concentrate forms of compositions generally contain in between about 2 and 80%, preferably between about 5 and 70% by weight of active fungicide. Application forms of formulation may for example contain from 0.01 to 20% by weight, preferably from 0.01 to 5% by weight of active fungicide.

Concentrate forms of compositions generally are diluted before application.

### Uses

The present invention provides use of phthalimide fungicide for treating crop (A) or a locus against fungal pathogen (I) infection.

Crop (A) is selected from group consisting of sugar beet, olive, apple, citrus, cherry, banana, mango, papaya, pitaya, avocado, dragon fruit, guava, longan, litchi, durian, passion fruit, rambutan, mangosteen, cocoa, chili, onion, corn, sugarcane, sorghum, coffee, cotton, rice, pulses, chickpea, pea, broad bean, fava bean, oil seed rape (OSR), soybean, and any combination thereof.

Fungal pathogen (I) is selected from group consisting of Cercospora beticola, Cercospora sojina, Cercospora kikuchii. Ramularia beticola, Venturia oleagina, Colletotrichum gloeosporioides, Colletotrichum sp., Colletotrichum truncatum, Pseudocercospora musae, Mycosphaerella fijiensis, Cercospora zeae-maydis, Setosphaeria turcica, Cochliobolus heterostrophus, Cochliobolus carbonum, Ustilago maydis, Phialophora gregata, Gibberella zeae, Ustilago scitaminea, Helminthosporium sacchari, Puccinia sorghi, Hemileia vastatrix, Gibberella xylarioides, Septoria glycines, Phakopsora gossypii, Phakopsora pachyrhizi, Phlyctema vagabunda, Puccinia schedonnardi, Puccinia cacabata, Corynespora cassiicola, Ascochyta gossypiicola, Glomerella gossypii, Rhizoctonia solani, Pyricularia oryzae, Cochliobolus miyabeanus, Ascochyta rabiei, Ascochyta pisi, Ascochyta fabae, Cercospora zonata, Uromyces vicia-fabae, Peronospora viciae, Botrytis cinerea, Fusarium sp., Fusarium virguliforme, Sclerotinia sp., Sclerotinia sclerotiorum, Phytophthora sp., Venturia inaequalis, Mycosphaerella fijiensis and any combination thereof.

The present invention provides use of a phthalimide fungicide in the form of solid particulates for treating fungal pathogen on crop. In some embodiments, the crop is crop (A) as defined herein. In some embodiments, the fungal pathogen is fungal pathogen (I) as defined herein. In some embodiments, the use is crop-safe. In some embodiments, the use effectively treats the crop against fungal pathogen infection without causing significant phytotoxic harm to the crop. In some embodiments, the use effectively treats the crop against fungal pathogen infection without causing significant and/or measurable phytotoxic harm to the crop. In some embodiments, the use effectively treats the crop against fungal pathogen infection without causing concomitant phytotoxic harm to the crop. In some embodiments, the use effectively treats the crop against fungal pathogen infection without causing phytotoxic harm to the crop. In some embodiments, the use comprises applying solid particulates of the phthalimide fungicide to the crop or a locus thereof.

The present invention provides use of phthalimide fungicide for combating diseases caused by fungal pathogen (I) as defined herein on crop (A) as defined herein.

The present invention provides a use of an amount of phthalimide fungicide for controlling a fungal pathogen (I) as defined herein in crop (A) as defined herein.

The present invention provides a use of an amount of phthalimide fungicide for controlling fungal pathogen in sugar beet crop. In some embodiments, the fungal pathogen is Cercospora beticola. In some embodiments, the fungal pathogen is Cercospora sojina. In some embodiments, the fungal pathogen is Cercospora kikuchii. In some embodiments, the fungal pathogen is Ramularia beticola.

The present invention provides a use of an amount of phthalimide fungicide for controlling fungal pathogen in apple crop. In some embodiments, the fungal pathogen is Colletotrichum gloeosporioides. In some embodiments, the fungal pathogen is Colletotrichum sp. In some embodiments, the fungal pathogen is Venturia inaequalis.

The present invention provides a use of an amount of phthalimide fungicide for controlling fungal pathogen in olive crop. In some embodiments, the fungal pathogen is Colletotrichum gloeosporioides. In some embodiments, the fungal pathogen is Colletotrichum sp. In some embodiments, the fungal pathogen is Venturia oleagina. In some embodiments, the fungal pathogen is Phlyctema vagabunda.

The present invention provides a use of an amount of phthalimide fungicide for controlling fungal pathogen in banana crop. In some embodiments, the fungal pathogen is Pseudocercospora musae. In some embodiments, the fungal pathogen is Mycosphaerella fijiensis. In some embodiments, the fungal pathogen is Fusarium sp. In some embodiments, the fungal pathogen is Colletotrichum gloeosporioides. In some embodiments, the fungal pathogen is Colletotrichum sp.

The present invention provides a use of an amount of phthalimide fungicide for controlling fungal pathogen in corn crop. In some embodiments, the fungal pathogen is Cercospora zeae-maydis. In some embodiments, the fungal pathogen is Setosphaeria turcica. In some embodiments, the fungal pathogen is Cochliobolus heterostrophus. In some embodiments, the fungal pathogen is Cochliobolus carbonum. In some embodiments, the fungal pathogen is Ustilago maydis. In some embodiments, the fungal pathogen is Gibberella zeae. In some embodiments, the fungal pathogen is Fusarium sp.

The present invention provides a use of an amount of phthalimide fungicide for controlling fungal pathogen in sugarcane crop. In some embodiments, the fungal pathogen is Ustilago scitaminea. In some embodiments, the fungal pathogen is Helminthosporium sacchari. In some embodiments, the fungal pathogen is Fusarium sp.

The present invention provides a use of an amount of phthalimide fungicide for controlling fungal pathogen in sorghum crop. In some embodiments, the fungal pathogen is Puccinia sorghi. In some embodiments, the fungal pathogen is Fusarium sp.

The present invention provides a use of an amount of phthalimide fungicide for controlling fungal pathogen in rice crop. In some embodiments, the fungal pathogen is Rhizoctonia solani. In some embodiments, the fungal pathogen is Pyricularia oryzae. In some embodiments, the fungal pathogen is Cochliobolus miyabeanus. In some embodiments, the fungal pathogen is Fusarium sp.

The present invention provides a use of an amount of phthalimide fungicide for controlling fungal pathogen in coffee crop. In some embodiments, the fungal pathogen is Hemileia vastatrix. In some embodiments, the fungal pathogen is Gibberella xylarioides. In some embodiments, the fungal pathogen is Fusarium sp. In some embodiments, the fungal pathogen is Phakopsora gossypii.

In some embodiments, the fungal pathogen is Phakopsora gossypii in cotton crops.

The present invention provides a use of an amount of phthalimide fungicide for controlling fungal pathogen in cotton crop. In some embodiments, the fungal pathogen is Phakopsora gossypii. In some embodiments, the fungal pathogen is Puccinia schedonnardi. In some embodiments, the fungal pathogen is Puccinia cacabata. In some embodiments, the fungal pathogen is Ascochyta gossypiicola. In some embodiments, the fungal pathogen is Glomerella gossypii. In some embodiments, the fungal pathogen is Fusarium sp.

The present invention provides a use of an amount of phthalimide fungicide for controlling fungal pathogen in pulses crops. In some embodiments, the fungal pathogen is Ascochyta rabiei. In some embodiments, the fungal pathogen is Ascochyta pisi. In some embodiments, the fungal pathogen is Ascochyta fabae. In some embodiments, the fungal pathogen is Cercospora zonata. In some embodiments, the fungal pathogen is Uromyces vicia-fabae. In some embodiments, the fungal pathogen is Peronospora viciae. In some embodiments, the fungal pathogen is Botrytis cinerea. In some embodiments, the fungal pathogen is Sclerotinia sp. In some embodiments, the fungal pathogen is Fusarium sp.

The present invention provides a use of an amount of phthalimide fungicide for controlling fungal pathogen in OSR crop. In some embodiments, the fungal pathogen is Botrytis cinerea. In some embodiments, the fungal pathogen is Sclerotinia sp.

The present invention provides a use of an amount of phthalimide fungicide for controlling fungal pathogen in cocoa crop. In some embodiments, the fungal pathogen is Phytophthora sp. In some embodiments, the fungal pathogen is Colletotrichum gloeosporioides. In some embodiments, the fungal pathogen is Colletotrichum sp.

The present invention provides a use of an amount of phthalimide fungicide for controlling fungal pathogen in citrus crop. In some embodiments, the fungal pathogen is Colletotrichum sp. In some embodiments, the fungal pathogen is Colletotrichum gloeosporioides.

The present invention provides a use of an amount of phthalimide fungicide for controlling fungal pathogen in cherry crop. In some embodiments, the fungal pathogen is Colletotrichum sp. In some embodiments, the fungal pathogen is Colletotrichum gloeosporioides.

The present invention provides a use of an amount of phthalimide fungicide for controlling fungal pathogen in papaya crop. In some embodiments, the fungal pathogen is Colletotrichum sp. In some embodiments, the fungal pathogen is Colletotrichum gloeosporioides.

The present invention provides a use of an amount of phthalimide fungicide for controlling fungal pathogen in pitaya crop. In some embodiments, the fungal pathogen is Colletotrichum sp. In some embodiments, the fungal pathogen is Colletotrichum gloeosporioides.

The present invention provides a use of an amount of phthalimide fungicide for controlling fungal pathogen in mango crop. In some embodiments, the fungal pathogen is Colletotrichum sp. In some embodiments, the fungal pathogen is Colletotrichum gloeosporioides.

The present invention provides a use of an amount of phthalimide fungicide for controlling fungal pathogen in avocado crop. In some embodiments, the fungal pathogen is Colletotrichum sp. In some embodiments, the fungal pathogen is Colletotrichum gloeosporioides.

The present invention provides a use of an amount of phthalimide fungicide for controlling fungal pathogen in dragon fruit crop. In some embodiments, the fungal pathogen is Colletotrichum sp. In some embodiments, the fungal pathogen is Colletotrichum gloeosporioides.

The present invention provides a use of an amount of phthalimide fungicide for controlling fungal pathogen in guava crop. In some embodiments, the fungal pathogen is Colletotrichum sp. In some embodiments, the fungal pathogen is Colletotrichum gloeosporioides.

The present invention provides a use of an amount of phthalimide fungicide for controlling fungal pathogen in longan crop. In some embodiments, the fungal pathogen is Colletotrichum sp. In some embodiments, the fungal pathogen is Colletotrichum gloeosporioides.

The present invention provides a use of an amount of phthalimide fungicide for controlling fungal pathogen in litchi crop. In some embodiments, the fungal pathogen is Colletotrichum sp. In some embodiments, the fungal pathogen is Colletotrichum gloeosporioides.

The present invention provides a use of an amount of phthalimide fungicide for controlling fungal pathogen in durian crop. In some embodiments, the fungal pathogen is Colletotrichum sp. In some embodiments, the fungal pathogen is Colletotrichum gloeosporioides.

The present invention provides a use of an amount of phthalimide fungicide for controlling fungal pathogen in passion fruit crop. In some embodiments, the fungal pathogen is Colletotrichum sp. In some embodiments, the fungal pathogen is Colletotrichum gloeosporioides.

The present invention provides a use of an amount of phthalimide fungicide for controlling fungal pathogen in rambutan crop. In some embodiments, the fungal pathogen is Colletotrichum sp. In some embodiments, the fungal pathogen is Colletotrichum gloeosporioides.

The present invention provides a use of an amount of phthalimide fungicide for controlling fungal pathogen in mangosteen crop. In some embodiments, the fungal pathogen is Colletotrichum sp. In some embodiments, the fungal pathogen is Colletotrichum gloeosporioides.

The present invention provides a use of an amount of phthalimide fungicide for controlling fungal pathogen in chili crop. In some embodiments, the fungal pathogen is Colletotrichum sp. In some embodiments, the fungal pathogen is Colletotrichum gloeosporioides.

The present invention provides a use of an amount of phthalimide fungicide for controlling fungal pathogen in onion crop. In some embodiments, the fungal pathogen is Colletotrichum sp. In some embodiments, the fungal pathogen is Colletotrichum gloeosporioides.

The present invention provides a use of an amount of phthalimide fungicide for controlling fungal pathogen in soybean crop. In some embodiments, the fungal pathogen is Phakopsora pachyrhizi. In some embodiments, the fungal pathogen is Fusarium virguliforme. In some embodiments, the fungal pathogen is Cercospora sojina. In some embodiments, the fungal pathogen is Sclerotinia sclerotiorum. In some embodiments, the fungal pathogen is Phialophora gregata. In some embodiments, the fungal pathogen is Septoria glycines. In some embodiments, the fungal pathogen is Cercospora kikuchii. In some embodiments, the fungal pathogen is Colletotrichum truncatum. In some embodiments, the fungal pathogen is Corynespora cassiicola.

### Phthalimide fungicides

In some embodiments, the phthalimide fungicide is selected from the group consisting of captan, folpet, captafol, and any combination thereof.

In some embodiments, the phthalimide fungicide is captan.

In some embodiments, the phthalimide fungicide is folpet.

In some embodiments, the phthalimide fungicide is captafol.

In some embodiments, the phthalimide fungicide is a combination of captan and folpet.

In some embodiments, the phthalimide fungicide is a combination of captan and captafol.

In some embodiments, the phthalimide fungicide is a combination of captafol and folpet.

In some embodiments, the phthalimide fungicide is a combination of captan, folpet and captafol.

### Crop (A)

In some embodiments, crop (A) is selected from group consisting of sugar beet, olive, apple, citrus, cherry, banana, mango, papaya, pitaya, avocado, dragon fruit, guava, longan, litchi, durian, passion fruit, rambutan, mangosteen, cocoa, chili, onion, corn, sugarcane, sorghum, coffee, cotton, rice, pulses, chickpea, pea, broad bean, fava bean, oil seed rape (OSR), soybean, and any combination thereof.

In some embodiments, crop (A) is selected from group consisting of sugar beet, olive, apple, citrus, cherry, banana, mango, papaya, pitaya, avocado, dragon fruit, guava, longan, litchi, durian, passion fruit, rambutan, mangosteen, cocoa, chili, onion, corn, sugarcane, sorghum, coffee, cotton, rice, pulses, oil seed rape (OSR), soybean, and any combination thereof. In some embodiments, crop (A) is selected from group consisting of sugar beet, olive, apple, banana, coffee, pulses, oil seed rape (OSR), soybean, and any combination thereof.

In some embodiment, crop (A) is sugar beet. In some embodiment, crop (A) is olive. In some embodiment, crop (A) is apple. In some embodiments, crop (A) is citrus. In some embodiments, crop (A) is cherry. In some embodiment, crop (A) is banana. In some embodiment, the crop (A) is coffee. In some embodiment, crop (A) is pulses. In some embodiment, crop (A) is oil seed rape (OSR). In some embodiment, crop (A) is soybean. In some embodiments, crop (A) is mango. In some embodiments, crop (A) is papaya. In some embodiments, crop (A) is pitaya. In some embodiments, crop (A) is avocado. In some embodiments, crop (A) is dragon fruit. In some embodiments, crop (A) is guava. In some embodiments, crop (A) is longan. In some embodiments, crop (A) is litchi. In some embodiments, crop (A) is durian. In some embodiments, crop (A) is passion fruit. In some embodiments, crop (A) is rambutan. In some embodiments, crop (A) is mangosteen. In some embodiments, crop (A) is cocoa. In some embodiments, crop (A) is chili. In some embodiments, crop (A) is onion. In some embodiments, crop (A) is corn. In some embodiments, crop (A) is sugarcane. In some embodiments, crop (A) is sorghum. In some embodiments, crop (A) is cotton. In some embodiments, crop (A) is rice.

### Fungal Pathogen (I)

In some embodiments, fungal pathogen (I) is selected from group consisting of Cercospora beticola, Cercospora sojina, Cercospora kikuchii. Ramularia beticola, Venturia oleagina, Colletotrichum gloeosporioides, Colletotrichum sp., Colletotrichum truncatum, Pseudocercospora musae, Mycosphaerella fijiensis, Cercospora zeae-maydis, Setosphaeria turcica, Cochliobolus heterostrophus, Cochliobolus carbonum, Ustilago maydis, Phialophora gregata, Gibberella zeae, Ustilago scitaminea, Helminthosporium sacchari, Puccinia sorghi, Hemileia vastatrix, Gibberella xylarioides, Septoria glycines, Phakopsora gossypii, Phakopsora pachyrhizi, Phlyctema vagabunda, Puccinia schedonnardi, Puccinia cacabata, Corynespora cassiicola, Ascochyta gossypiicola, Glomerella gossypii, Rhizoctonia solani, Pyricularia oryzae, Cochliobolus miyabeanus, Ascochyta rabiei, Ascochyta pisi, Ascochyta fabae, Cercospora zonata, Uromyces vicia-fabae, Peronospora viciae, Botrytis cinerea, Fusarium sp., Fusarium virguliforme, Sclerotinia sp., Sclerotinia sclerotiorum, Phytophthora sp., Venturia inaequalis, Mycosphaerella fijiensis and any combination thereof.

In some embodiments, fungal pathogen (I) is selected from group consisting of Cercospora beticola, Ramularia beticola, Venturia oleagina, Colletotrichum gloeosporioides, Colletotrichum sp., Pseudocercospora musae, Mycosphaerella fijiensis, Cercospora zeae-maydis, Setosphaeria turcica, Cochliobolus heterostrophus, Cochliobolus carbonum, Ustilago maydis, Gibberella zeae, Ustilago scitaminea, Helminthosporium sacchari, Puccinia sorghi, Hemileia vastatrix, Gibberella xylarioides, Phakopsora gossypii, Phakopsora pachyrhizi, Puccinia schedonnardi, Puccinia cacabata, Ascochyta gossypiicola, Glomerella gossypii, Rhizoctonia solani, Pyricularia oryzae, Cochliobolus miyabeanus, Ascochyta rabiei, Cercospora zonata, Uromyces vicia-fabae, Peronospora viciae, Botrytis cinerea, Fusarium sp., Sclerotinia sp., Phytophthora sp., Venturia inaequalis and any combination thereof. In some embodiments, fungal pathogen (I) is selected from group consisting of Cercospora beticola, Ramularia beticola, Venturia oleagina, Colletotrichum gloeosporioides, Phlyctema vagabunda, Venturia inaequalis, Pseudocercospora musae, Mycosphaerella fijiensis (or Pseudocercospora fijiensis), Phakopsora gossypii, Ascochyta rabiei, Ascochyta pisi, Ascochyta fabae, Peronospora viciae, Sclerotinia sp., Phakopsora pachyrhizi, and any combination thereof.

In some embodiments, fungal pathogen (I) is Cercospora beticola. In some embodiments, fungal pathogen (I) is Ramularia beticola. In some embodiments, fungal pathogen (I) is Venturia oleagina. In some embodiments, fungal pathogen (I) is Colletotrichum gloeosporioides. In some embodiments, fungal pathogen (I) is Phlyctema vagabunda. In some embodiments, fungal pathogen (I) is Venturia inaequalis. In some embodiments, fungal pathogen (I) is Pseudocercospora musae. In some embodiments, fungal pathogen (I) is Mycosphaerella fijiensis (or Pseudocercospora fijiensis). In some embodiments, fungal pathogen (I) is Phakopsora gossypii. In some embodiments, fungal pathogen (I) is Ascochyta rabiei. In some embodiments, fungal pathogen (I) is Ascochyta pisi. In some embodiments, fungal pathogen (I) is Ascochyta fabae. In some embodiments, fungal pathogen (I) is Peronospora viciae. In some embodiments, fungal pathogen (I) is Sclerotinia sp. In some embodiments, fungal pathogen (I) is Phakopsora pachyrhizi. In some embodiments, fungal pathogen (I) is Cercospora sojina. In some embodiments, fungal pathogen (I) is Cercospora kikuchii. In some embodiments, fungal pathogen (I) is Colletotrichum sp. In some embodiments, fungal pathogen (I) is Cercospora zeae-maydis. In some embodiments, fungal pathogen (I) is Setosphaeria turcica. In some embodiments, fungal pathogen (I) is Cochliobolus heterostrophus. In some embodiments, fungal pathogen (I) is Cochliobolus carbonum. In some embodiments, fungal pathogen (I) is Ustilago maydis. In some embodiments, fungal pathogen (I) is Gibberella zeae. In some embodiments, fungal pathogen (I) is Ustilago scitaminea. In some embodiments, fungal pathogen (I) is Helminthosporium sacchari. In some embodiments, fungal pathogen (I) is Puccinia sorghi. In some embodiments, fungal pathogen (I) is Hemileia vastatrix. In some embodiments, fungal pathogen (I) is Gibberella xylarioides. In some embodiments, fungal pathogen (I) is Puccinia schedonnardi. In some embodiments, fungal pathogen (I) is Puccinia cacabata. In some embodiments, fungal pathogen (I) is Ascochyta gossypiicola. In some embodiments, fungal pathogen (I) is Glomerella gossypii. In some embodiments, fungal pathogen (I) is Rhizoctonia solani. In some embodiments, fungal pathogen (I) is Pyricularia oryzae. In some embodiments, fungal pathogen (I) is Cochliobolus miyabeanus. In some embodiments, fungal pathogen (I) is Cercospora zonata. In some embodiments, fungal pathogen (I) is Uromyces vicia-fabae. In some embodiments, fungal pathogen (I) is Botrytis cinerea. In some embodiments, fungal pathogen (I) is Fusarium sp. In some embodiments, fungal pathogen (I) is Phytophthora sp.

### Diseases Caused by Fungal Pathogens

In some embodiments, the disease caused by fungal pathogen on crop is selected from the group consisting of cercospora leaf spot, leaf spot of beet, Ramularia Leaf Spot, peacock spot of olive, olive anthracnose, leprosy of olive or leaf and shoot lesions of olive, apple scab, yellow sigatoka of banana, black sigatoka of banana, black leaf streak disease of banana, rust of cotton, blight of chickpea, blight of pea, blight of broad bean, ascochyta blight in peas lentils or fava beans, downy mildew of legumes, peas etc., sclerotinia stem rot or white mold of oilseed rape, Asian soybean rust, cotton rust of cotton, sudden death syndrome, frogeye leaf spot, black spot of apple, white mold, brown stem rot, brown spot of soybean, purple blotch of soybean, soybean anthracnose, target spot on soybean, and any combination thereof.

In some embodiments, the disease is cercospora leaf spot. In some embodiments, the disease is leaf spot of beet. In some embodiments, the disease is Ramularia Leaf Spot. In some embodiments, the disease is peacock spot of olive. In some embodiments, the disease is olive anthracnose. In some embodiments, the disease is leprosy of olive. In some embodiments, the disease is leaf and shoot lesions of olive. In some embodiments, the disease is apple scab. In some embodiments, the disease is yellow sigatoka of banana. In some embodiments, the disease is black sigatoka of banana. In some embodiments, the disease is black leaf streak disease of banana. In some embodiments, the disease is rust of cotton. In some embodiments, the disease is blight of chickpea. In some embodiments, the disease is blight of pea. In some embodiments, the disease is blight of broad bean. In some embodiments, the disease is ascochyta blight in peas lentils or fava beans. In some embodiments, the disease is downy mildew of legumes, peas, etc. In some embodiments, the disease is sclerotinia stem rot or white mold of oilseed rape. In some embodiments, the disease is Asian soybean rust. In some embodiments, the disease is cotton rust of cotton. In some embodiments, the disease is sudden death syndrome. In some embodiments, the disease is frogeye leaf spot. In some embodiments, the disease is black spot of apple. In some embodiments, the disease is white mold. In some embodiments, the disease is brown stem rot. In some embodiments, the disease is brown spot of soybean. In some embodiments, the disease is purple blotch of soybean. In some embodiments, the disease is soybean anthracnose. In some embodiments, the disease is target spot on soybean.

Cercospora beticola causes the disease Cercospora leaf spot in sugar beet. Ramularia beticola causes the disease leaf spot in sugar beet. Venturia oleagina causes the disease peacock spot in olive. Colletotrichum gloeosporioides cause the disease olive anthracnose. Phlyctema vagabunda causes the disease leprosy of olive or leaf and shoot lesions of olive. Venturia inaequalis causes apple scab. Pseudocercospora musae causes yellow sigatoka in banana. Mycosphaerella fijiensis (or Pseudocercospora fijiensis) causes black sigatoka in banana. Phakopsora gossypii causes rust of cotton. Ascochyta rabiei causes blight of chickpea. Ascochyta pisi causes blight of pea. Ascochyta fabae causes blight of broad bean. Peronospora viciae causes downy mildew of legumes. Sclerotinia sp. causes Sclerotinia stem rot or white mold of OSR. Phakopsora pachyrhizi causes Asian soybean rust. Fusarium virguliforme causes sudden death syndrome in soybean. Cercospora sojina causes frogeye leaf spot in soybean. Sclerotinia sclerotiorum causes white mold in soybean. Phialophora gregata causes brown stem rot in soybean. Septoria glycines causes brown spot of soybean. Cercospora kikuchii causes purple blotch of soybean. Colletotrichum truncatum causes soybean anthracnose. Corynespora cassiicola causes target spot on soybean.

### Preferred Combinations for Specific Fungal Pathogens, Fungal Diseases, and/or Crops

In some embodiments, fungal pathogen (I) is Pseudocercospora musae in banana. In some embodiments, fungal pathogen (I) is Mycosphaerella fijiensis in banana. In some embodiments, fungal pathogen (I) is Cercospora zeae-maydis in corn. In some embodiments, fungal pathogen (I) is Setosphaeria turcica in corn. In some embodiments, fungal pathogen (I) is Cochliobolus heterostrophus in corn. In some embodiments, fungal pathogen (I) is Cochliobolus carbonum in corn. In some embodiments, fungal pathogen (I) is Ustilago maydis in corn. In some embodiments, fungal pathogen (I) is Gibberella zeae in corn. In some embodiments, fungal pathogen (I) is Ustilago scitaminea in sugarcane. In some embodiments, fungal pathogen (I) is Helminthosporium sacchari in sugarcane. In some embodiments, fungal pathogen (I) is Puccinia sorghi in sorghum. In some embodiments, fungal pathogen (I) is Hemileia vastatrix in coffee. In some embodiments, fungal pathogen (I) is Gibberella xylarioides in coffee. In some embodiments, fungal pathogen (I) is Phakopsora gossypii in cotton. In some embodiments, fungal pathogen (I) is Puccinia schedonnardi in cotton. In some embodiments, fungal pathogen (I) is Puccinia cacabata in cotton. In some embodiments, fungal pathogen (I) is Ascochyta gossypiicola in cotton. In some embodiments, fungal pathogen (I) is Glomerella gossypii in cotton. In some embodiments, fungal pathogen (I) is Rhizoctonia solani in rice. In some embodiments, fungal pathogen (I) is Pyricularia oryzae in rice. In some embodiments, fungal pathogen (I) is Cochliobolus miyabeanus in rice. In some embodiments, fungal pathogen (I) is Ascochyta rabiei in pulses. In some embodiments, fungal pathogen (I) is Cercospora zonata in pulses. In some embodiments, fungal pathogen (I) is Uromyces vicia-fabae in pulses. In some embodiments, fungal pathogen (I) is Peronospora viciae in pulses. In some embodiments, fungal pathogen (I) is Botrytis cinerea in pulses and OSR. In some embodiments, fungal pathogen (I) is Fusarium sp. in corn. In some embodiments, fungal pathogen (I) is Fusarium sp. in rice. In some embodiments, fungal pathogen (I) is Fusarium sp. in sugarcane. In some embodiments, fungal pathogen (I) is Fusarium sp. in sorghum. In some embodiments, fungal pathogen (I) is Fusarium sp. in banana. In some embodiments, fungal pathogen (I) is Fusarium sp. in cotton. In some embodiments, fungal pathogen (I) is Fusarium sp. in coffee. In some embodiments, fungal pathogen (I) is Fusarium sp. in pulses. In some embodiments, fungal pathogen (I) is Sclerotinia sp. in OSR and pulses. In some embodiments, fungal pathogen (I) is Phytophthora sp. in cocoa. In some embodiments, fungal pathogen (I) is Cercospora beticola in sugar beet. In some embodiments, fungal pathogen (I)is Cercospora sojina in sugar beet. In some embodiments, fungal pathogen (I)is Cercospora kikuchii in sugar beet. In some embodiments, fungal pathogen (I)is Ramularia beticola in sugar beet. In some embodiments, fungal pathogen (I) is Colletotrichum gloeosporioides in apple. In some embodiments, fungal pathogen (I) is Colletotrichum sp. in apple. In some embodiments, fungal pathogen (I) is Colletotrichum gloeosporioides in olive. in some embodiments, fungal pathogen (I) is Colletotrichum sp. in olive. In some embodiments, fungal pathogen (I) is Venturia oleagina in olive. In some embodiments, fungal pathogen (I) is Phlyctema vagabunda in olive. In some embodiments, fungal pathogen (I) is Colletotrichum gloeosporioides in citrus. In some embodiments, fungal pathogen (I) is Colletotrichum sp. in citrus.In some embodiments, fungal pathogen (I) is Colletotrichum gloeosporioides in cherry. In some embodiments, fungal pathogen (I) is Colletotrichum sp. in cherry. In some embodiments, fungal pathogen (I) is Colletotrichum gloeosporioides in banana. In some embodiments, fungal pathogen (I) is Colletotrichum sp. in banana. In some embodiments, fungal pathogen (I) is Colletotrichum gloeosporioides in papaya. In some embodiments, fungal pathogen (I) is Colletotrichum sp. in papaya. In some embodiments, fungal pathogen (I) is Colletotrichum gloeosporioides in pitaya. In some embodiments, fungal pathogen (I) is Colletotrichum sp. in pitaya. In some embodiments, fungal pathogen (I) is Colletotrichum gloeosporioides in mango. In some embodiments, fungal pathogen (I) is Colletotrichum sp. in mango. In some embodiments, fungal pathogen (I) is Colletotrichum gloeosporioides in avocado. In some embodiments, fungal pathogen (I) is Colletotrichum sp. in avocado. In some embodiments, fungal pathogen (I) is Colletotrichum gloeosporioides in dragon fruit. In some embodiments, fungal pathogen (I) is Colletotrichum sp. in dragon fruit. In some embodiments, fungal pathogen (I) is Colletotrichum gloeosporioides in guava. In some embodiments, fungal pathogen (I) is Colletotrichum sp. in guava. In some embodiments, fungal pathogen (I) is Colletotrichum gloeosporioides in longan. In some embodiments, fungal pathogen (I) is Colletotrichum sp. in longan. In some embodiments, fungal pathogen (I) is Colletotrichum gloeosporioides in litchi. In some embodiments, fungal pathogen (I) is Colletotrichum sp. in litchi. In some embodiments, fungal pathogen (I) is Colletotrichum gloeosporioides in durian. In some embodiments, fungal pathogen (I) is Colletotrichum sp. in durian. In some embodiments, fungal pathogen (I) is Colletotrichum gloeosporioides in passion fruit. In some embodiments, fungal pathogen (I) is Colletotrichum sp. in passion fruit. In some embodiments, fungal pathogen (I) is Colletotrichum gloeosporioides in rambutan. In some embodiments, fungal pathogen (I) is Colletotrichum sp. in rambutan. In some embodiments, fungal pathogen (I) is Colletotrichum gloeosporioides in mangosteen. In some embodiments, fungal pathogen (I) is Colletotrichum sp. in mangosteen. In some embodiments, fungal pathogen (I) is Colletotrichum gloeosporioides in cocoa. In some embodiments, fungal pathogen (I) is Colletotrichum sp. in cocoa. In some embodiments, fungal pathogen (I) is Colletotrichum gloeosporioides in chilli. In some embodiments, fungal pathogen (I) is Colletotrichum sp. in chilli. In some embodiments, fungal pathogen (I) is Colletotrichum gloeosporioides in onion. In some embodiments, fungal pathogen (I) is Colletotrichum sp. in onion. In some embodiments, fungal pathogen (I) is Phakopsora pachyrhizi in soybean. In some embodiments, fungal pathogen (I) is Venturia inaequalis in apple.

In some embodiments, fungal pathogen (I) is Pseudocercospora musae and crop (A) is banana. In some embodiments, fungal pathogen (I) is Mycosphaerella fijiensis and crop (A) is banana. In some embodiments, fungal pathogen (I) is Cercospora zeae-maydis and crop (A) is corn. In some embodiments, fungal pathogen (I) is Setosphaeria turcica and crop (A) is corn. In some embodiments, fungal pathogen (I) is Cochliobolus heterostrophus and crop (A) is corn. In some embodiments, fungal pathogen (I) is Cochliobolus carbonum and crop (A) is corn. In some embodiments, fungal pathogen (I) is Ustilago maydis and crop (A) is corn. In some embodiments, fungal pathogen (I) is Gibberella zeae and crop (A) is corn. In some embodiments, fungal pathogen (I) is Ustilago scitaminea and crop (A) is sugarcane, In some embodiments, fungal pathogen (I) is Helminthosporium sacchari and crop (A) is sugarcane. In some embodiments, fungal pathogen (I) is Puccinia sorghi and crop (A) is sorghum. In some embodiments, fungal pathogen (I) is Hemileia vastatrix and crop (A) is coffee. In some embodiments, fungal pathogen (I) is Gibberella xylarioides and crop (A) is coffee. In some embodiments, fungal pathogen (I) is Phakopsora gossypii and crop (A) is cotton. In some embodiments, fungal pathogen (I) is Puccinia schedonnardi and crop (A) is cotton. In some embodiments, fungal pathogen (I) is Puccinia cacabata and crop (A) is cotton. In some embodiments, fungal pathogen (I) is Ascochyta gossypiicola and crop (A) is cotton. In some embodiments, fungal pathogen (I) is Glomerella gossypii and crop (A) is cotton. In some embodiments, fungal pathogen (I) is Rhizoctonia solani and crop (A) is rice. In some embodiments, fungal pathogen (I) is Pyricularia oryzae and crop (A) is rice. In some embodiments, fungal pathogen (I) is Cochliobolus miyabeanus and crop (A) is rice. In some embodiments, fungal pathogen (I) is Ascochyta rabiei and crop (A) is pulses. In some embodiments, fungal pathogen (I) is Ascochyta pisi and crop (A) is pulses. In some embodiments, fungal pathogen (I) is Ascochyta fabae and crop (A) is pulses. In some embodiments, fungal pathogen (I) is Cercospora zonata in pulses. In some embodiments, fungal pathogen (I) is Uromyces vicia-fabae and crop (A) is pulses. In some embodiments, fungal pathogen (I) is Peronospora viciae and crop (A) is pulses. In some embodiments, fungal pathogen (I) is Botrytis cinerea and crop (A) is pulses and OSR. In some embodiments, fungal pathogen (I) is Fusarium sp. and crop (A) is corn. In some embodiments, fungal pathogen (I) is Fusarium sp. and crop (A) is rice. In some embodiments, fungal pathogen (I) is Fusarium sp. and crop (A) is sugarcane. In some embodiments, fungal pathogen (I) is Fusarium sp. and crop (A) is sorghum. In some embodiments, fungal pathogen (I) is Fusarium sp. and crop (A) is banana. In some embodiments, fungal pathogen (I) is Fusarium sp. and crop (A) is cotton. In some embodiments, fungal pathogen (I) is Fusarium sp. and crop (A) is coffee. In some embodiments, fungal pathogen (I) is Fusarium sp. and crop (A) is pulses. In some embodiments, fungal pathogen (I) is Sclerotinia sp. and crop (A) is OSR. In some embodiments, fungal pathogen (I) is Sclerotinia sp. and crop (A) is pulses. In some embodiments, fungal pathogen (I) is Phytophthora sp. and crop (A) is cocoa. In some embodiments, fungal pathogen (I) is Cercospora beticola and crop (A) is sugar beet. In some embodiments, fungal pathogen (I) is Cercospora sojina and crop (A) is sugar beet. In some embodiments, fungal pathogen (I) is Cercospora kikuchii and crop (A) is sugar beet. In some embodiments, fungal pathogen (I) is Ramularia beticola and crop (A) is sugar beet. In some embodiments, fungal pathogen (I) is Colletotrichum gloeosporioides and crop (A) is apple. In some embodiments, fungal pathogen (I) is Colletotrichum sp. and crop (A) is apple. In some embodiments, fungal pathogen (I) is Colletotrichum gloeosporioides and crop (A) is olive. In some embodiments, fungal pathogen (I) is Colletotrichum sp. and crop (A) is olive. In some embodiments, fungal pathogen (I) is Venturia oleagina and crop (A) is olive. In some embodiments, fungal pathogen (I) is Phlyctema vagabunda and crop (A) is olive. In some embodiments, fungal pathogen (I) is Colletotrichum gloeosporioides and crop (A) is citrus. In some embodiments, fungal pathogen (I) is Colletotrichum sp. and crop (A) is citrus. In some embodiments, fungal pathogen (I) is Colletotrichum gloeosporioides and crop (A) is cherry. In some embodiments, fungal pathogen (I) is Colletotrichum sp. and crop (A) is cherry. In some embodiments, fungal pathogen (I) is Colletotrichum gloeosporioides and crop (A) is banana. In some embodiments, fungal pathogen (I) is Colletotrichum sp. and crop (A) is banana. In some embodiments, fungal pathogen (I) is Colletotrichum gloeosporioides and crop (A) is papaya. In some embodiments, fungal pathogen (I) is Colletotrichum sp. and crop (A) is papaya. In some embodiments, fungal pathogen (I) is Colletotrichum gloeosporioides and crop (A) is pitaya. In some embodiments, fungal pathogen (I) is Colletotrichum sp. and crop (A) is pitaya. In some embodiments, fungal pathogen (I) is Colletotrichum gloeosporioides and crop (A) is mango. In some embodiments, fungal pathogen (I) is Colletotrichum sp. and crop (A) is mango. In some embodiments, fungal pathogen (I) is Colletotrichum gloeosporioides and crop (A) is avocado. In some embodiments, fungal pathogen (I) is Colletotrichum sp. and crop (A) is avocado. In some embodiments, fungal pathogen (I) is Colletotrichum gloeosporioides and crop (A) is dragon fruit. In some embodiments, fungal pathogen (I) is Colletotrichum sp. and crop (A) is dragon fruit. In some embodiments, fungal pathogen (I) is Colletotrichum gloeosporioides and crop (A) is guava. In some embodiments, fungal pathogen (I) is Colletotrichum sp. and crop (A) is guava. In some embodiments, fungal pathogen (I) is Colletotrichum gloeosporioides and crop (A) is longan. In some embodiments, fungal pathogen (I) is Colletotrichum sp. and crop (A) is longan. In some embodiments, fungal pathogen (I) is Colletotrichum gloeosporioides and crop (A) is litchi. In some embodiments, fungal pathogen (I) is Colletotrichum sp. and crop (A) is litchi. In some embodiments, fungal pathogen (I) is Colletotrichum gloeosporioides and crop (A) is durian. In some embodiments, fungal pathogen (I) is Colletotrichum sp. and crop (A) is durian. In some embodiments, fungal pathogen (I) is Colletotrichum gloeosporioides and crop (A) is passion fruit. In some embodiments, fungal pathogen (I) is Colletotrichum sp. and crop (A) is passion fruit. In some embodiments, fungal pathogen (I) is Colletotrichum gloeosporioides and crop (A) is rambutan. In some embodiments, fungal pathogen (I) is Colletotrichum sp. and crop (A) is rambutan. In some embodiments, fungal pathogen (I) is Colletotrichum gloeosporioides and crop (A) is mangosteen. In some embodiments, fungal pathogen (I) is Colletotrichum sp. and crop (A) is mangosteen. In some embodiments, fungal pathogen (I) is Colletotrichum gloeosporioides and crop (A) is cocoa. In some embodiments, fungal pathogen (I) is Colletotrichum sp. and crop (A) is cocoa. In some embodiments, fungal pathogen (I) is Colletotrichum gloeosporioides and crop (A) is chili. In some embodiments, fungal pathogen (I) is Colletotrichum sp. and crop (A) is chili. In some embodiments, fungal pathogen (I) is Colletotrichum gloeosporioides and crop (A) is onion. In some embodiments, fungal pathogen (I) is Colletotrichum sp. and crop (A) is onion. In some embodiments, fungal pathogen (I) is Venturia inaequalis and crop (A) is apple.

In some embodiments, fungal pathogen (I) is Phakopsora pachyrhizi and crop (A) is soybean. In some embodiments, fungal pathogen (I) is Fusarium virguliforme and crop (A) is soybean. In some embodiments, fungal pathogen (I) is Cercospora sojina and crop (A) is soybean. In some embodiments, fungal pathogen (I) is Sclerotinia sclerotiorum and crop (A) is soybean. In some embodiments, fungal pathogen (I) is Phialophora gregata and crop (A) is soybean. In some embodiments, fungal pathogen (I) is Septoria glycines and crop (A) is soybean. In some embodiments, fungal pathogen (I) is Cercospora kikuchii and crop (A) is soybean. In some embodiments, fungal pathogen (I) is Colletotrichum truncatum and crop (A) is soybean. In some embodiments, fungal pathogen (I) is Corynespora cassiicola and crop (A) is soybean.

### Preferred Combinations of Specific Fungal Pathogens, Fungal Diseases, Crops and Application Rates

In some embodiments, crop (A) and fungal pathogen (I) listed in Table A are treated with folpet and/or captan.

In some embodiments, crop (A) and fungal pathogen (I) listed in Table A are treated with folpet.

In some embodiments, crop (A) and fungal pathogen (I) listed in Table A are treated with captan.

In some embodiments, crop (A), fungal pathogen (I) and the application rate is any one of the combinations of crop (A), fungal pathogen (I) and the application rate or preferred application rate listed in Table A.

In some embodiments, crop (A), fungal pathogen (I), disease, and the application rate is any one of the combinations of crop (A), fungal pathogen (I), disease, and the application rate or preferred application rate listed in Table A.

In some embodiments, crop (A), fungal pathogen (I), disease, and the application rate is any one of the combinations of crop (A), fungal pathogen (I), disease, and the application rate or preferred application rate listed in Table A, and the phthalimide fungicide is folpet.

In some embodiments, crop (A), fungal pathogen (I), disease, and the application rate is any one of the combinations of crop (A), fungal pathogen (I), disease, and the application rate or preferred application rate listed in Table A, and the phthalimide fungicide is captan.

In some embodiments, crop (A), fungal pathogen (I), disease, the application rate and number of applications is any one of the combinations of crop (A), fungal pathogen (I), disease, the application rate or preferred application rate, and number of applications listed in Table A.

In some embodiments, crop (A), fungal pathogen (I), disease, the application rate and number of applications is any one of the combinations of crop (A), fungal pathogen (I), disease, the application rate or preferred application rate, and number of applications listed in Table A, and the phthalimide fungicide is folpet.

In some embodiments, crop (A), fungal pathogen (I), disease, the application rate and number of applications is any one of the combinations of crop (A), fungal pathogen (I), disease, the application rate or preferred application rate, and number of applications listed in Table A, and the phthalimide fungicide is captan.

In some embodiments, crop (A), fungal pathogen (I), disease, the application rate, number of applications and crop application stage is any one of the combinations of crop (A), fungal pathogen (I), disease, the application rate or preferred application rate, number of applications and crop application stage listed in Table A.

In some embodiments, crop (A), fungal pathogen (I), disease, the application rate, number of applications and crop application stage is any one of the combinations of crop (A), fungal pathogen (I), disease, the application rate or preferred application rate, number of applications and crop application stage listed in Table A, and the phthalimide fungicide is folpet.

In some embodiments, crop (A), fungal pathogen (I), disease, the application rate, number of applications and crop application stage is any one of the combinations of crop (A), fungal pathogen (I), disease, the application rate or preferred application rate, number of applications and crop application stage listed in Table A, and the phthalimide fungicide is captan.

**Table A.**

| Crop (A) | Fungal Pathogen (I) | Disease | Application rate (gAI/ha) | Preferred rate (gAI/ha) | # applications & crop application stage |
|---|---|---|---|---|---|
| Sugar beet | cercospora beticola | Cercospora leaf spot | 500 - 1500 | 750 - 1000 | 1 to 5 |
| Sugar beet | ramularia beticola | Leaf spot of beet | 500 - 1500 | 750 - 1000 | 1 to 5 |
| olive | Venturia oleagina | peacock spot of olive | 500 - 1500 | 750 - 1000 | 1 to 2, from post-harvest to flowering |
| olive | Colletotrichum gloeosporioides | olive anthracnose | 500 - 1500 | 750 - 1000 | 1 to 2, from post-harvest to flowering |
| olive | Phlyctema vagabunda | leprosy of olive or Leaf and Shoot Lesions of Olive | 500 - 1500 | 750 - 1000 | 1 to 2, from post-harvest to flowering |
| apple | Venturia inaequalis | Apple scab | 750 - 1250 | 750 - 1000 | 1 to 8 |
| banana | Pseudocercospora musae | yellow Sigatoka | 500 - 1000 | n/a | 1 to 15 |
| banana | Mycosphaerella fijiensis (preferred name Pseudocercospora fijiensis) | black Sigatoka | 500 - 1000 | n/a | 1 to 15 |
| cotton | Phakopsora gossypii | rust of cotton | 500 - 1000 | n/a | |
| pulses | Ascochyta rabiei | blight of chickpea | 500 - 1000 | n/a | |
| pulses | Ascochyta pisi | blight of pea | 500 - 1000 | n/a | |
| pulses | Ascochyta fabae | blight of broad bean | 500 - 1000 | n/a | |
| pulses | Peronospora viciae | downy mildew of legumes | 500 - 1000 | n/a | |
| OSR | Sclerotinia sp. | Sclerotinia stem rot or white mold | 500 - 1000 | n/a | |
| soybean | Phakopsora pachyrhizi | Asian soybean rust | 500 - 1500 | 500 - 1000 | |

In some embodiments of the treatments in Table A, no measurable phytotoxic harm to the crop results.

The present method, use or composition may include additional crop protection agents, for example insecticides, herbicides, bactericides, nematicides, molluscicides, growth regulators, biological agents, fertilizers, or mixtures thereof.

Each embodiment disclosed herein is contemplated as being applicable to each of the other disclosed embodiments. Thus, all combinations of the various elements described herein are within the scope of the invention. In addition, the elements recited in the method embodiments can be used in the composition and use embodiments described herein and vice versa.

The following examples illustrate the practice of the present subject matter in some of its embodiments but should not be construed as limiting the scope of the present subject matter. Other embodiments will be apparent to one skilled in the art from consideration of the specification and examples. It is intended that the specification, including the examples, is considered exemplary only without limiting the scope and spirit of the present subject matter.

It is of importance to note that in all evaluations of the inventive methods of treatment, combating and/or controlling fungal infestation, no significant or measurable phytotoxic harm was observed in the crops where solid particulate phthalimide compositions were applied to the crop and the compositions can be referred to as crop-safe compositions. Aqueous suspension compositions of solid particulate phthalimide are crop-safe for the methods herein disclosed.

It is of importance to note that in evaluations of the inventive methods of treating, combating, and/or controlling fungal infestation in apple and banana crops, a surprising greening effect was reported.

### EXAMPLE 1

An experiment was conducted to evaluate the fungicidal activity of the phthalimide group fungicides (captan and folpet) toward *Cercospora beticola, Cercospora sojina, Cercospora kikuchii* in sugar beet, Chicago variety, in protected conditions.

The experiment was conducted by applying compositions of captan and folpet (Stavento^{®}), both in the form of aqueous suspension concentrates (SC) with suspended solid particulate phthalimide particles. The treatments are summarized in Table 1 below.

**Table 1. Treatment List**

| Treatment No. | Treatment name | Formulation | Dose rates (g a.i./ha) |
|---|---|---|---|
| 1 | UNTREATED CHECK | - | - |
| 2 | MERPAN SC | CAPTAN 480 SC | 749 |
| 3 | STAVENTO | FOLPET 500 SC | 750 |
| 4 | STAVENTO | FOLPET 500 SC | 1000 |
| 5 | THIOPRON GOLD | SULPHUR 825 SC | 4125 |

To test for fungicidal control of *Cercospora beticola,* the plants were sprayed with each of the above treatments. Each of the above treatments were applied in preventative conditions. The treatments were composed of 4 replicates. All treatments were applied in a track spray chamber using a water volume equivalent to 500 L. A total of 2 applications with 14 days interval were done. An artificial inoculation was done the day after the first application by spraying the inoculum solution at the concentration of 1x10⁶ cfu/ml on the leaves.

Disease assessments were performed for the whole duration of the experiment. At each time, 25 leaves per plot were examined for disease symptoms. The fungicide efficacy was determined from the intensity and results were presented in percent of the untreated control. Statistically significant differences were evaluated with ANOVA and Student-Newman-Keuls test with an alpha level of 0.05. The results are shown in Table 2 below.

**Table 2. Fungicidal Efficacy of Treatments**

| Treatment No. | Formulation | Dose rates (g a.i./ha) | Fungicide efficacy vs. *Cercospora beticola* (% control) |
|---|---|---|---|
| 1 | UNTREATED CHECK | - | - |
| 2 | CAPTAN 480 SC | 749 | 77 |
| 3 | FOLPET 500 SC | 750 | 84 |
| 4 | FOLPET 500 SC | 1000 | 93 |
| 5 | SULPHUR 825 SC | 4125 | 82 |

Results showed that phthalimide group fungicides provide a very good fungicidal efficacy against *Cercospora beticola* when applied with preventative timing at the lower tested rate of 750 g a.i./ha.

### EXAMPLE 2

An experiment is conducted to evaluate the fungicidal activity of the phthalimide group fungicides (captan and folpet) toward *Ramularia beticola* in sugar beet, Chicago variety, in protected conditions.

The experiment is conducted by applying compositions of captan and folpet in the form of aqueous suspensions with suspended solid particulate phthalimide particles. The treatments are summarized in Table 3 below.

**Table 3. Treatment List**

| Treatment No. | Treatment name | Formulation | Dose rates (g a.i./ha) |
|---|---|---|---|
| 1 | UNTREATED CHECK | - | - |
| 2 | MERPAN SC | CAPTAN 480 SC | 749 |
| 3 | STAVENTO | FOLPET 500 SC | 500 |
| 4 | STAVENTO | FOLPET 500 SC | 750 |
| 5 | STAVENTO | FOLPET 500 SC | 1000 |
| 6 | NORDOX 75 WG | COPPER OXIDE 750 WG | 1500 |

To test for fungicidal control of *Ramularia beticola,* the plants are sprayed with each of the above treatments. Each of the above treatments is applied in preventative conditions. The treatments are composed of 4 replicates. The experimental design is a randomized complete block design. Statistically significant differences are assessed with ANOVA followed by Student-Newman-Keuls test with an alpha level of 0.05. Where two means share the same alphabetical notation, they are not significantly different.

Evaluations are performed for the whole duration of the experiment. At each time, 25 leaves per plot are examined for symptoms incidence and severity on leaves is determined. Results are presented as the percentage of control based on severity rating with a maximum of 100%.

Results show that phthalimide fungicide controls the disease.

### EXAMPLE 3

An experiment was conducted to evaluate the fungicidal activity of the phthalimide group fungicides (folpet and captan) toward *Venturia oleagina* (*Spilocea oleagina*) in olive.

The experiment was conducted by applying compositions of captan containing 800 g/kg or 480 g/kg of captan and folpet (containing 800 g/kg of folpet. The treatments are summarized in Tables 4 and 5 below.

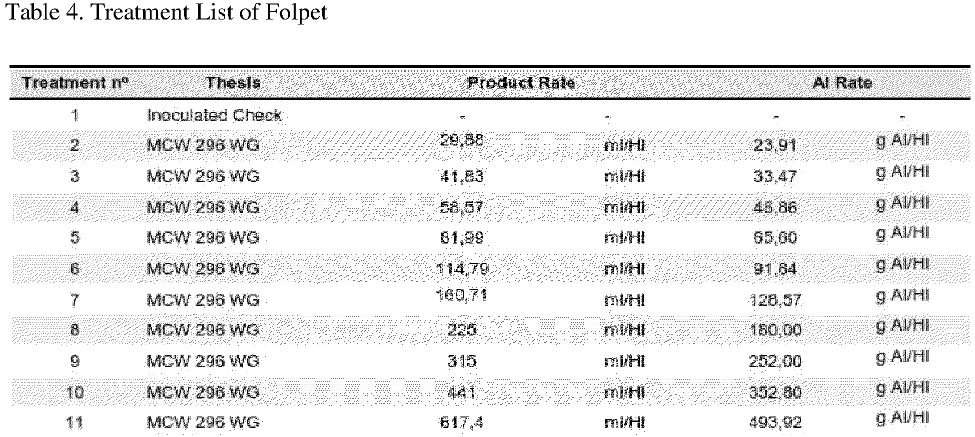

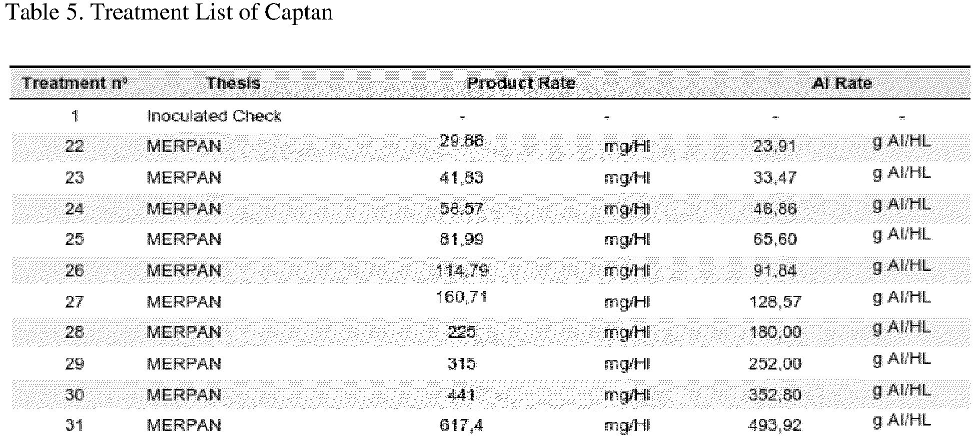

Olive leaves with natural *Spilocaea oleagina* infestation were collected in field and taken to the laboratory. Subsequently, they were cut and washed in sterile water to obtain an aqueous solution with high concentrations of conidia. By using a hematocytometer, the conidia were quantified and the concentration per ml was calculated. In 9 cm diameter Petri dishes, 5-10 ml of 2% Agar-Water was added. Once cold and solidified, coverslips were placed on solidified medium.

Two drops of 20 µl (mix product and conidia) were deposited on coverslip, 3 replicates (coverslip) per dose were done. The plates were sealed with paraffin and kept at 15-20° C in the dark. One assessment at 4 days after incubation was done.

Germinated conidia were recorded per replicate. A total of 100 conidia per replicate were counted.

Analysis of Variance (ANOVA) and a Bartlett test to assume the homogeneity of the treatment variances were performed on each assessment (ANNEX I), using the software ARM (Agricultural Research Management). Data were analyzed using ANOVA. A multiple comparison test (detailed in the specific result tables) with a confidence level of 95% was applied to separate any significant treatment. These are eventually indicated by a letter: treatment means with at least one letter in common are not significantly different. Non germinated conidia percentage was transformed in efficacy percentage values using the Abbott's transformation.

LD30, LD50, LD80 and LC90 were calculated using the software PoloPlus (Probit and Logit Analysis. LeOra Software; Version 1.0; 2002-2018). Probit analysis was done considering 'Natural Response' as a parameter and converting the doses to logarithms. A confidence interval of 95% were considered.

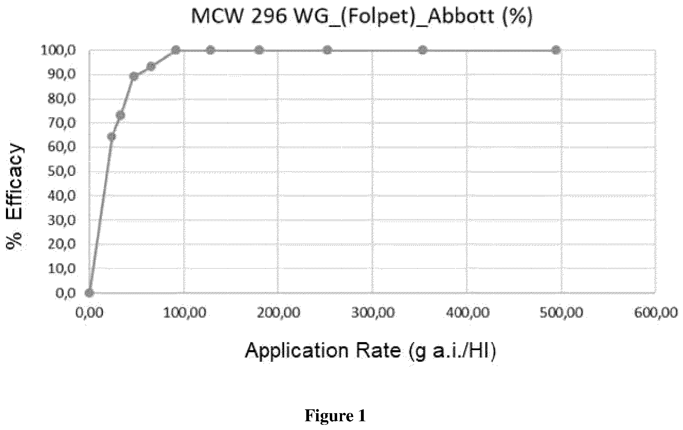

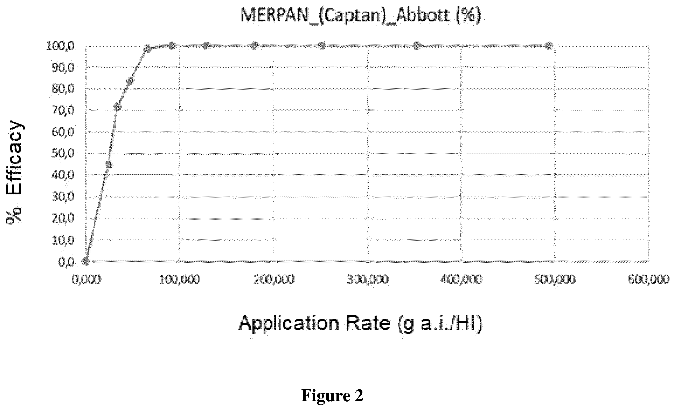

The results are shown in Tables 6 and 7, and Figures 1 and 2.

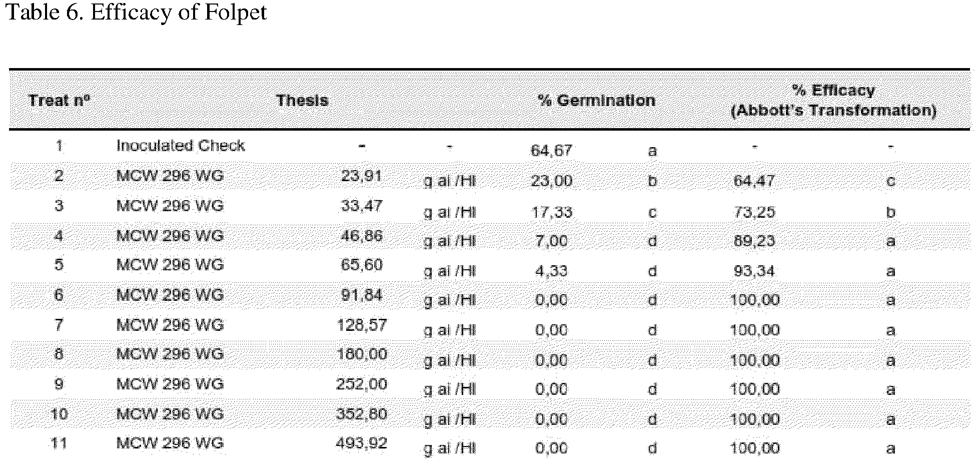

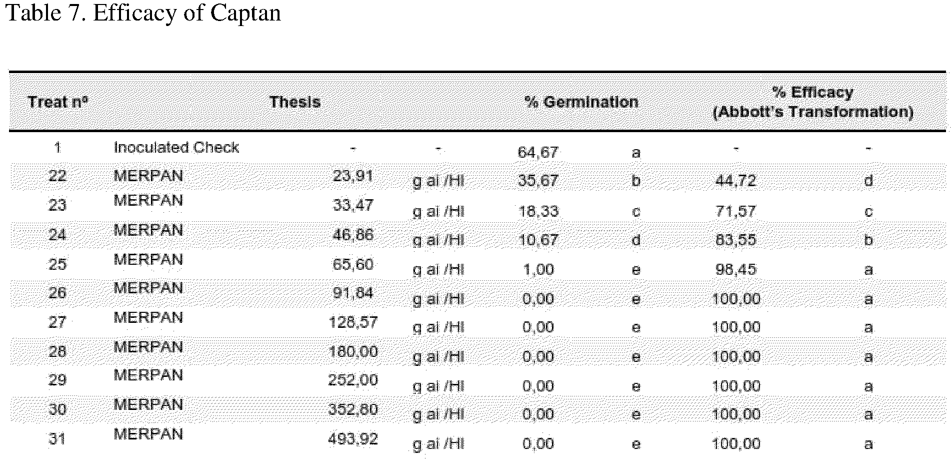

The highest germination percentages were observed in Inoculated Check (64.67%), with values significantly higher than observed in all tested treatments. It was observed both fungicides belonging to the phthalimide group provided very good disease control at the very low concentrations.

### EXAMPLE 4

An experiment was conducted to evaluate the fungicidal activity of the phthalimide group fungicide (folpet) toward *Phlyctema vagabunda.*

The experiment was conducted by applying compositions of folpet (MCW-296 WG). The candidate product, formulation, active ingredient loading and rate for each treatment are listed in Table 8 below.

**Table 8. Treatment List**

| Treatment | Product | Formulation | grams product/ hL | grams active/ha |
|---|---|---|---|---|
| 1 | UNTREATED CHECK | - | - | - |
| 2 | MCW-296 WG | Folpet 800 g/kg WG | 47 | 375 |
| 3 | MCW-296 WG | Folpet 800 g/kg WG | 94 | 750 |
| 6 | MCW-296 WG | Folpet 800 g/kg WG | 188 | 1500 |
| 7 | Orius | Tebuconazole 200 g/L SC | 45 | 90 |
| 8 | Cuprosan | Copper Oxichloride 500 g/kg WG | 400 | 2000 |

The evaluation of the efficacy against *Phlyctema vagabunda,* agent of the leprosy of the olive tree, was carried out on apple, as this is a species susceptible to said pathogen and that allows an adequate development of symptoms and evaluation of active ingredients of control (Romero et al., 2018).

Wounds were made on the apples (cv. Golden Delicious) with a sterile 7 mm diameter punch and prior to inoculation. The products to be evaluated were applied by spraying. The inoculation was carried out by inserting into the wounds agar discs with mycelium of the growing fungus active. Three replicates (apple plants) were set per each experimental combination, with three wounds per apple, in a completely random design. The evaluation of the disease was performed by measuring the diameter of the necrotic lesions produced by the fungus, in comparison with an inoculated control, 20 days after inoculation. Two commercial products were included as reference. I analysis of variance and test of comparison of means were performed on the data using the Statistix 9 program (Analytical Software, 2008). The results are shown in Table 9 below.

**Table 9. Fungicidal Efficacy of Folpet**

| Treatment | Product | Fungicide efficacy % control) |
|---|---|---|
| 1 | UNTREATED CHECK | |
| 2 | MCW-296 WG | 48 |
| 3 | MCW-296 WG | 78 |
| 4 | MCW-296 WG | 78 |
| 5 | Orius | 70 |
| 6 | Cuprosan | 74 |

Product MCW-296 WG (folpet) differed significantly from the control. With Orius and Cuprosan products, included as a reference, also managed to reduce significantly the parameter considered.

The product MCW-296 (folpet) showed an effect against *Phlyctema vagabunda* infection, at the highest doses tested, with similar efficacy to the reference products, tebuconazole and copper oxychloride.

### EXAMPLE 5

An experiment is conducted to evaluate the fungicidal activity of the phthalimide group fungicides (captan and folpet) toward *Colletotrichum sp.* in citrus.

The experiment is conducted by applying compositions of captan (Merpan^{®} 80 WDG or Merpan^{®} 480 SC) and/or folpet (folpan 80 WDG^{®} or Stavento^{®}). The compositions are diluted with water.

Treatments:
Captan 500, 750, 1000, 1200, 1500 gr (A.I.)/ha
Folpet 500, 750, 1000, 1200, 1500 gr (A.I.)/ha

To test for fungicidal control of Colletotrichum sp., the plants are sprayed with each of the above treatments. Each of the above treatments are applied in preventative conditions. The treatments are composed of 4 replicates. The experimental design is a randomized complete block design. Statistically significant differences are assessed with ANOVA followed by Student-Newman-Keuls test with an alpha level of 0.05. Where two means share the same alphabetical notation, they are not significantly different.

Evaluations are performed for the whole duration of the experiment. At each time, 25 leaves per plot are examined for symptoms incidence and severity on leaves is determined. Results are presented as the percentage of control based on severity rating with a maximum of 100%.

Results show that the phthalimide fungicide controls the disease.

### EXAMPLE 6

An experiment is conducted to evaluate the fungicidal activity of the phthalimide group fungicides (captan and folpet) toward *Colletotrichum sp.* in banana.

The experiment is conducted by applying compositions of captan (Merpan^{®} 80 WDG or Merpan^{®} 480 SC) and/or folpet (folpan 80 WDG^{®} or Stavento^{®}). The compositions are diluted with water.

Treatments:
Captan 750, 1000, 1200, 1500 gr (A.I.)/ha Folpet 750, 1000, 1200, 1500 gr (A.I.)/ha

To test for fungicidal control of *Colletotrichum sp.,* the plants are sprayed with each of the above treatments. Each of the above treatments are applied in preventative conditions. The treatments are composed of 4 replicates. The experimental design is a randomized complete block design. Statistically significant differences are assessed with ANOVA followed by Student-Newman-Keuls test with an alpha level of 0.05. Where two means share the same alphabetical notation, they are not significantly different.

Evaluations are performed for the whole duration of the experiment. At each time, 25 leaves per plot are examined for symptoms incidence and severity on leaves is determined. Results are presented as the percentage of control based on severity rating with a maximum of 100%.

Results show that the phthalimide fungicide controls the disease.

### EXAMPLE 7

An experiment was conducted to evaluate the fungicidal activity of the phthalimide group fungicide (folpet) toward *Pseudocercospora musae* (Yellow sigatoka) in banana, cv. Cavendish.

The experiment was conducted by applying compositions of folpet (MCW-296 SC). The candidate product, formulation, active ingredient loading and rate for each treatment are listed in Table 10 below.

**Table 10. Treatment List**

| Treatment | Product | Formulation | grams active applied ha | Product ha |
|---|---|---|---|---|
| 1 | Untreated Control | Untreated | - | - |
| 2 | Soprano | Epoxiconazole 125 g/L SC | 75 | 0.6 |
| 3 | Score | Difenoconazole 250 g/L EC | 100 | 0.4 |
| 4 | Penncozeb DF | Mancozeb 750 g/kg DF | 1650 | 2.2 |
| 5 | MCW 296 SC | Folpet 500 g/L SC | 1000 | 2 |
| 6 | Solaris | Cyprodinil 300 g/L SC | 300 | 1 |

Plots were sprayed with a backpack mister which was calibrated for a water rate of 300 L/ha. Plants were sprayed to just prior to run-off and plots were sprayed on either side of each row. Application was consistent with commercial spray use. There were no conditions that would have compromised spray application.

Experimental design was conducted under a randomized complete block design. Treatments were replicated four (4) times. Plot size was 10 plants with 8 datum plants per plot. An untreated buffer row was located on at least one side of plots to further insure disease pressure and potential infection and minimize potential drift.

Efficacy was assessed as Disease Severity Index (DSI) on 8 datum plants per plot and 2 plants served as buffers between treatments.

Data was analyzed using the Statistical program of Agricultural Research Manager (ARM) v 9.1. Data was analyzed using an ANOVA at the 95% confidence interval. The results are shown in Table 11 below.

**Table 11.**

| Rating | | | DSI | |
|---|---|---|---|---|
| DAA-A | | | 130 | |
| Trt No. | Treatment Name | Rate ga/ha | | |
| 1 | Untreated Control | | 36.06 | a |
| 2 | Soprano | 75 | 16.02 | bcd |
| 3 | Score | 100 | 14.03 | d |
| 4 | Pencozeb | 1650 | 26.01 | b |
| 5 | MCW 296 SC | 1000 | 9.56 | d |
| 6 | Solaris | 300 | 14.91 | cd |

All candidate treatments provided an equivalent level of crop safety to currently registered banana fungicides. There was no adverse crop safety finding.

It was also observed that the banana plant treated with folpet displayed a distinct greening effect as compared to the untreated banana plant and the banana plant treated with mancozeb.

It was also observed, *inter alia,* that the banana plant treated with folpet had greener leaves than the untreated banana plant and the banana plant treated with mancozeb. Greener leaves allow improved efficiency of photosynthesis that is expected to translate into better yield and better plant health.

Folpet 500 SC was a standout treatment with an exceptionally high level of control compared to the other fungicides tested without any noted phytotoxic effects.

### EXAMPLE 8a

An experiment was conducted to evaluate the fungicidal activity of the phthalimide group fungicide (folpet) toward *Mycosphaerella fijiensis* (black sigatoka) in banana, variety Willliams.

The experiment was conducted by applying compositions of folpet (Lanzador^{®}). The candidate product, formulation, active ingredient loading and rate for each treatment are listed in Table 12 below.

**Table 12. Treatment List Treatment list:**

| Treatment No. | Treatment name | Formulation | Dose rates fp. L or kg/ha | g a.i./ha |
|---|---|---|---|---|
| 1 | UNTREATED CHECK | - | - | - |
| 2 | LANZADOR | FOLPET 500 SC | 1 | 500 |
| 3 | LANZADOR | FOLPET 500 SC | 1.25 | 625 |
| 4 | LANZADOR | FOLPET 500 SC | 1.5 | 750 |
| 5 | LANZADOR | FOLPET 500 SC | 1.75 | 875 |
| 6 | DITHANE 600 | MANCOZEB 600 | 1.75 | 1050 |

To test for fungicidal control of *Mycosphaerella fijiensis* the trial was realized in open field. Plants were sprayed with each of the above treatments with a volume of water equivalent to 80 L/ha. Each of the above treatments was applied once when plants were showing a disease infection of 5%. The treatments composed of 4 replicates. The experimental design was a randomized complete block design. Data was analyzed using an ANOVA at the 95% confidence interval.

Evaluations were performed for the whole duration of the experiment. The level of infection was determined based on the weighted average of infection (PPI) using the Stover scale modified by Gaulh on 5 plants per plot. The results are shown in Table 13 below.

**Table 13.**

| Treatment No. | Formulation | Dose rates (g a.i./ha) | PPI | Stat | Fungicide efficacy |
|---|---|---|---|---|---|
| 1 | - | - | 2.72 | c | - |
| 2 | FOLPET 500 SC | 500 | 0.7 | b | 63.46 |
| 3 | FOLPET 500 SC | 625 | 0.64 | b | 68.52 |
| 4 | FOLPET 500 SC | 750 | 0.49 | a | 80.02 |
| 5 | FOLPET 500 SC | 875 | 0.48 | a | 80.44 |
| 6 | MANCOZEB 600 | 1050 | 0.5 | a | 77.41 |

Results showed folpet was able to provide a good control of black sigatoka disease at low doses of 500 and 625 g a.i./ha. The efficacy at the dose of 750 g a.i./ha was already comparable to the one provided by the reference product based on mancozeb.

### EXAMPLE 8b

An experiment was conducted to evaluate the fungicidal activity of the phthalimide group fungicide (folpet) toward *Mycosphaerella fijiensis* (black sigatoka) in banana.

The experiment was conducted by applying compositions of folpet (Lanzador^{®}). The candidate product, formulation, active ingredient loading and rate for each treatment are listed in Table 14 below.

**Table 14. Treatment List**

| Treatment No. | Treatment name | Formulation | Dose rates fp. L or kg/ha | g a.i./ha |
|---|---|---|---|---|
| 1 | UNTREATED CHECK | - | - | - |
| 2 | LANZADOR | FOLPET 500 SC | 1.7 | 850 |
| 3 | VONDOZEB 62 SC | MANCOZEB 620 SC | 1.94 | 1202 |

To test fungicidal control of *Mycosphaerella fijiensis,* the trial was realized in open field. The plants were sprayed with each of the above treatments with a volume of water equivalent to 23 L/ha. All treatments were applied in a water solution: no mineral oil added.

Experimental unit consisted of 9 banana plants surrounded by *Musa textilis,* a variety tolerant to Black Sigatoka, used as border plants. The trial followed a complete randomized design, each treatment was replicated three times.

Applications were done every 6 days. All treatments had 12 applications.

The total leaves per plant was evaluated. A high number of leaves at harvest translates to more capability keep the fruit in post-harvest.

Treatment response to black Sigatoka was evaluated using the Stover scale modified by Gauhl.

The statistical analysis was done with INFOSTAT program, using a multiple comparison test (LSD) for every parameter.

The results are shown in Table 15 below.

**Table 15.**

| Treatment No. | Formulation | Dose rates (g a.i./ha) | Total number of leaves |
|---|---|---|---|
| 1 | UNTREATED CHECK | - | 5.5 |
| 2 | LANZADOR | 850 | 6.2 |
| 3 | VONDOZEB 62 SC | 1202 | 6.0 |

Results showed folpet was able to allow plants to maintain a higher number of leaves per plant in comparison to the untreated and the standard reference product based on mancozeb.

Results also showed that the banana plant treated with folpet displayed a notable greening effect. The banana plant treated with folpet had greener leaves than the untreated banana plant and the banana plant treated with mancozeb.

Higher number of leaves and greener leaves allow improved efficiency of photosynthesis that is expected to translate into better yield and better plant health.

### EXAMPLE 9

An experiment is conducted to evaluate the fungicidal activity of the phthalimide group fungicides (captan and folpet) toward Cercospora zeae-maydis in corn.

The experiment is conducted by applying compositions of captan (Merpan^{®} 80 WDG or Merpan^{®} 480 SC) and/or folpet (folpan 80 WDG^{®} or Stavento^{®}). The compositions are diluted with water.

Treatments:
Captan 500, 750, 1000 gr (A.I.)/ha
Folpet 500, 750, 1000 gr (A.I.)/ha

To test for fungicidal control of Cercospora zeae-maydis, the plants are sprayed with each of the above treatments. Each of the above treatments are applied in preventative conditions. The treatments are composed of 4 replicates. The experimental design is a randomized complete block design. Statistically significant differences are assessed with ANOVA followed by Student-Newman-Keuls test with an alpha level of 0.05. Where two means share the same alphabetical notation, they are not significantly different.

Evaluations are performed for the whole duration of the experiment. At each time, 25 leaves per plot are examined for symptoms incidence and severity on leaves is determined. Results are presented as the percentage of control based on severity rating with a maximum of 100%.

Results show that phthalimide controls the disease.

### EXAMPLE 10

An experiment is conducted to evaluate the fungicidal activity of the phthalimide group fungicides (captan, folpet) toward *Setosphaeria turcica* in corn.

The experiment is conducted by applying compositions of captan (Merpan^{®} 80 WDG or Merpan^{®} 480 SC) and/or folpet (folpan 80 WDG^{®} or Stavento^{®}). The compositions are diluted with water.

Treatments:
Captan 500, 750, 1000 gr (A.I.)/ha
Folpet 500, 750, 1000 gr (A.I.)/ha

To test for fungicidal control of Setosphaeria turcica, the plants are sprayed with each of the above treatments. Each of the above treatments are applied in preventative conditions. The treatments are composed of 4 replicates. The experimental design is a randomized complete block design. Statistically significant differences are assessed with ANOVA followed by Student-Newman-Keuls test with an alpha level of 0.05. Where two means share the same alphabetical notation, they are not significantly different.

Evaluations are performed for the whole duration of the experiment. At each time, 25 leaves per plot are examined for symptoms incidence and severity on leaves is determined. Results are presented as the percentage of control based on severity rating with a maximum of 100%.

Results show that phthalimide controls the disease.

### EXAMPLE 11

An experiment is conducted to evaluate the fungicidal activity of the phthalimide (captan, folpet) toward Cochliobolus heterostrophus in corn.

The experiment is conducted by applying compositions of captan (Merpan^{®} 80 WDG or Merpan^{®} 480 SC) and/or folpet (folpan 80 WDG^{®} or Stavento^{®}). The compositions are diluted with water.

Treatments:
Captan 500, 750, 1000 gr (A.I.)/ha
Folpet 500, 750, 1000 gr (A.I.)/ha

To test for fungicidal control of Cochliobolus heterostrophus, the plants are sprayed with each of the above treatments. Each of the above treatments are applied in preventative conditions. The treatments are composed of 4 replicates. The experimental design is a randomized complete block design. Statistically significant differences are assessed with ANOVA followed by Student-Newman-Keuls test with an alpha level of 0.05. Where two means share the same alphabetical notation, they are not significantly different.

Evaluations are performed for the whole duration of the experiment. At each time, 25 leaves per plot are examined for symptoms incidence and severity on leaves is determined. Results are presented as the percentage of control based on severity rating with a maximum of 100%.

Results show that phthalimide controls the disease.

### EXAMPLE 12

An experiment is conducted to evaluate the fungicidal activity of the phthalimide (captan, folpet) toward Helminthosporium sacchari in sugarcane.

The experiment is conducted by applying compositions of captan (Merpan^{®} 80 WDG or Merpan^{®} 480 SC) and/or folpet (folpan 80 WDG^{®} or Stavento^{®}). The compositions are diluted with water.

Treatments:
Captan 500, 750, 1000 gr (A.I.)/ha
Folpet 500, 750, 1000 gr (A.I.)/ha

To test for fungicidal control of Helminthosporium sacchari, the plants are sprayed with each of the above treatments. Each of the above treatments are applied in preventative conditions. The treatments are composed of 4 replicates. The experimental design is a randomized complete block design. Statistically significant differences are assessed with ANOVA followed by Student-Newman-Keuls test with an alpha level of 0.05. Where two means share the same alphabetical notation, they are not significantly different.

Evaluations are performed for the whole duration of the experiment. At each time, 25 leaves per plot are examined for symptoms incidence and severity on leaves is determined. Results are presented as the percentage of control based on severity rating with a maximum of 100%.

Results show that phthalimide controls the disease.

### EXAMPLE 13

An experiment is conducted to evaluate the fungicidal activity of the phthalimide (captan, folpet) toward Hemileia vastatrix in coffee.

The experiment is conducted by applying compositions of captan (Merpan^{®} 80 WDG or Merpan^{®} 480 SC) and/or folpet (folpan 80 WDG^{®} or Stavento^{®}). The compositions are diluted with water.

Treatments:
Captan 500, 750, 1000, 1200, 1500 gr (A.I.)/ha
Folpet 500, 750, 1000, 1200, 1500 gr (A.I.)/ha

To test for fungicidal control of Hemileia vastatrix, the plants are sprayed with each of the above treatments. Each of the above treatments are applied in preventative conditions. The treatments are composed of 4 replicates. The experimental design is a randomized complete block design. Statistically significant differences are assessed with ANOVA followed by Student-Newman-Keuls test with an alpha level of 0.05. Where two means share the same alphabetical notation, they are not significantly different.

Evaluations are performed for the whole duration of the experiment. At each time, 25 leaves per plot are examined for symptoms incidence and severity on leaves is determined. Results are presented as the percentage of control based on severity rating with a maximum of 100%.

Results show that phthalimide controls the disease.

### EXAMPLE 14

An experiment is conducted to evaluate the fungicidal activity of the phthalimide (captan, folpet) toward Phakopsora gossypii in cotton.

The experiment is conducted by applying compositions of captan (Merpan^{®} 80 WDG or Merpan^{®} 480 SC) and/or folpet (folpan 80 WDG^{®} or Stavento^{®}). The compositions are diluted with water.

Treatments:
Captan 500, 750, 1000 gr (A.I.)/ha
Folpet 500, 750, 1000 gr (A.I.)/ha

To test for fungicidal control of Phakopsora gossypii, the plants are sprayed with each of the above treatments. Each of the above treatments are applied in preventative conditions. The treatments are composed of 4 replicates. The experimental design is a randomized complete block design. Statistically significant differences are assessed with ANOVA followed by Student-Newman-Keuls test with an alpha level of 0.05. Where two means share the same alphabetical notation, they are not significantly different.

Evaluations are performed for the whole duration of the experiment. At each time, 25 leaves per plot are examined for symptoms incidence and severity on leaves is determined. Results are presented as the percentage of control based on severity rating with a maximum of 100%.

Results show that phthalimide controls the disease.

### EXAMPLE 15

An experiment is conducted to evaluate the fungicidal activity of the phthalimide (captan, folpet) toward Ascochyta gossypiicola in cotton.

The experiment is conducted by applying compositions of captan (Merpan^{®} 80 WDG or Merpan^{®} 480 SC) and/or folpet (folpan 80 WDG^{®} or Stavento^{®}). The compositions are diluted with water.

Treatments:
Captan 500, 750, 1000 gr (A.I.)/ha
Folpet 500, 750, 1000 gr (A.I.)/ha

To test for fungicidal control of Ascochyta gossypiicola, the plants are sprayed with each of the above treatments. Each of the above treatments are applied in preventative conditions. The treatments are composed of 4 replicates. The experimental design is a randomized complete block design. Statistically significant differences are assessed with ANOVA followed by Student-Newman-Keuls test with an alpha level of 0.05. Where two means share the same alphabetical notation, they are not significantly different.

Evaluations are performed for the whole duration of the experiment. At each time, 25 leaves per plot are examined for symptoms incidence and severity on leaves is determined. Results are presented as the percentage of control based on severity rating with a maximum of 100%.

Results show that phthalimide controls the disease.

### EXAMPLE 16

An experiment is conducted to evaluate the fungicidal activity of the phthalimide (captan, folpet) toward Rhizoctonia solani in rice.

The experiment is conducted by applying compositions of captan (Merpan^{®} 80 WDG or Merpan^{®} 480 SC) and/or folpet (folpan 80 WDG^{®} or Stavento^{®}). The compositions are diluted with water.

Treatments:
Captan 500, 750, 1000, 1200, 1500 gr (A.I.)/ha
Folpet 500, 750, 1000, 1200, 1500 gr (A.I.)/ha

To test for fungicidal control of Rhizoctonia solani, the plants are sprayed with each of the above treatments. Each of the above treatments are applied in preventative conditions. The treatments are composed of 4 replicates. The experimental design is a randomized complete block design. Statistically significant differences are assessed with ANOVA followed by Student-Newman-Keuls test with an alpha level of 0.05. Where two means share the same alphabetical notation, they are not significantly different.

Evaluations are performed for the whole duration of the experiment. At each time, 25 leaves per plot are examined for symptoms incidence and severity on leaves is determined. Results are presented as the percentage of control based on severity rating with a maximum of 100%.

Results show that phthalimide controls the disease.

### EXAMPLE 17

An experiment is conducted to evaluate the fungicidal activity of the phthalimide (captan, folpet) toward Pyricularia oryzae in rice.

The experiment is conducted by applying compositions of captan (Merpan^{®} 80 WDG or Merpan^{®} 480 SC) and/or folpet (folpan 80 WDG^{®} or Stavento^{®}). The compositions are diluted with water.

Treatments:
Captan 500, 750, 1000, 1200, 1500 gr (A.I.)/ha
Folpet 500, 750, 1000, 1200, 1500 gr (A.I.)/ha

To test for fungicidal control of Pyricularia oryzae, the plants are sprayed with each of the above treatments. Each of the above treatments are applied in preventative conditions. The treatments are composed of 4 replicates. The experimental design is a randomized complete block design. Statistically significant differences are assessed with ANOVA followed by Student-Newman-Keuls test with an alpha level of 0.05. Where two means share the same alphabetical notation, they are not significantly different.

Evaluations are performed for the whole duration of the experiment. At each time, 25 leaves per plot are examined for symptoms incidence and severity on leaves is determined. Results are presented as the percentage of control based on severity rating with a maximum of 100%.

Results show that phthalimide controls the disease.

### EXAMPLE 18

An experiment is conducted to evaluate the fungicidal activity of the phthalimide group fungicide (folpet) toward Ascochyta rabiei in pulses.

The experiment is conducted by applying composition of folpet (MCW-296 SC). The candidate product, formulation, active ingredient loading and rate for each treatment are listed in Table 16 below.

**Table 16. Treatment List**

| Treatment No. | Treatment name | Formulation | Dose rates fp. L or kg/ha | g a.i./ha |
|---|---|---|---|---|
| 1 | UNTREATED CHECK | - | - | - |
| 2 | MCW-296 SC | FOLPET 500 SC | 1 | 500 |
| 3 | MCW-296 SC | FOLPET 500 SC | 1.5 | 750 |
| 4 | MCW-296 SC | FOLPET 500 SC | 2 | 1000 |
| 5 | Standard reference | | | |

To test for fungicidal control of Ascochyta rabiei, the plants are sprayed with each of the above treatments. Each of the above treatments are applied in preventative conditions. The treatments are composed of 4 replicates. The experimental design is a randomized complete block design. Statistically significant differences are assessed with ANOVA followed by Student-Newman-Keuls test with an alpha level of 0.05. Where two means share the same alphabetical notation, they are not significantly different.

Evaluations are performed for the whole duration of the experiment. At each time, 25 leaves per plot are examined for symptoms incidence and severity on leaves is determined. Results are presented as the percentage of control based on severity rating with a maximum of 100%.

Results show that phthalimide controls the disease.

### EXAMPLE 19

An experiment is conducted to evaluate the fungicidal activity of the phthalimide group fungicide (folpet) toward Sclerotinia sp.in pulses.

The experiment is conducted by applying compositions of (MCW-296 SC). The candidate product, formulation, active ingredient loading and rate for each treatment are listed in Table 17 below.

**Table 17. Treatment List**

| Treatment No. | Treatment name | Formulation | Dose rates fp. L or kg/ha | g a.i./ha |
|---|---|---|---|---|
| 1 | UNTREATED CHECK | - | - | - |
| 2 | MCW-296 SC | FOLPET 500 SC | 1 | 500 |
| 3 | MCW-296 SC | FOLPET 500 SC | 1.5 | 750 |
| 4 | MCW-296 SC | FOLPET 500 SC | 2 | 1000 |
| 5 | Standard reference | | | |

To test for fungicidal control of Sclerotinia sp., Sclerotinia sclerotiorum, the plants are sprayed with each of the above treatments. Each of the above treatments are applied in preventative conditions. The treatments are composed of 4 replicates. The experimental design is a randomized complete block design. Statistically significant differences are assessed with ANOVA followed by Student-Newman-Keuls test with an alpha level of 0.05. Where two means share the same alphabetical notation, they are not significantly different.

Evaluations are performed for the whole duration of the experiment. At each time, 25 leaves per plot are examined for symptoms incidence and severity on leaves is determined. Results are presented as the percentage of control based on severity rating with a maximum of 100%.

Results show that phthalimide controls the disease.

### EXAMPLE 20

An experiment is conducted to evaluate the fungicidal activity of the phthalimide group fungicide (folpet) toward Botrytis cinerea in pulses.

The experiment is conducted by applying a suspension composition of solid particulate folpet in aqueous carrier (MCW-296 SC). The candidate product, formulation, active ingredient loading and rate for each treatment are listed in Table 18 below.

**Table 18. Treatment List**

| Treatment No. | Treatment name | Formulation | Dose rates fp. L or kg/ha | g a.i./ha |
|---|---|---|---|---|
| 1 | UNTREATED CHECK | - | - | - |
| 2 | MCW-296 SC | FOLPET 500 SC | 1 | 500 |
| 3 | MCW-296 SC | FOLPET 500 SC | 1.5 | 750 |
| 4 | MCW-296 SC | FOLPET 500 SC | 2 | 1000 |
| 5 | Standard reference | | | |

To test for fungicidal control of Botrytis cinerea, the plants are sprayed with each of the above treatments. Each of the above treatments are applied in preventative conditions. The treatments are composed of 4 replicates. The experimental design is a randomized complete block design. Statistically significant differences are assessed with ANOVA followed by Student-Newman-Keuls test with an alpha level of 0.05. Where two means share the same alphabetical notation, they are not significantly different.

Evaluations are performed for the whole duration of the experiment. At each time, 25 leaves per plot are examined for symptoms incidence and severity on leaves is determined. Results are presented as the percentage of control based on severity rating with a maximum of 100%.

Results show that phthalimide controls the disease.

### EXAMPLE 21

An experiment is conducted to evaluate the fungicidal activity of the phthalimide group fungicides (captan, folpet) toward Botrytis cinerea in OSR.

The experiment is conducted by applying compositions of captan (Merpan^{®} 80 WDG or Merpan^{®} 480 SC) and/or folpet (folpan 80 WDG^{®} or Stavento^{®}). The compositions are diluted with water.

Treatments:
Captan 500, 750, 1000 gr (A.I.)/ha
Folpet 500, 750, 1000 gr (A.I.)/ha

To test for fungicidal control of Botrytis cinerea, the plants are sprayed with each of the above treatments. Each of the above treatments are applied in preventative conditions. The treatments are composed of 4 replicates. The experimental design is a randomized complete block design. Statistically significant differences are assessed with ANOVA followed by Student-Newman-Keuls test with an alpha level of 0.05. Where two means share the same alphabetical notation, they are not significantly different.

Evaluations are performed for the whole duration of the experiment. At each time, 25 leaves per plot are examined for symptoms incidence and severity on leaves is determined. Results are presented as the percentage of control based on severity rating with a maximum of 100%.

Results show that phthalimide controls the disease.

### EXAMPLE 22

An experiment is conducted to evaluate the fungicidal activity of the phthalimide (captan, folpet) toward Phytophthora sp. in cocoa.

The experiment is conducted by applying compositions of captan (Merpan^{®} 80 WDG or Merpan^{®} 480 SC) and/or folpet (folpan 80 WDG^{®} or Stavento^{®}). The compositions are diluted with water.

Treatments:
Captan 500, 750, 1000, 1200, 1500 gr (A.I.)/ha
Folpet 500, 750, 1000, 1200, 1500 gr (A.I.)/ha

To test for fungicidal control of Phytophthora sp., the plants are sprayed with each of the above treatments. Each of the above treatments are applied in preventative conditions. The treatments are composed of 4 replicates. The experimental design is a randomized complete block design. Statistically significant differences are assessed with ANOVA followed by Student-Newman-Keuls test with an alpha level of 0.05. Where two means share the same alphabetical notation, they are not significantly different.

Evaluations are performed for the whole duration of the experiment. At each time, 25 leaves per plot are examined for symptoms incidence and severity on leaves is determined. Results are presented as the percentage of control based on severity rating with a maximum of 100%.

Results show that phthalimide controls the disease.

### EXAMPLE 23

An experiment is conducted to evaluate the fungicidal activity of solid particulate compositions of the phthalimide group fungicide (captan, folpet) toward Sclerotinia sp. in soybean.

The experiment is conducted by applying compositions of captan (Merpan^{®} 80 WDG or Merpan^{®} 480 SC) and/or folpet (folpan 80 WDG^{®} or Stavento^{®}). The compositions are diluted with water.

Treatments:
Captan 500, 750, 1000, 1200, 1500 gr (A.I.)/ha
Folpet 500, 750, 1000, 1200, 1500 gr (A.I.)/ha

To test for fungicidal control of Sclerotinia sp., Sclerotinia sclerotiorum, the plants are sprayed with each of the above treatments. Each of the above treatments are applied in preventative conditions. The treatments are composed of 4 replicates. The experimental design is a randomized complete block design. Statistically significant differences are assessed with ANOVA followed by Student-Newman-Keuls test with an alpha level of 0.05. Where two means share the same alphabetical notation, they are not significantly different.

Evaluations are performed for the whole duration of the experiment. At each time, 25 leaves per plot are examined for symptoms incidence and severity on leaves is determined. Results are presented as the percentage of control based on severity rating with a maximum of 100%.

Results show that phthalimide controls the disease.

### EXAMPLE 24

An experiment is conducted to evaluate the fungicidal activity of the phthalimide group fungicides (captan, folpet) toward Phakopsora pachyrhizi in soybean.

The experiment is conducted by applying compositions of captan (Merpan^{®} 80 WDG or Merpan^{®} 480 SC) and/or folpet (folpan 80 WDG^{®} or Stavento^{®}). The compositions are diluted with water.

Treatments:
Captan 500, 750, 1000, 1200, 1500 gr (A.I.)/ha
Folpet 500, 750, 1000, 1200, 1500 gr (A.I.)/ha

To test for fungicidal control of Phakopsora pachyrhizi, the plants are sprayed with each of the above treatments. Each of the above treatments are applied in preventative conditions. The treatments are composed of 4 replicates. The experimental design is a randomized complete block design. Statistically significant differences are assessed with ANOVA followed by Student-Newman-Keuls test with an alpha level of 0.05. Where two means share the same alphabetical notation, they are not significantly different.

Evaluations are performed for the whole duration of the experiment. At each time, 25 leaves per plot are examined for symptoms incidence and severity on leaves is determined. Results are presented as the percentage of control based on severity rating with a maximum of 100%.

Results show that phthalimide controls the disease.

The present invention is further defined by the following items:
1. A method of treating crop (A) or a locus against fungal pathogen (I) infection comprising applying an amount of a phthalimide fungicide to the crop or locus so as to thereby treat the crop or locus against the fungal pathogen infection, wherein crop (A) is selected from the group consisting of sugar beet, olive, apple, citrus, cherry, banana, mango, papaya, pitaya, avocado, dragon fruit, guava, longan, litchi, durian, passion fruit, rambutan, mangosteen, cocoa, chili, onion, corn, sugarcane, sorghum, coffee, cotton, rice, pulses, chickpea, pea, broad bean, fava bean, oil seed rape (OSR), soybean, and any combination thereof, and fungal pathogen (I) is selected from the group consisting of Cercospora beticola, Cercospora sojina, Cercospora kikuchii. Ramularia beticola, Venturia oleagina, Colletotrichum gloeosporioides, Colletotrichum sp., Colletotrichum truncatum, Pseudocercospora musae, Mycosphaerella fijiensis, Cercospora zeae-maydis, Setosphaeria turcica, Cochliobolus heterostrophus, Cochliobolus carbonum, Ustilago maydis, Phialophora gregata, Gibberella zeae, Ustilago scitaminea, Helminthosporium sacchari, Puccinia sorghi, Hemileia vastatrix, Gibberella xylarioides, Septoria glycines, Phakopsora gossypii, Phakopsora pachyrhizi, Phlyctema vagabunda, Puccinia schedonnardi, Puccinia cacabata, Corynespora cassiicola, Ascochyta gossypiicola, Glomerella gossypii, Rhizoctonia solani, Pyricularia oryzae, Cochliobolus miyabeanus, Ascochyta rabiei, Ascochyta pisi, Ascochyta fabae, Cercospora zonata, Uromyces vicia-fabae, Peronospora viciae, Botrytis cinerea, Fusarium sp., Fusarium virguliforme, Sclerotinia sp., Sclerotinia sclerotiorum, Phytophthora sp., Venturia inaequalis, Mycosphaerella fijiensis and any combination thereof.
2. The method of item 1, wherein the method is effective for combatting disease caused by the fungal pathogen (I) on the crop (A).
3. The method of item 2, wherein the disease is selected from the group consisting of cercospora leaf spot, leaf spot of beet, Ramularia Leaf Spot, peacock spot of olive, olive anthracnose, leprosy of olive or leaf and shoot lesions of olive, apple scab, yellow sigatoka of banana, black sigatoka of banana, black leaf streak disease of banana, rust of cotton, blight of chickpea, blight of pea, blight of broad bean, ascochyta blight in peas lentils or fava beans, downy mildew of legumes, peas etc., sclerotinia stem rot or white mold of oilseed rape, Asian soybean rust, cotton rust of cotton, sudden death syndrome, frogeye leaf spot, black spot of apple, white mold, brown stem rot, brown spot of soybean, purple blotch of soybean, soybean anthracnose, target spot on soybean, and any combination thereof.
4. The method of any one of items 1-3, wherein the phthalimide fungicide is applied in the form of solid particulates.
5. The method of any one of items 1-4, wherein the phthalimide fungicide is applied in the form of solid particulates suspended in an aqueous carrier.
6. The method of item 4 or 5, wherein the method is effective for treating the crop against fungal pathogen infection without causing significant and/or measurable concomitant phytotoxic harm to the crop.
7. The method of any one of items 1-6, wherein the phthalimide fungicide is applied at a rate from 0.1 g a.i./ha to 10000 g a.i./ha.
8. The method of any one of items 1-7, wherein the phthalimide fungicide is applied at a rate from 500 to 1500 g a.i./ha.
9. The method of any one of items 1-8, wherein the phthalimide fungicide is applied as soil application, foliar application or seed treatment.
10. The method of any one of items 1-9, wherein the phthalimide fungicide is selected from the group consisting of captan, folpet, captafol and any combination thereof.
11. The method of any one of items 1-10, wherein the phthalimide fungicide is captan.
12. The method of any one of items 1-11, wherein the phthalimide fungicide is folpet.
13. The method of any one of items 1-12, wherein the phthalimide fungicide is captafol.
14. The method of any one of items 1-13, wherein:
   1) fungal pathogen (I) is Pseudocercospora musae and crop (A) is banana,
   2) fungal pathogen (I) is Mycosphaerella fijiensis and crop (A) is banana,
   3) fungal pathogen (I) is Cercospora zeae-maydis and crop (A) is corn,
   4) fungal pathogen (I) is Setosphaeria turcica and crop (A) is corn,
   5) fungal pathogen (I) is Cochliobolus heterostrophus and crop (A) is corn,
   6) fungal pathogen (I) is Cochliobolus carbonum and crop (A) is corn,
   7) fungal pathogen (I) is Ustilago maydis and crop (A) is corn,
   8) fungal pathogen (I) is Gibberella zeae and crop (A) is corn,
   9) fungal pathogen (I) is Ustilago scitaminea and crop (A) is sugarcane,
   10) fungal pathogen (I) is Helminthosporium sacchari and crop (A) is sugarcane,
   11) fungal pathogen (I) is Puccinia sorghi and crop (A) is sorghum,
   12) fungal pathogen (I) is Hemileia vastatrix and crop (A) is coffee,
   13) fungal pathogen (I) is Gibberella xylarioides and crop (A) is coffee,
   14) fungal pathogen (I) is Phakopsora gossypii and crop (A) is cotton,
   15) fungal pathogen (I) is Puccinia schedonnardi and crop (A) is cotton,
   16) fungal pathogen (I) is Puccinia cacabata and crop (A) is cotton,
   17) fungal pathogen (I) is Ascochyta gossypiicola and crop (A) is cotton,
   18) fungal pathogen (I) is Glomerella gossypii and crop (A) is cotton,
   19) fungal pathogen (I) is Rhizoctonia solani and crop (A) is rice,
   20) fungal pathogen (I) is Pyricularia oryzae and crop (A) is rice,
   21) fungal pathogen (I) is Cochliobolus miyabeanus and crop (A) is rice,
   22) fungal pathogen (I) is Ascochyta rabiei and crop (A) is pulses,
   23) fungal pathogen (I) is Ascochyta pisi and crop (A) is pulses,
   24) fungal pathogen (I) is Ascochyta fabae and crop (A) is pulses,
   25) fungal pathogen (I) is Cercospora zonata in pulses,
   26) fungal pathogen (I) is Uromyces vicia-fabae and crop (A) is pulses,
   27) fungal pathogen (I) is Peronospora viciae and crop (A) is pulses,
   28) fungal pathogen (I) is Botrytis cinerea and crop (A) is pulses and OSR,
   29) fungal pathogen (I) is Fusarium sp. and crop (A) is corn,
   30) fungal pathogen (I) is Fusarium sp. and crop (A) is rice,
   31) fungal pathogen (I) is Fusarium sp. and crop (A) is sugarcane,
   32) fungal pathogen (I) is Fusarium sp. and crop (A) is sorghum,
   33) fungal pathogen (I) is Fusarium sp. and crop (A) is banana,
   34) fungal pathogen (I) is Fusarium sp. and crop (A) is cotton,
   35) fungal pathogen (I) is Fusarium sp. and crop (A) is coffee,
   36) fungal pathogen (I) is Fusarium sp. and crop (A) is pulses,
   37) fungal pathogen (I) is Sclerotinia sp. and crop (A) is OSR,
   38) fungal pathogen (I) is Sclerotinia sp. and crop (A) is pulses,
   39) fungal pathogen (I) is Phytophthora sp. and crop (A) is cocoa,
   40) fungal pathogen (I) is Cercospora beticola and crop (A) is sugar beet,
   41) fungal pathogen (I) is Cercospora sojina and crop (A) is sugar beet,
   42) fungal pathogen (I) is Cercospora kikuchii and crop (A) is sugar beet,
   43) fungal pathogen (I) is Ramularia beticola and crop (A) is sugar beet,
   44) fungal pathogen (I) is Colletotrichum gloeosporioides and crop (A) is apple.
   45) fungal pathogen (I) is Colletotrichum sp. and crop (A) is apple,
   46) fungal pathogen (I) is Colletotrichum gloeosporioides and crop (A) is olive,
   47) fungal pathogen (I) is Colletotrichum sp. and crop (A) is olive,
   48) fungal pathogen (I) is Venturia oleagina and crop (A) is olive,
   49) fungal pathogen (I) is Phlyctema vagabunda and crop (A) is olive,
   50) fungal pathogen (I) is Colletotrichum gloeosporioides and crop (A) is citrus,
   51) fungal pathogen (I) is Colletotrichum sp. and crop (A) is citrus,
   52) fungal pathogen (I) is Colletotrichum gloeosporioides and crop (A) is cherry,
   53) fungal pathogen (I) is Colletotrichum sp. and crop (A) is cherry,
   54) fungal pathogen (I) is Colletotrichum gloeosporioides and crop (A) is banana,
   55) fungal pathogen (I) is Colletotrichum sp. and crop (A) is banana,
   56) fungal pathogen (I) is Colletotrichum gloeosporioides and crop (A) is papaya,
   57) fungal pathogen (I) is Colletotrichum sp. and crop (A) is papaya,
   58) fungal pathogen (I) is Colletotrichum gloeosporioides and crop (A) is pitaya,
   59) fungal pathogen (I) is Colletotrichum sp. and crop (A) is pitaya,
   60) fungal pathogen (I) is Colletotrichum gloeosporioides and crop (A) is mango,
   61) fungal pathogen (I) is Colletotrichum sp. and crop (A) is mango,
   62) fungal pathogen (I) is Colletotrichum gloeosporioides and crop (A) is avocado,
   63) fungal pathogen (I) is Colletotrichum sp. and crop (A) is avocado,
   64) fungal pathogen (I) is Colletotrichum gloeosporioides and crop (A) is dragon fruit,
   65) fungal pathogen (I) is Colletotrichum sp. and crop (A) is dragon fruit,
   66) fungal pathogen (I) is Colletotrichum gloeosporioides and crop (A) is guava,
   67) fungal pathogen (I) is Colletotrichum sp. and crop (A) is guava,
   68) fungal pathogen (I) is Colletotrichum gloeosporioides and crop (A) is longan,
   69) fungal pathogen (I) is Colletotrichum sp. and crop (A) is longan,
   70) fungal pathogen (I) is Colletotrichum gloeosporioides and crop (A) is litchi,
   71) fungal pathogen (I) is Colletotrichum sp. and crop (A) is litchi,
   72) fungal pathogen (I) is Colletotrichum gloeosporioides and crop (A) is durian,
   73) fungal pathogen (I) is Colletotrichum sp. and crop (A) is durian,
   74) fungal pathogen (I) is Colletotrichum gloeosporioides and crop (A) is passion fruit,
   75) fungal pathogen (I) is Colletotrichum sp. and crop (A) is passion fruit,
   76) fungal pathogen (I) is Colletotrichum gloeosporioides and crop (A) is rambutan,
   77) fungal pathogen (I) is Colletotrichum sp. and crop (A) is rambutan,
   78) fungal pathogen (I) is Colletotrichum gloeosporioides and crop (A) is mangosteen,
   79) fungal pathogen (I) is Colletotrichum sp. and crop (A) is mangosteen,
   80) fungal pathogen (I) is Colletotrichum gloeosporioides and crop (A) is cocoa,
   81) fungal pathogen (I) is Colletotrichum sp. and crop (A) is cocoa,
   82) fungal pathogen (I) is Colletotrichum gloeosporioides and crop (A) is chili,
   83) fungal pathogen (I) is Colletotrichum sp. and crop (A) is chili,
   84) fungal pathogen (I) is Colletotrichum gloeosporioides and crop (A) is onion,
   85) fungal pathogen (I) is Colletotrichum sp. and crop (A) is onion,
   86) fungal pathogen (I) is Venturia inaequalis and crop (A) is apple,
   87) fungal pathogen (I) is Phakopsora pachyrhizi and crop (A) is soybean,
   88) fungal pathogen (I) is Fusarium virguliforme and crop (A) is soybean,
   89) fungal pathogen (I) is Cercospora sojina and crop (A) is soybean,
   90) fungal pathogen (I) is Sclerotinia sclerotiorum and crop (A) is soybean,
   91) fungal pathogen (I) is Phialophora gregata and crop (A) is soybean,
   92) fungal pathogen (I) is Septoria glycines and crop (A) is soybean,
   93) fungal pathogen (I) is Cercospora kikuchii and crop (A) is soybean,
   94) fungal pathogen (I) is Colletotrichum truncatum and crop (A) is soybean, or
   95) fungal pathogen (I) is Corynespora cassiicola and crop (A) is soybean.
15. The method of any one of items 1-14, wherein the crop is banana and the method is effective for (i) increasing the number of leaves of the banana crop, (ii) improving the greenness of leaves of the banana crop, (iii) improving efficiency of photosynthesis of the banana crop, (iv) improving health of the banana crop, and/or (v) improving yield of the banana crop, compared to a banana crop affected by fungal pathogen infection which (a) has not been treated with fungicide(s), (b) has been treated with fungicide(s) other than a phthalimide fungicide, (c) has been treated with fungicide(s) other than folpet, or (d) which has been treated with mancozeb.
16. The method of any one of items 1-15, wherein the crop is banana and the method results in a greening effect in the banana crop.
17. The method of any one of items 1-14, wherein the crop is apple and the method is effective for (i) increasing the number of leaves of the apple crop, (ii) improving the greenness of leaves of the apple crop, (iii) improving efficiency of photosynthesis of the apple crop, (iv) improving health of the apple crop, and/or (v) improving yield of the apple crop, compared to a apple crop affected by fungal pathogen infection which (a) has not been treated with fungicide(s), (b) has been treated with fungicide(s) other than a phthalimide fungicide, (c) has been treated with fungicide(s) other than folpet, or (d) which has been treated with mancozeb.
18. The method of any one of items 1-14 and 17, wherein the crop is apple and the method results in a greening effect in the apple crop.
19. A method for (i) increasing the number of leaves of the banana crop affected by fungal pathogen infection, (ii) improving the greenness of leaves of the banana crop affected by fungal pathogen infection, (iii) improving efficiency of photosynthesis of the banana crop affected by fungal pathogen infection, (iv) improving health of the banana crop affected by fungal pathogen infection, and/or (v) improving yield of the banana crop affected by fungal pathogen infection, compared to a banana crop affected by fungal pathogen infection which (a) has not been treated with fungicide(s), (b) has been treated with fungicide(s) other than a phthalimide fungicide, (c) has been treated with fungicide(s) other than folpet, or (d) which has been treated with mancozeb, wherein the method comprises applying an amount of phthalimide fungicide to the crop.
20. The method of item 19, wherein the phthalimide fungicide is applied in the form of solid particles.
21. The method of item 19 or 20, wherein the phthalimide fungicide is applied in the form of solid particles suspended in an aqueous carrier.
22. The method of any one of items 19-21, wherein the phthalimide fungicide is folpet.
23. A method for (i) increasing the number of leaves of the apple crop affected by fungal pathogen infection, (ii) improving the greenness of leaves of the apple crop affected by fungal pathogen infection, (iii) improving efficiency of photosynthesis of the apple crop affected by fungal pathogen infection, (iv) improving health of the apple crop affected by fungal pathogen infection, and/or (v) improving yield of the apple crop affected by fungal pathogen infection, compared to a apple crop affected by fungal pathogen infection which (a) has not been treated with fungicide(s), (b) has been treated with fungicide(s) other than a phthalimide fungicide, (c) has been treated with fungicide(s) other than folpet, or (d) which has been treated with mancozeb, wherein the method comprises applying an amount of phthalimide fungicide to the crop.
24. The method of item 23, wherein the phthalimide fungicide is applied in the form of solid particles.
25. The method of item 23 or 24, wherein the phthalimide fungicide is applied in the form of solid particles suspended in an aqueous carrier.
26. The method of any one of items 23-25, wherein the phthalimide fungicide is folpet.
27. A composition comprising phthalimide fungicide for treating a crop (A) or a locus thereof, against fungal pathogen (I) infection, wherein crop (A) is selected from the group consisting of sugar beet, olive, apple, citrus, cherry, banana, mango, papaya, pitaya, avocado, dragon fruit, guava, longan, litchi, durian, passion fruit, rambutan, mangosteen, cocoa, chili, onion, corn, sugarcane, sorghum, coffee, cotton, rice, pulses, chickpea, pea, broad bean, fava bean, oil seed rape (OSR), soybean, and any combination thereof, and fungal pathogen (I) is selected from the group consisting of Cercospora beticola, Cercospora sojina, Cercospora kikuchii. Ramularia beticola, Venturia oleagina, Colletotrichum gloeosporioides, Colletotrichum sp., Colletotrichum truncatum, Pseudocercospora musae, Mycosphaerella fijiensis, Cercospora zeae-maydis, Setosphaeria turcica, Cochliobolus heterostrophus, Cochliobolus carbonum, Ustilago maydis, Phialophora gregata, Gibberella zeae, Ustilago scitaminea, Helminthosporium sacchari, Puccinia sorghi, Hemileia vastatrix, Gibberella xylarioides, Septoria glycines, Phakopsora gossypii, Phakopsora pachyrhizi, Phlyctema vagabunda, Puccinia schedonnardi, Puccinia cacabata, Corynespora cassiicola, Ascochyta gossypiicola, Glomerella gossypii, Rhizoctonia solani, Pyricularia oryzae, Cochliobolus miyabeanus, Ascochyta rabiei, Ascochyta pisi, Ascochyta fabae, Cercospora zonata, Uromyces vicia-fabae, Peronospora viciae, Botrytis cinerea, Fusarium sp., Fusarium virguliforme, Sclerotinia sp., Sclerotinia sclerotiorum, Phytophthora sp., Venturia inaequalis, Mycosphaerella fijiensis and any combination thereof.
28. The composition of item 27 for combatting disease caused by the fungal pathogen (I) on the crop (A).
29. The composition of item 28, wherein the disease is selected from the group consisting of cercospora leaf spot, leaf spot of beet, Ramularia Leaf Spot, peacock spot of olive, olive anthracnose, leprosy of olive or leaf and shoot lesions of olive, apple scab, yellow sigatoka of banana, black sigatoka of banana, black leaf streak disease of banana, rust of cotton, blight of chickpea, blight of pea, blight of broad bean, ascochyta blight in peas lentils or fava beans, downy mildew of legumes, peas etc., sclerotinia stem rot or white mold of oilseed rape, Asian soybean rust, cotton rust of cotton, sudden death syndrome, frogeye leaf spot, black spot of apple, white mold, brown stem rot, brown spot of soybean, purple blotch of soybean, soybean anthracnose, target spot on soybean, and any combination thereof.
30. The composition of any one of items 27-29, wherein the amount of the phthalimide fungicide(s) in the composition is from about 0.5% to about 95% by weight based on the total weight of the composition.
31. The composition of any one of items 27-30, wherein the composition comprises at least one agriculturally acceptable carrier.
32. The composition of any one of item 27-31, wherein the composition comprises at least one agriculturally acceptable additive selected from the group consisting of surfactants, adjuvants, and any combination thereof.
33. The composition of any one of items 27-32, wherein the composition comprises phthalimide fungicide in the form of solid particulates.
34. The composition of item 33, wherein the solid particulates of phthalimide fungicide is suspended in an aqueous carrier.
35. A crop-safe composition comprising a phthalimide fungicide in the form of solid particulates for treating crop (A) or locus thereof, against fungal pathogen (I) infection, wherein crop (A) is selected from the group consisting of sugar beet, olive, apple, citrus, cherry, banana, mango, papaya, pitaya, avocado, dragon fruit, guava, longan, litchi, durian, passion fruit, rambutan, mangosteen, cocoa, chili, onion, corn, sugarcane, sorghum, coffee, cotton, rice, pulses, chickpea, pea, broad bean, fava bean, oil seed rape (OSR), soybean, and any combination thereof, and fungal pathogen (I) is selected from the group consisting of Cercospora beticola, Cercospora sojina, Cercospora kikuchii. Ramularia beticola, Venturia oleagina, Colletotrichum gloeosporioides, Colletotrichum sp., Colletotrichum truncatum, Pseudocercospora musae, Mycosphaerella fijiensis, Cercospora zeae-maydis, Setosphaeria turcica, Cochliobolus heterostrophus, Cochliobolus carbonum, Ustilago maydis, Phialophora gregata, Gibberella zeae, Ustilago scitaminea, Helminthosporium sacchari, Puccinia sorghi, Hemileia vastatrix, Gibberella xylarioides, Septoria glycines, Phakopsora gossypii, Phakopsora pachyrhizi, Phlyctema vagabunda, Puccinia schedonnardi, Puccinia cacabata, Corynespora cassiicola, Ascochyta gossypiicola, Glomerella gossypii, Rhizoctonia solani, Pyricularia oryzae, Cochliobolus miyabeanus, Ascochyta rabiei, Ascochyta pisi, Ascochyta fabae, Cercospora zonata, Uromyces vicia-fabae, Peronospora viciae, Botrytis cinerea, Fusarium sp., Fusarium virguliforme, Sclerotinia sp., Sclerotinia sclerotiorum, Phytophthora sp., Venturia inaequalis, Mycosphaerella fijiensis and any combination thereof.
36. The composition of item 35, wherein the composition effectively treats a crop against fungal pathogen infection without causing measurable and/or significant phytotoxic harm to the crop.
37. Use of a phthalimide fungicide for treating crop (A) or a locus thereof against fungal pathogen (I) infection, wherein crop (A) is selected from the group consisting of sugar beet, olive, apple, citrus, cherry, banana, mango, papaya, pitaya, avocado, dragon fruit, guava, longan, litchi, durian, passion fruit, rambutan, mangosteen, cocoa, chili, onion, corn, sugarcane, sorghum, coffee, cotton, rice, pulses, chickpea, pea, broad bean, fava bean, oil seed rape (OSR), soybean, and any combination thereof, and fungal pathogen (I) is selected from the group consisting of Cercospora beticola, Cercospora sojina, Cercospora kikuchii. Ramularia beticola, Venturia oleagina, Colletotrichum gloeosporioides, Colletotrichum sp., Colletotrichum truncatum, Pseudocercospora musae, Mycosphaerella fijiensis, Cercospora zeae-maydis, Setosphaeria turcica, Cochliobolus heterostrophus, Cochliobolus carbonum, Ustilago maydis, Phialophora gregata, Gibberella zeae, Ustilago scitaminea, Helminthosporium sacchari, Puccinia sorghi, Hemileia vastatrix, Gibberella xylarioides, Septoria glycines, Phakopsora gossypii, Phakopsora pachyrhizi, Phlyctema vagabunda, Puccinia schedonnardi, Puccinia cacabata, Corynespora cassiicola, Ascochyta gossypiicola, Glomerella gossypii, Rhizoctonia solani, Pyricularia oryzae, Cochliobolus miyabeanus, Ascochyta rabiei, Ascochyta pisi, Ascochyta fabae, Cercospora zonata, Uromyces vicia-fabae, Peronospora viciae, Botrytis cinerea, Fusarium sp., Fusarium virguliforme, Sclerotinia sp., Sclerotinia sclerotiorum, Phytophthora sp., Venturia inaequalis, Mycosphaerella fijiensis and any combination thereof.
38. Use of a phthalimide fungicide in the form of solid particulates for treating fungal pathogen infection on crops selected from the group consisting of sugar beet, olive, apple, citrus, cherry, banana, mango, papaya, pitaya, avocado, dragon fruit, guava, longan, litchi, durian, passion fruit, rambutan, mangosteen, cocoa, chili, onion, corn, sugarcane, sorghum, coffee, cotton, rice, pulses, chickpea, pea, broad bean, fava bean, oil seed rape (OSR), soybean, and any combination thereof, without causing significant and/or measurable phototoxic harm to the crops.

## Claims

1. A method of treating crop (A) or a locus against fungal pathogen (I) infection comprising applying an amount of a phthalimide active fungicide to the crop or locus so as to thereby treat the crop or locus against the fungal pathogen infection, wherein crop (A) is selected from the group consisting of olive, apple and banana, and any combination thereof, and fungal pathogen (I) is selected from the group consisting of *Venturia oleagina, Colletotrichum gloeosporioides, Colletotrichum sp., Pseudocercospora musae, Mycosphaerella fijiensis,* and *Phlyctema vagabunda,* and any combination thereof, wherein the phthalimide fungicide is selected from captan or folpet or a combination thereof and is applied at a rate from 0.1 g a.i. /ha to 1500 g a.i./ha as diluted application form of a formulation containing from 0.01 to 20% by weight, preferably, from 0.01% to 5% by weight of active fungicide.

2. The method of claim 1, wherein the diluted application form of formulation contains from 0.01% to 5% by weight of active fungicide, and
a. the crop is olive, and wherein the fungal pathogen is selected from the group consisting of *Colletotrichum gloeosporioides, Colletotrichum sp., Venturia oleagina* and *Phlyctema vagabunda,* or
b. the crop is olive, and wherein the fungal pathogen is *Venturia oleagina,* or
c. the crop is olive, the fungal pathogen is *Venturia oleagina,* which is *Spilocea oleaginea,*
the phthalimide fungicide is captan or folpet and wherein the phthalimide fungicide is applied as diluted application form of formulation containing 23.91g a.i./hL; 33.47g a.i./hL; 46.86g a.i./hL; 65.6 g a.i./hL; 91.84g a.i./hL; 128.57 g a.i./hL; 180g a.i./hL; 252g a.i./hL; 352g a.i./hL; or 493.92g a.i./hL of active fungicide, or
d. the crop is olive, and wherein the fungal pathogen is *Phlyctema vagabunda,* and
i. the phthalimide fungicide is applied at a rate from 0.1 g a.i./ha to 500 g a.i./ha, and/or
ii. the phthalimide fungicide is phthalimide group fungicide (folpet), which is applied at a rate of 375 g a.i. /ha, or
e. the crop is apple, and wherein the fungal pathogen is *Phlyctema vagabunda* wherein,
i. the phthalimide fungicide is applied at a rate from 0.1 g a.i./ha to 500 g a.i./ha, and/or
ii. wherein the phthalimide fungicide is phthalimide group fungicide (folpet) which is applied at a rate of 375 g a.i. /ha.

3. A method of treating crop (A) or a locus against fungal pathogen (I) infection comprising applying an amount of a phthalimide fungicide to the crop or locus so as to thereby treat the crop or locus against the fungal pathogen infection, wherein crop (A) is banana, and fungal pathogen (I) is selected from the group consisting of *Pseudocercospora musae; Mycosphaerella fijiensis; Fusarium sp.; Colletotrichum gloeosporioides,* and *Colletotrichum sp..* and any combination thereof, wherein the phthalimide fungicide is selected from captan or folpet or a combination thereof and is applied at a rate from 0.1 g a.i. /ha tp 1500 g a.i./ha wherein,
a. the fungal pathogen is *Mycosphaerella fijiensis,* wherein the phthalimide fungicide is applied at a rate from 500 to 1500 g a.i./ha,
b. the fungal pathogen is *Mycosphaerella fijiensis* which is black sigatoka, the phthalimide fungicide is folpet, the banana is variety Williams, and the folpet is applied at rates of 500, 625, 750 or 875 g a.i./ha,
c. the fungal pathogen is *Pseudocercospora musae,* wherein the phthalimide fungicide is applied at a rate from 500 to 1500 g a.i./ha at a water rate of 300 L/ha such that each 300L applied contains 1000 grams active.

4. A method of safely treating a crop or locus against fungal pathogen infection comprising applying an amount of a solid particulate phthalimide fungicide to the crop or locus so as to thereby treat the crop or locus against fungal infection without significant or measurable concomitant phytotoxic harm to the crop, wherein, the crop is an olive crop, an apple crop, or banana crop wherein the the fungal pathogen is *Colletotrichum gloeosporioides, Colletotrichum sp., Venturia inaequalis, Venturia oleagina, Phlyctema vagabunda, Mycosphaerella fijiensis,* or *Fusarium sp.* and wherein the method comprises application such that the solid particulate phthalimide fungicide is applied as an aqueous suspension composition, application form comprising solid particulate phthalimide fungicide for safely combating diseases caused by fungal pathogen in crops, at a rate of:
a) 60±10% g a.i./ha to 600±10% g a.i./ha,
b) 700±10% to 800±10% g a.i./ha
c) from 400 to 1500 g/ha, wherein the rate is 400g a.i./ha,
d) between 450 to 550g a.i /ha
e) 500±10% g a.i /ha,
f) 625±10% g a.i./ha, or
g) 600±10% g a.i./ha,
wherein, "without significant phytotoxic harm", is that the application of the method has no adverse crop safety findings by applying solid particulate forms of phthalimide fungicide selected from folpet, captan or a combination thereof.

5. The method of claim 4, wherein, the solid particulate phthalimide fungicide composition is a concentrate form of composition containing, between, about 2% and about 80%, or between about 5% and 70% by weight of active fungicide, diluted before application to an application form, wherein the application form is prepared from emulsion concentrate, suspension, paste, wettable powders or water-dispersible granules (WG), by adding water so as to contain from 0.01% to 20% by weight, or from 0.01% to 5% by weight of active fungicide in the application form.

6. The method of either claim 4 or of claim 5, wherein, the method is a fungicidal activity method of the phthalimide group fungicides (folpet and captan) toward *Venturia oleagina* (*Spilocea oleagina*) fungal pathogen in olive leaves, wherein the method is conducted by applying compositions of captan containing 800g/kg or 480g/kg of captan and folpet, containing 800 g/kg of folpet as an application form to olive leaves wherein, the application form comprises the compositions diluted to a captan or folpet aqueous suspension composition application form selected from,
a) 23.91g a.i./hL (0. 24g/L);
b) 33.47g a.i./hL (0.35g a.i./L),;
c) 46.86g a.i./hL (0.47g/L);
d) 65.6 g a.i./hL (0.66g a.i./L);
e) 91.84g a.i./hL (0.92g/L);
f) 128.57 g a.i./hL (1.29g a.i./L);
g) 180g a.i./hL (1.8g/L);
h) 252 g a.i./hL (2.52g a.i./L);
i) 352g a.i./hL (3.52g/L); and
j) 493.92g a.i./hL (4.94g a.i./L).

7. The method of either claim 4 or of claim 5, wherein, the method is a fungicidal activity method of the phthalimide group fungicide (folpet) toward the fungal pathogen *Phlyctema vagabunda,* the agent of the disease leprosy of the olive tree caused by fungal pathogen, wherein the method is conducted by applying compositions of folpet WG 800g/Kg on apple crops or olive crops wherein, the method comprises the application form comprising the composition, diluted to contain 47g/hL, 94g/hL, or 188g/hL of the 800g/Kg product applied by spraying to apple plants or olive plants at a rate of 375g active/ha or 750g active/ha.

8. The method of either claim 4 or of claim 5, wherein the crop is banana, or banana, variety Willliams, the method is fungicidal activity of the phthalimide group fungicide (folpet) toward the fungal pathogen *Mycosphaerella fijiensis,* and the disease caused by fungal pathogen is black sigatoka, wherein the method is conducted by,
a) applying compositions of folpet SC 500g/L on banana, variety Willliams crops against *Mycosphaerella fijiensis,* wherein, the method comprises spray application with a volume of water equivalent to 80L/ha, once when plants are showing a disease infection of 5%,
of an application form comprising the folpet SC 500g/L composition, such that,
500g a.i./ha, 625g a.i./ha, 750 g a.i./ha, or 875g a.i./ha is applied, or
b) applying compositions of folpet SC 500g/L on banana crops and *Musa textilis* against *Mycosphaerella fijiensis,* wherein the method comprises 12 spray applications with a volume of water equivalent to 23L/ha, of an application form comprising the folpet SC 500g/L composition in a water solution with no mineral oil added, every 6 days for a total of 12 applications, such that 850g a.i./ha is applied.

9. A method wherein the method is a fungicidal activity method of the phthalimide group fungicide toward the fungal pathogen *Phlyctema vagabunda,* wherein the method is conducted by applying compositions of water-dispersible granules (WG) 800g a.i./Kg on apple crops or olive crops wherein, the method comprises the application form comprising the composition, diluted to contain 47g/hL, 94g/hL, or 188g/hL of the 800g/Kg product applied by spraying to apple or olive plants at a rate of 375 grams active/ha, or 750 grams active/ha.
